# EUROPEAN PATENT APPLICATION

(11) **EP 4 807 410 A1**
(43) Date of publication of application: **16.09.2026**
(21) Application number: 24907574.8
(22) Date of filing: 23.12.2024
(51) Int. Cl.: G02B 5/30, G02B 27/01, G02F 1/1335

(54) **WIRE GRID POLARIZING ELEMENT, METHOD FOR MANUFACTURING WIRE GRID POLARIZING ELEMENT, PROJECTION DISPLAY DEVICE, AND VEHICLE**

(30) Priority: 22.12.2023 JP 2023216488
(71) Applicant: Dexerials Corporation, Shimotsuke-shi, Tochigi 323-0194 (JP)
(72) Inventor: SASAKI, Izumi, Shimotsuke-shi, Tochigi 323-0194 (JP); SASAKI, Koji, Shimotsuke-shi, Tochigi 323-0194 (JP); NAKANISHI, Daichi, Shimotsuke-shi, Tochigi 323-0194 (JP); NAKAZAWA, Yutaka, Shimotsuke-shi, Tochigi 323-0194 (JP)
(74) Representative: Müller-Boré & Partner Patentanwälte PartG mbB
(86) International application number: PCT/JP2024/045527
(87) International publication number: WO 2025/135192

(57) **Abstract**

A wire grid polarizing element 1 includes a substrate 10, a grid structural body 20 in which a base part 21 and a plurality of ridge portions 22 are integrally formed, a functional film 30 covering part of each of the ridge portions 22, and a reinforcement film 51. The reinforcement film 51 is made of an inorganic oxide and interposed between part of the ridge portion 33 covered with the functional film 30 and the functional film 30. The reinforcement film 51 reinforces the ridge portion 22. The reinforcement film 51 covers and wraps at least a leading end 22a and an upper side of both side surfaces 22b of the ridge portion 22. The functional film 30 covers and wraps top of the ridge portion 22 with the reinforcement film 51 in between, and does not cover a bottom side of the ridge portion 22 and the base part 21. A coverage rate (Rc) thereof is more than or equal to 30% and less than or equal to 70%.

## Description

### Technical Field

The present invention relates to a wire grid polarizing element, a method for manufacturing the wire grid polarizing element, a projection display device, and a vehicle.

This application claims the benefit of priority based on Japanese Patent Application No. 2023-216488 filed on December 22, 2023 and Japanese Patent Application No. 2024-225992 filed on December 23, 2024, the contents of which are incorporated herein.

### Background Art

A wire grid polarizing element is used, for example, as a polarizing beam splitter of a head-up display device for a vehicle. The head-up display device is installed on the dashboard in the vehicle. In a case where the head-up display device is used under a high-temperature environment such as the summer, the head-up display device is required to have high heat tolerance and heat dissipation. Therefore, the wire grid polarizing element mounted on the head-up display device is also required to have excellent heat tolerance and heat dissipation.

For example, Patent Literature 1 discloses that a substrate of a wire grid polarizing element is formed of a transparent inorganic material (for example, glass) to improve the heat tolerance and the heat dissipation of the wire grid polarizing element and a grid structural body provided on the substrate is integrally formed of a transparent organic material (for example, resin). In the grid structural body, a base part provided on the substrate and a plurality of ridge portions protruding from the base part are integrally formed. The leading end part of each of the ridge portions is covered with a functional film made of a metal material such as Al to provide a reflective function for incident light. In addition, Patent Literature 1 discloses that the ridge portion has a height H of 160 nm or more to offer various favorable optical properties (transmission axis transmittance (Tp) properties, Tp × Rs properties, and contrast) required of the wire grid polarizing element.

### Citation List

### Patent Literature

| | |
|---|---|
| Patent Literature 1: | JP 2023-095826A |
| Patent Literature 2: | JP 2014-085516A |

### Summary of Invention

### Technical Problem

The ridge portion of the grid structural body described in Patent Literature 1 above is, however, formed of an organic material such as resin lower in rigidity and heat tolerance than an inorganic material such as glass and has an upward narrowing shape that narrows toward the leading end thereof. When a high-temperature functional film is formed by a deposition method such as a sputtering method or an vapor deposition method to cover the leading end part of the ridge portion, the height H of the ridge portion increased as described in Patent Literature 1 above thus causes the ridge portion made of an organic material to fail to maintain the upward narrowing shape that extends straight upward and be inclined to the left or right in some cases. When the ridge portion is inclined due to the deposition of the functional film that covers the ridge portion in this manner, a problem arises that the various optical properties (for example, the Tp properties, the Tp × Rs properties, and the contrast) required of the wire grid polarizing element decrease.

Accordingly, the present invention has been devised in view of the above-described problem. An object of the present invention is to provide a wire grid polarizing element, a method for manufacturing a wire grid polarizing element, a projection display device, and a vehicle that each can restrain a ridge portion of a grid structural body from being inclined due to the deposition of a functional film and improve an optical property.

### Solution to Problem

The inventors of the present invention have obtained the following knowledge as a result of enthusiastic studies for solving the above-described problems. First, a substrate of a wire grid polarizing element is formed of a transparent inorganic material, and a grid structural body provided on the substrate is integrally formed of a transparent organic material. This can provide the wire grid polarizing element with a hybrid-type structure made of the organic material and the inorganic material. As a result, heat dissipation of the wire grid polarizing element can be improved considerably.

Further, as the above-described grid structural body, a grid structural body in which a base part provided along a surface of the substrate and a plurality of ridge portions protruding from the base part are integrally formed is used. The grid structural body can thereby be formed by a technology such as nano-imprinting. Thus, the grid structural body can be reduced in manufacturing cost as compared with the case of using a photolithography technology or an etching technology, and can also be mass-produced.

Further, when providing a reflection film that reflects light or a functional film such as an absorbing film that absorbs light on ridge portions of the grid structural body, a covered range and a covered form of the ridge portion by the functional film are suitably adjusted. In other words, the leading end and the upper side of one of or both side surfaces of the ridge portion are covered by the functional film in an enfolding manner, and on the other hand, the lower side of the side surfaces of the ridge portion and a surface of the base part are open without being covered by the functional film. Then, the functional film covers and wraps the leading end and the upper side of the side surfaces of the ridge portion in such a rounded shape that bulges in a width direction of the ridge portion. Further, the ridge portion and the functional film are adjusted in shape and size such that a maximum width (m_{MAX}) of a grid portion combining the ridge portion and the functional film covering and wrapping the ridge portion is more than or equal to a bottom _{B}) of the ridge portion. Further, the range of the side surfaces of the ridge portion covered by the functional film preferably is limited to a specific range on the upper side of the side surfaces (for example, a range of more than or equal to 25% and less than or equal to 80% of a height (H) of the ridge portion).

This can restrain the transmittance (Tp) for the second polarized light (p-polarized light) in the wire grid polarizing element from decreasing depending on the incident angles even in a case where oblique incident light at large and wide-range incident angles is incident on the wire grid polarizing element. Consequently, the product (Tp × Rs) of the reflection axis reflectance (Rs) for the first polarized light (s-polarized light) and the transmission axis transmittance (Tp) for the second polarized light (p-polarized light) in the wire grid polarizing element can be maintained at a high value. Thus, in the case of using the wire grid polarizing element as a polarizing beam splitter, for example, sufficient transmissivity and polarization splitting properties can also be obtained for oblique incident light at large and wide-range incident angles.

The inventors of the present invention have yielded the following invention based on the above-described knowledge.

In order to solve the above-described problems, according to an aspect of the present invention, there is provided a wire grid polarizing element including:
a substrate made of an inorganic material;
a grid structural body made of an organic material and including a base part provided on the substrate and a plurality of ridge portions protruding from the base part, the base part and the ridge portions being integrally formed;
a functional film made of a metal material and covering part of each of the ridge portions; and
a reinforcement film made of an inorganic oxide and interposed between part of the ridge portion covered with the functional film and the functional film, the reinforcement film reinforcing the ridge portion.

The ridge portions each have an upward narrowing shape that narrows in width with distance from the base part.

The reinforcement film covers and wraps at least a leading end and an upper side of at least one of side surfaces of the ridge portion.

The functional film covers and wraps a leading end and an upper side of both side surfaces of each of the ridge portions with the reinforcement film in between, and does not cover a lower side of both the side surfaces of each of the ridge portions and the base part.

When a coverage rate (Rc) of the side surfaces of each of the ridge portions obtained by the functional film is a proportion of a height (Hx) of a portion of the side surfaces of each of the ridge portions that is covered by the functional film to a height (H) of the ridge portions, the coverage rate (Rc) is more than or equal to 30% and less than or equal to 70%.

The reinforcement film may have a thickness of 0.5 nm or more and 8 nm or less.

The wire grid polarizing element may further include a protection film that covers surfaces of the grid structural body and the functional film.

The protection film continuously may cover the surface of the functional film, the lower side of both the side surfaces of each of the ridge portions, and a surface of the base part.

Expression (10) below may be satisfied: $Bt / Tt \geq 0.85$ where Tt is a thickness of the protection film that covers a top of the functional film that covers and wraps each of the ridge portions, and Bt is a thickness of the protection film that covers the lower side of both the side surfaces of each of the ridge portions and the surface of the base part.

Expression (11) below may be satisfied: $0.85 \leq Bt / Tt \leq 1.07$

Expression (12) below may be satisfied: $1.00 < Bt / Tt \leq 1.07$

The protection film may have a single-layer structure made of SiO₂.

The protection film may have a laminate structure including a first covering layer made of Al₂O₃ and a second covering layer made of SiO₂.

The base part may have a thickness (TB) of less than or equal to 0.15 mm.

The base part may have a thickness (TB) of less than or equal to 0.09 mm.

The base part may have a thickness (TB) of less than or equal to 0.045 mm.

The base part may have a thickness (TB) of less than or equal to 0.02 mm.

The wire grid polarizing element may be a wire grid polarizing element of a hybrid type in which the substrate made of the inorganic material and the grid structural body made of the organic material are combined.

A surface of the functional film covering and wrapping each of the ridge portions may be rounded and bulge in a width direction of the ridge portions.

A maximum width (W_{MAX}) of the functional film covering and wrapping each of the ridge portions may be more than or equal to a width (W_{B}) of a portion of each of the ridge portions, the portion being not covered by the functional film at a position of 20% of a height of each of the ridge portions upward from a bottom of each of the ridge portions.

A sectional shape of an entire protruding structural body composed of each of the ridge portions and the functional film may have a constricted portion at a position immediately under a lower end of the functional film covering and wrapping each of the ridge portions, the constricted portion having a narrow width in a width direction of the entire protruding structural body.

A product (Tp × Rs) of transmission axis transmittance (Tp) and reflection axis reflectance (Rs) for incident light at an incident angle of 45° with respect to the wire grid polarizing element may be more than or equal to 70%.

The height (H) of each of the ridge portions may be more than or equal to 160 nm.

The functional film covering the leading end of each of the ridge portions may have a thickness (Dt) of more than or equal to 5 nm.

The functional film covering the side surfaces of each of the ridge portions may have a thickness (Ds) of more than or equal to 10 nm and less than or equal to 30 nm.

The thickness (TB) of the base part may be more than or equal to 1 nm.

A sectional shape of each of the ridge portions in a section orthogonal to a reflection axis direction of the wire grid polarizing element may be a trapezoidal shape, a triangular shape, a hanging bell shape, or an elliptical shape that narrows in width with distance from the base part.

The protection film may include a water-repellent coating or an oleophobic coating.

The functional film may further have a dielectric film.

**In** a case where θ is more than or equal to 30° and less than or equal to 60°, a difference between transmission axis transmittance (Tp (+)) for incident light at an incident angle of +θ with respect to the wire grid polarizing element and transmission axis transmittance (Tp (-)) for incident light at an incident angle of -θ may be within 3%.

The functional film may be a reflection film configured to reflect incident light.

The wire grid polarizing element may be a polarizing beam splitter configured to split oblique incident light into first polarized light and second polarized light.

In order to solve the above-described problems, according to another aspect of the present invention, there is provided a method for manufacturing the wire grid polarizing element, including the steps of:
forming a grid structural body material made of the organic material on the substrate made of the inorganic material;
subjecting the grid structural body material to nano-imprinting to form the grid structural body including the base part provided on the substrate and the plurality of ridge portions protruding from the base part, the base part and the ridge portions being integrally formed;
forming a reinforcement film using an inorganic oxide, the reinforcement film covering at least part of each of the ridge portions; and
forming a functional film using a metal material, the functional film covering the part of the ridge portion with the reinforcement film in between.

In the step of forming the grid structural body, the ridge portions each having the upward narrowing shape that narrows in width with distance from the base part are formed.

In the step of forming the functional film, the reinforcement film covers and wraps at least a leading end and an upper side of both side surfaces of the ridge portion, the functional film covers and wraps the leading end and the upper side of both the side surfaces of the ridge portion with the reinforcement film in between, and does not cover the lower side of both the side surfaces of each of the ridge portions and the base part, and when the coverage rate (Rc) of the side surfaces of each of the ridge portions obtained by the functional film is the proportion of the height (Hx) of the portion of the side surfaces of each of the ridge portions that is covered by the functional film to the height (H) of the ridge portions, the coverage rate (Rc) is more than or equal to 30% and less than or equal to 70%.

In the step of forming the reinforcement film, the reinforcement film may be deposited by a vapor deposition method such that the reinforcement film covers and wraps the leading end and the upper side of both the side surfaces of the ridge portion.

In the step of forming the reinforcement film, the reinforcement film may be deposited by an ALD method such that the reinforcement film continuously covers the leading end and both the side surfaces of the ridge portion and a surface of the base part.

The method for manufacturing the wire grid polarizing element may further include a step of depositing a protection film on surfaces of the grid structural body and the functional film.

In the step of depositing the protection film, the protection film may be deposited by an ALD method such that the protection film continuously covers the surface of the functional film, a lower side of both the side surfaces of the ridge portion, and a surface of the base part.

The step of depositing the protection film may include
a first step of introducing precursor gas into a chamber in which the grid structural body covered by the functional film is arranged,
a second step of introducing inert gas into the chamber to exhaust excess precursor gas to an outside of the chamber,
a third step of introducing oxidant gas into the chamber, and
a fourth step of introducing the inert gas into the chamber to exhaust excess oxidant gas to the outside of the chamber.

In the first step, the precursor gas may be introduced into and fill the chamber without the precursor gas being exhausted to the outside of the chamber.

In the third step, the oxidant gas may be introduced into and fill the chamber without the oxidant gas being exhausted to the outside of the chamber.

In the step of forming the functional film, deposition may be performed on the ridge portions alternately in a plurality of directions by a sputtering or vapor deposition method.

In order to solve the above-described problems, according to another aspect of the present invention, there is provided a projection display device including:
a light source;
a polarizing beam splitter arranged such that incident light from the light source is incident at an incident angle in a predetermined range including 45°, and configured to split the incident light into first polarized light and second polarized light;
a reflection-type liquid crystal display element arranged such that the first polarized light reflected by the polarizing beam splitter or the second polarized light transmitted through the polarizing beam splitter is incident, and configured to reflect and modulate the first polarized light or the second polarized light having been incident; and
a lens arranged such that the first polarized light or the second polarized light reflected and modulated by the reflection-type liquid crystal display element is incident through the polarizing beam splitter.

The polarizing beam splitter is implemented by the wire grid polarizing element.

The incident angle in the predetermined range may be more than or equal to 30° and less than or equal to 60°.

A heat dissipation member may be provided around the wire grid polarizing element.

In order to solve the above-described problems, according to another aspect of the present invention, there is provided a vehicle including the projection display device.

### Advantageous Effects of Invention

Accordingly, the present invention, it is possible to restrain a ridge portion of a grid structural body from being inclined due to the deposition of a functional film and improve an optical property.

### Brief Description of Drawings

[FIG. 1] FIG. 1 is a sectional view schematically showing a wire grid polarizing element according to a first embodiment of the present invention.
[FIG. 2] FIG. 2 is a plan view schematically showing the wire grid polarizing element according to the embodiment.
[FIG. 3] FIG. 3 is a sectional view schematically showing specific examples of an upward narrowing shape of ridge portions of a grid structural body according to the embodiment.
[FIG. 4] FIG. 4 is a sectional view schematically showing specific examples of a shape of concavities of the grid structural body according to the embodiment.
[FIG. 5] FIG. 5 is a sectional view schematically showing the wire grid polarizing element according to the embodiment.
[FIG. 6] FIG. 6 is a sectional view schematically showing specific examples of a shape of a reflection film according to the embodiment.
[FIG. 7] FIG. 7 is a sectional view schematically showing a polarizing element covered by a protection film according to the embodiment.
[FIG. 8] FIG. 8 is a sectional view schematically showing a modification of the polarizing element covered by the protection film according to the embodiment.
[FIG. 9] FIG. 9 is a perspective view schematically showing a polarizing element including a heat dissipation member according to the embodiment.
[FIG. 10] FIG. 10 is a photograph showing an actual grid structural body and an actual reflection film according to the embodiment.
[FIG. 11] FIG. 11 is a process diagram showing a method for manufacturing the wire grid polarizing element according to the embodiment.
[FIG. 12] FIG. 12 is a process diagram showing a method for manufacturing a conventional wire grid polarizing element.
[FIG. 13] FIG. 13 is a process diagram showing a method for manufacturing a master according to the embodiment.
[FIG. 14] FIG. 14 is a schematic diagram showing a head-up display device which is an example of a projection display device according to the embodiment.
[FIG. 15] FIG. 15 is a schematic diagram showing a first specific example of the projection display device according to the embodiment.
[FIG. 16] FIG. 16 is a schematic diagram showing a second specific example of the projection display device according to the embodiment.
[FIG. 17] FIG. 17 is a schematic diagram showing a third specific example of the projection display device according to the embodiment.
[FIG. 18] FIG. 18 is an enlarged sectional view schematically showing the wire grid polarizing element covered by the protection film according to the embodiment.
[FIG. 19] FIG. 19 is a schematic diagram showing a step of depositing the protection film by an ALD method according to the embodiment.
[FIG. 20] FIG. 20 includes graphs showing test results of heat tolerance according to Comparative Examples 51 and 52.
[FIG. 21] FIG. 21 includes graphs showing test results of heat tolerance according to Comparative Examples 53 and 54.
[FIG. 22] FIG. 22 includes graphs showing test results of heat tolerance according to Examples 51, 52, and 53.
[FIG. 23] FIG. 23 includes a graph showing a test result of light tolerance according to Comparative Example 52.
[FIG. 24] FIG. 24 includes graphs showing test results of light tolerance according to Examples 51, 52, and 53.
[FIG. 25] FIG. 25 is an enlarged sectional view showing a wire grid polarizing element including a reinforcement film that covers the entire grid structural body according to the embodiment.
[FIG. 26] FIG. 26 is an enlarged sectional view showing a wire grid polarizing element including a reinforcement film that covers part of a ridge portion of a grid structural body according to a modification example of the embodiment.
[FIG. 27] FIG. 27 is a schematic diagram showing a model in which a reflection film is alternately vapor-deposited on an upper part of the ridge portion from left and right.
[FIG. 28] FIG. 28 is a schematic diagram showing a result of simulation of a deformation behavior of the ridge portion using the model in FIG. 27.
[FIG. 29] FIG. 29 is a schematic diagram showing a result of simulation of a deformation behavior of the ridge portion narrowed when the reflection film is vapor-deposited.
[FIG. 30] FIG. 30 is an explanatory diagram showing a sectional shape of a wire grid polarizing element according to Example 60 and a result of a test of an optical property.
[FIG. 31] FIG. 31 is an explanatory diagram showing a sectional shape of a wire grid polarizing element according to Comparative Example 60 and a result of a test of an optical property.

### Description of Embodiments

Hereinafter, preferred embodiments of the present invention will be described in detail with reference to the appended drawings. Note that in the present specification and the drawings, structural elements that have substantially the same function and structure are denoted with the same reference numerals, and repeated description is omitted. Note that for convenience of description, the state of each member disclosed in the following drawings may be schematically represented in a scale and shape different from actual ones.

### <1. Overview of Wire Grid Polarizing Element>

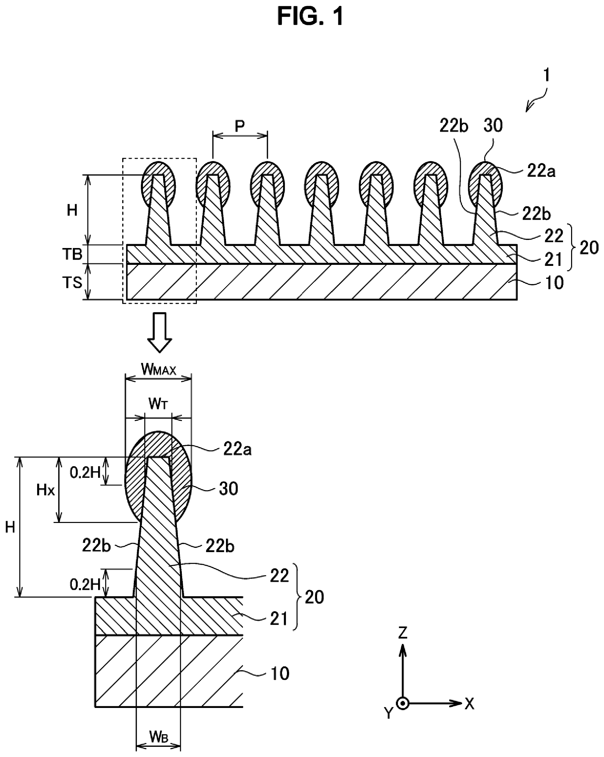

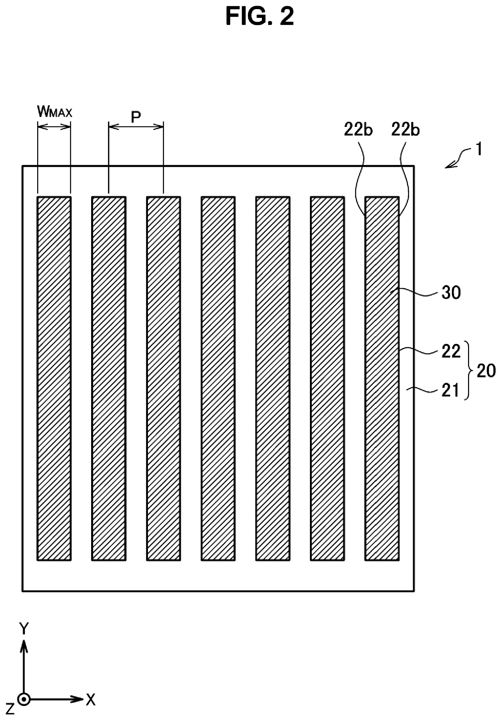

First, an overview of a wire grid polarizing element 1 according to a first embodiment of the present invention will be described with reference to FIG. 1 and FIG. 2, and the like. FIG. 1 is a sectional view schematically showing the wire grid polarizing element 1 according to the present embodiment. FIG. 2 is a plan view schematically showing the wire grid polarizing element 1 according to the present embodiment.

The wire grid polarizing element 1 according to the present embodiment is a polarizing element of a reflection type and is a polarizing element of a wire grid type. The wire grid polarizing element 1 may be a plate-shaped wire grid polarizing plate, for example. The wire grid polarizing plate is a polarizing plate of a wire grid type having a plate shape. The wire grid polarizing plate may be flat plate-shaped, or may be curved plate-shaped, for example. That is, a surface of the wire grid polarizing element 1 (a surface on which light is incident) may be a flat surface or may be curvilinear. Hereinafter, an example in which the wire grid polarizing element 1 according to the present embodiment is a flat plate-shaped wire grid polarizing plate will be described, whilst the wire grid polarizing element of the present invention is not limited to such an example, and can have any shape depending on its application, functions, and the like.

Note that the wire grid polarizing element of the present invention may be used as a polarizer that transmits only light that vibrates in a specific direction, or may be used as a polarizing beam splitter that splits incident light into first polarized light (s-polarized light) and second polarized light (p-polarized light), for example. Hereinafter, the example in which the wire grid polarizing element 1 according to the present embodiment is used as the polarizing beam splitter will be mainly described.

As shown in FIG. 1 and FIG. 2, the wire grid polarizing element 1 (hereinafter abbreviated to a "polarizing element 1" in some cases) includes a transparent substrate 10, a transparent grid structural body 20, and an opaque functional film (for example, a reflection film 30).

Note that "transparent" in the present specification means that light having a wavelength λ belonging to a used band (such as, for example, the band of visible light, the band of infrared light, or the band of visible light and infrared light) has high transmittance, and means that the transmittance for the light is more than or equal to 70%, for example. The wavelength band of visible light is more than or equal to 360 nm and less than or equal to 830 nm, for example. The wavelength band of infrared light (infrared rays) is larger than the wavelength band of visible light, and is more than or equal to 830 nm, for example. From the perspective of a suitable wavelength range of visible light to be projected as a displayed image, the wavelength λ in the used band in the polarizing element 1 according to the present embodiment preferably is more than or equal to 400 nm and less than or equal to 800 nm, for example, and more preferably is more than or equal to 420 nm and less than or equal to 680 nm. The polarizing element 1 according to the present embodiment is formed of a material transparent to light in the used band, so that the polarization properties, light transmissivity, and the like of the polarizing element 1 will not be affected adversely.

The substrate 10 is made of a transparent inorganic material such as glass. The substrate 10 is a flat plate-shaped substrate having a predetermined thickness TS.

The grid structural body 20 is made of a transparent organic material, for example, an organic resin material such as an ultraviolet curable resin or a thermosetting resin excellent in heat tolerance. The grid structural body 20 has a concave-convex structure for achieving the polarizing function of the polarizing element 1. Specifically, the grid structural body 20 has a base part 21 provided along a surface of the substrate 10, and a plurality of ridge portions 22 protruding from the base part 21 in a grid shape. The base part 21 and the plurality of ridge portions 22 of the grid structural body 20 are integrally formed using an identical organic material.

The base part 21 is a thin film having a predetermined thickness TB, and is stacked across the entire principal surface (an X-Y plane shown in FIG. 1 and FIG. 2) of the substrate 10. The thickness TB of the base part 21 preferably is a substantially identical thickness across the entire principal surface of the substrate 10, but may not be an exactly identical thickness, and may vary by a certain amount of error with respect to a reference thickness of TB. For example, TB may vary within approximately ±3 µm with respect to a reference thickness of 6 µm. In this manner, the thickness TB of the base part 21 is determined allowing a molding error when molding the base part 21 by imprinting or the like.

The plurality of ridge portions 22 are arrayed on the base part 21 at regular intervals at a predetermined pitch P in the X direction. Note that the pitch P is an interval at which the plurality of ridge portions 22 arrayed in the X direction of the polarizing element 1 are formed. The plurality of ridge portions 22 are arranged in a grid shape so as to extend in the Y direction in parallel to each other. A predetermined gap is formed between two of the ridge portions 22 adjacent to each other in the X direction. This gap serves as an approach route of incident light. Each of the ridge portions 22 is a wall-like convexity formed in a protruding manner so as to extend elongatedly in a predetermined direction (the Y direction shown in FIG. 1 and FIG. 2). The plurality of ridge portions 22 are substantially identical to each other in a height (H) in the Z direction and widths (W_{T}, W_{B}) in the X direction. The longitudinal direction (the Y direction) of the ridge portions 22 is the direction of a reflection axis of the polarizing element 1, and the width direction (the X direction) of the ridge portions 22 is the direction of a transmission axis of the polarizing element 1.

The functional film is a film for providing a predetermined function for the grid structural body 20 of the polarizing element 1. The functional film is made of an opaque metal material, for example, and is provided to cover part of the ridge portion 22 of the grid structural body 20. The functional film may be the reflection film 30 having a function of reflecting incident light incident on the polarizing element 1, or may be an absorbing film (not shown) having a function of absorbing the incident light, or may be a film having another function, for example. Although an example in which the functional film is the reflection film 30 will be described in the present embodiment, the functional film of the present invention is not limited to the example of the reflection film 30.

The reflection film 30 is a thin film made of a metal material (such as metal or metal oxide) of aluminum, silver, or the like, for example. The reflection film 30 is formed to cover at least the top of the ridge portion 22. The reflection film 30 may be implemented by a metal film that functions as a fine metal wire of the wire grid. The reflection film 30 has the function of reflecting incident light incident on the grid structural body 20.

The ridge portions 22 of the grid structural body 20 and the reflection film 30 constitute a grid of the wire grid polarizing element 1. The pitch P in the X direction of the plurality of ridge portions 22 in the grid structural body 20 (that is, an array pitch of the grid) is set at a pitch smaller than (for example, less than or equal to a half of) the wavelength λ of incident light (for example, visible light). This enables the polarizing element 1 to reflect most of light (s-polarized light) of an electric field vector component that vibrates in a direction (a reflection axis direction: the Y direction) parallel to the reflection film 30 (a conductive wire) extending in the Y direction, and to transmit most of light (p-polarized light) of an electric field vector component that vibrates in a direction (a transmission axis direction: the X direction) perpendicular to the reflection film 30 (the conductive wire).

As described above, the wire grid polarizing element 1 according to the present embodiment achieves the polarizing function by a combination of the grid structural body 20 having a micro concave-convex structure and the functional film (for example, the reflection film 30) selectively added to the ridge portions 22 of the grid structural body 20. The substrate 10 of the wire grid polarizing element 1 is made of an inorganic material very excellent in heat tolerance, such as glass, and the grid structural body 20 is made of an organic resin material having heat tolerance. In this manner, the wire grid polarizing element 1 according to the present embodiment is a polarizing element of a hybrid type in which the organic material and the inorganic material are combined. Consequently, heat can be efficiently released from the grid structural body 20 having a small thermal resistance R [m²•K/W] to the substrate 10, resulting in excellent heat dissipation. Consequently, the wire grid polarizing element 1 of the hybrid type according to the present embodiment is superior in heat tolerance and heat dissipation to conventional polarizing elements of a film type (heat tolerance: approximately 100°C) only made of an organic material, and has heat tolerance under a high-temperature environment up to approximately 200°C, for example. Thus, a favorable heat dissipation effect can be maintained while achieving excellent polarization properties.

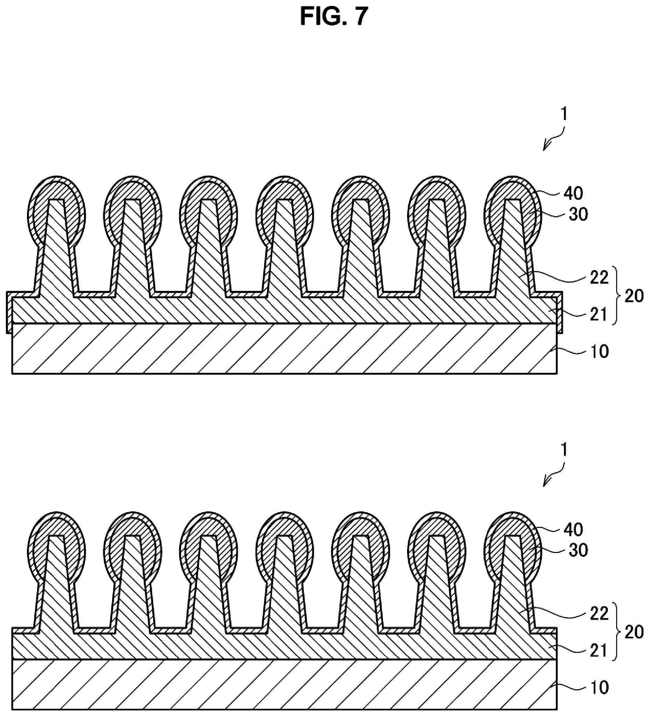

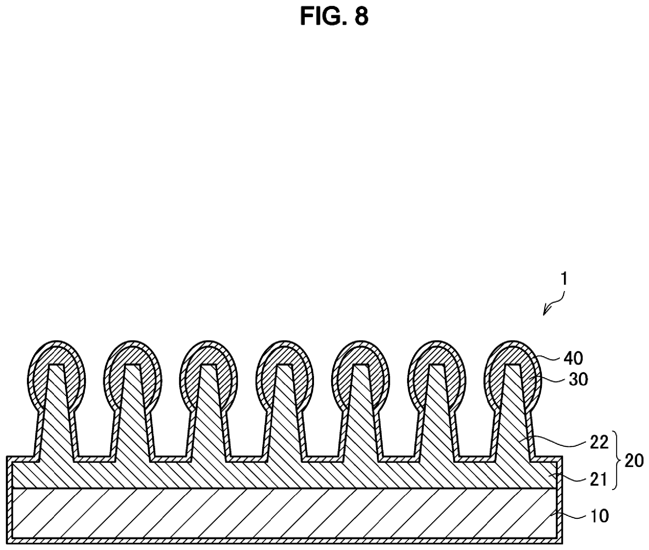

Further, the wire grid polarizing element 1 according to the present embodiment may include a protection film 40 (see FIG. 7 and FIG. 8) covering the surface of the grid structural body 20. The protection film 40 is made of an inorganic material, for example, a dielectric material such as SiO₂. This protection film 40 may be stacked on the entire surface of the wire grid polarizing element 1 so as to cover all the surfaces of the base part 21 and the ridge portions 22 of the grid structural body 20 as well as the reflection film 30 (see FIG. 7). By providing this protection film 40, an advantageous effect that the thermal resistance R of the polarizing element 1 can be reduced further is obtained. Thus, a more favorable heat dissipation effect can be maintained while achieving excellent polarization properties.

In addition, the micro concave-convex structure can be achieved by a simple manufacturing process because the grid structural body 20 in which the base part 21 and the ridge portions 22 are integrally configured can be manufactured using a printing technology such as nano-imprinting as described above. Consequently, cost and labor required for manufacturing the grid structural body 20 can be reduced as compared with the case of manufacturing the grid structural body 20 using the photolithography technology or etching technology. Thus, the polarizing element 1 of the hybrid type according to the present embodiment is advantageous in that the manufacturing cost can be reduced considerably and the product unit price of the wire grid polarizing element 1 can be made inexpensive as compared with conventional polarizing elements only made of an inorganic material.

On the other hand, the conventional organic polarizing plates of the film type use many organic materials, and a substrate (base film), a double-faced tape (OCA: optically clear adhesive), and the grid structural body have large thicknesses. Thus, it is considered that the conventional organic polarizing plates of the film type are inferior in heat dissipation and heat tolerance to the polarizing element 1 of the hybrid type according to the present embodiment.

In addition, in the wire grid polarizing element 1 according to the present embodiment, a grid portion composed of the ridge portion 22 of the grid structural body 20 and the reflection film 30 has a special tree shape (details of which will be described later) as shown in FIG. 1 and the like. This can restrain the transmittance (that is, transmission axis transmittance Tp) for the second polarized light (p-polarized light) transmitted through the polarizing element 1 from decreasing depending on the incident angle θ of oblique incident light even in the case where light is incident in an oblique direction on the polarizing element 1 at the wide-range and large incident angle θ (for example, 30 to 60°). Consequently, the product (Tp × Rs) of the reflectance for the first polarized light (s-polarized light) reflected by the wire grid polarizing element 1 (that is, the reflection axis reflectance Rs) and the transmission axis transmittance Tp can be maintained at a high value of more than or equal to 70%, for example. Consequently, the polarizing element 1 according to the present embodiment is excellent in polarization splitting properties expressed by the Tp × Rs, and can polarize the oblique incident light to be suitably split into the s-polarized light (reflected light) and the p-polarized light (transmitted light). Thus, the polarizing element 1 according to the present embodiment can obtain sufficient transmissivity and polarization splitting properties even for oblique incident light at the incident angle θ in the large and wide range.

As described above, the wire grid polarizing element 1 according to the present embodiment is excellent in heat tolerance and heat dissipation, can be reduced in manufacturing cost, and is also excellent in transmissivity and polarization splitting properties for oblique incident light at the wide-range and large incident angle θ. Thus, the wire grid polarizing element 1 according to the present embodiment can suitably be applied as various parts of various products. For example, the polarizing element 1 can be applied to a polarizing beam splitter installed in a smart display, and the like. The polarizing element 1 can also be applied to a polarizing element which is installed in a head-up display (HUD) and in which measures against solar light have been taken, a polarizing element in which measures against heat from an LED light source have been taken, a polarizing reflection mirror, and the like. Further, the polarizing element 1 can also be applied to a polarizing beam splitter installed in a headlight such as an adaptive driving beam (ADB), and the like. The polarizing element 1 can also be applied to a lens-integrated phase difference element, a lens-integrated polarizing element, and the like installed in various devices for augmented reality (AR) or virtual reality (VR).

### <2. Constituent Members of Wire Grid Polarizing Element>

Next, constituent members of the wire grid polarizing element 1 according to the present embodiment will be described in detail with reference to FIG. 1 and FIG. 2, and the like.

### <2.1. Substrate>

As shown in FIG. 1, the wire grid polarizing element 1 according to the present embodiment includes the transparent substrate 10. The substrate 10 is made of an inorganic material which is transparent and has a certain degree of strength.

From the perspective of obtaining more excellent heat dissipation and heat tolerance, the material of the substrate 10 preferably is an inorganic material such as various types of glass, quartz, crystal, or sapphire, for example, more preferably is an inorganic material having a thermal conductivity of more than or equal to 1.0 W/m•K, and further preferably is an inorganic material having a thermal conductivity of more than or equal to 8.0 W/m•K.

In addition, the shape of the substrate 10 is not particularly limited, and can be selected as appropriate in accordance with performance and the like required of the polarizing element 1. For example, the substrate 10 can be configured to have a plate shape or a curvilinear surface. In addition, from the perspective of not affecting the polarization properties of the polarizing element 1, the surface of the substrate 10 can be a flat surface. Further, the thickness TS of the substrate 10 is neither particularly limited, and can fall within a range of 0.02 to 10.0 mm, for example.

### <2.2. Grid Structural Body>

As shown in FIG. 1 and FIG. 2, the polarizing element 1 according to the present embodiment includes the grid structural body 20 having the base part 21 and the grid-shaped ridge portions 22 described above on the substrate 10. The grid structural body 20 can obtain desired polarization properties when the reflection film 30 which will be described later is provided on the ridge portions 22.

When light is incident on the polarizing element 1 from a surface side on which the grid structural body 20 is formed, part of the incident light is reflected by the reflection film 30. In the light incident on the reflection film 30, light having an electric field component in a direction (that is, the width direction of the ridge portions 22 = the transmission axis direction: the X direction) orthogonal to the longitudinal direction of the ridge portions 22 (that is, the direction in which the ridge portions 22 extend = the reflection axis direction: the Y direction) is transmitted through the polarizing element 1 at high transmittance. On the other hand, in the light incident on the reflection film 30, a large part of light having an electric field component in a direction parallel to the longitudinal direction of the ridge portions 22 (that is, the direction in which the ridge portions 22 extend = the reflection axis direction: the Y direction) is reflected by the reflection film 30. Thus, in the present embodiment, the polarizing element 1 can create single polarized light by including the grid structural body 20 partially covered by the reflection film 30. Note that a similar polarization effect can also be obtained for light incident from the rear surface side of the substrate 10.

The grid structural body 20 has the base part 21 as shown in FIG. 1. The base part 21 is a thin film provided along the surface of the substrate 10, and is a portion for supporting the ridge portions 22. In the case of forming the concave-convex structure (the ridge portions 22) of the grid structural body 20 by nano-imprinting or the like, the base part 21 is inevitably formed. The base part 21 and the ridge portions 22 are integrally formed of an identical material. In addition, because the grid structural body 20 has the base part 21, the ridge portions 22 can have higher strength than in a case of forming the ridge portions 22 directly on the substrate 10. This can increase durability of the grid structural body 20. Further, peel resistance of the grid structural body 20 can be increased because the base part 21 is in close contact with the substrate 10 by the entire surface.

Note that the thickness TB of the base part 21 is not particularly limited, and from the perspective in which the ridge portions 22 can be supported more reliably and from the perspective of easily performing imprinting molding, preferably is more than or equal to 1 nm, and more preferably is more than or equal to 10 nm. In addition, from the perspective of ensuring favorable heat dissipation, the thickness TB of the base part 21 preferably is less than or equal to 50 µm, and more preferably is less than or equal to 30 µm.

In addition, with the polarizing element 1 according to the present embodiment, the base part 21 and the plurality of ridge portions 22 of the grid structural body 20 are formed directly on the substrate 10, which can reduce the thickness TB of the base part 21. Herein, in order to improve heat dissipation from the grid structural body 20 to the substrate 10, a temperature difference ΔT [°C] between a front surface and a rear surface of the base part 21 preferably is made smaller by reducing the thickness TB of the base part 21. Note that the temperature difference ΔT is a temperature difference between a temperature T1 [°C] of the frontmost surface of the base part 21 (roots of the plurality of ridge portions 22) and a temperature T2 [°C] of the base part 21 at the interface between the base part 21 and the substrate 10 (ΔT = T1-T2).

Consequently, the thickness TB of the base part 21 preferably is less than or equal to 0.15 mm. This enables heat of the grid structural body 20 made of an organic material to be quickly conveyed to the substrate 10 made of an inorganic material and to be efficiently released from the substrate 10 to the outside of the polarizing element 1 to achieve heat dissipation. Thus, the temperature difference ΔT can be made less than or equal to 32°C, for example. Further, the thickness TB of the base part 21 more preferably is less than or equal to 0.09 mm. This enables the temperature difference ΔT to be made less than or equal to 20°C, for example. Further, the thickness TB of the base part 21 more preferably is less than or equal to 0.045 mm. This enables the temperature difference ΔT to be made less than or equal to 10°C, for example. Further, the thickness TB of the base part 21 particularly preferably is less than or equal to 0.02 mm. This enables the temperature difference ΔT to be made less than or equal to 5°C, for example. In this manner, heat dissipation from the grid structural body 20 to the outside via the substrate 10 can be improved by reducing the thickness TB of the base part 21. This can improve heat dissipation and heat tolerance of the polarizing element 1.

Further, the grid structural body 20 has the plurality of ridge portions 22 protruding from the base part 21 as shown in FIG. 1 and FIG. 2. The ridge portions 22 extend with their longitudinal direction being the reflection axis direction (the Y direction) of the polarizing element 1 according to the present embodiment. The grid-shaped concave-convex structure is formed by arraying the plurality of ridge portions 22 at a predetermined pitch in the X direction and away from each other at a predetermined interval.

Herein, as shown in FIG. 1, the pitch P of the ridge portions 22 in the transmission axis direction (the X direction) is required to be shorter than the wavelength of light in the used band in a vertical section (an X-Z section) orthogonal to the reflection axis direction (the Y direction) of the polarizing element 1. The reason for this is to obtain the polarizing effect described above. More specifically, from the perspective of achieving both ease of manufacturing of the ridge portions 22 and polarization properties, the pitch P of the ridge portions 22 preferably is 50 to 300 nm, more preferably is 100 to 200 nm, and particularly preferably is 100 to 150 nm.

In addition, as shown in FIG. 1 and FIG. 2, a bottom width W_{B} of the ridge portion 22 in the above-described vertical section (the X-Z section) is not particularly limited, and from the perspective of achieving both ease of manufacturing and polarization properties, preferably is approximately 10 to 150 nm, and more preferably is approximately 10 to 100 nm. In addition, a top width W_{T} of the ridge portion 22 is not particularly limited, and from the perspective of achieving both ease of manufacturing and polarization properties, preferably is approximately 5 to 60 nm, and more preferably is approximately 10 to 30 nm.

Note that the bottom width W_{B} and the top width W_{T} of the ridge portion 22 can be measured by observation with a scanning electron microscope or a transmission electron microscope. For example, the section (the X-Z section) orthogonal to an absorption axis direction or the reflection axis direction of the polarizing element 1 is observed using a scanning electron microscope or a transmission electron microscope. For the ridge portions 22 at any four places, the width of the ridge portion 22 at a height position of 20% of the height H of the ridge portion 22 upward from the bottom of the ridge portion 22 is measured, and their arithmetic mean value can be used as the bottom width W_{B} of the ridge portion 22. In addition, for the ridge portions 22 at any four places, the width of the ridge portion 22 at a height position of 20% of the height H of the ridge portion 22 downward from a leading end 22a of the ridge portion 22 is measured, and their arithmetic mean value can be used as the top width W_{T} of the ridge portion 22.

In addition, as shown in FIG. 1, the height H of the ridge portion 22 in the above-described vertical section (the X-Z section) is not particularly limited, and from the perspective of achieving both ease of manufacturing and polarization properties, preferably is approximately 50 to 350 nm, and more preferably is approximately 100 to 300 nm. Note that the height H of the ridge portion 22 can be measured by observation with a scanning electron microscope or a transmission electron microscope. For example, the section orthogonal to the absorption axis direction or the reflection axis direction of the polarizing element 1 is observed using a scanning electron microscope or a transmission electron microscope. For the ridge portions 22 at any four places, the height of the ridge portion 22 at a central position in the width direction of the ridge portion 22 is measured, and their arithmetic mean value can be used as the height H of the ridge portion 22.

The shape of the ridge portion 22 of the grid structural body 20 preferably is an upward narrowing shape in order to obtain favorable polarization splitting properties for oblique incident light. Herein, the upward narrowing shape is such a shape that the width W of the ridge portion 22 (the width in the X direction in the X-Z section) gradually narrows with distance from the base part 21, in other words, such a shape that the width W of the ridge portion 22 gradually narrows from the bottom to the top of the ridge portion 22. Consequently, in the case where the ridge portion 22 has the upward narrowing shape, the top width W_{T} of the ridge portion 22 is smaller than the bottom width W_{B} of the ridge portion 22 (W_{T} < W_{B}).

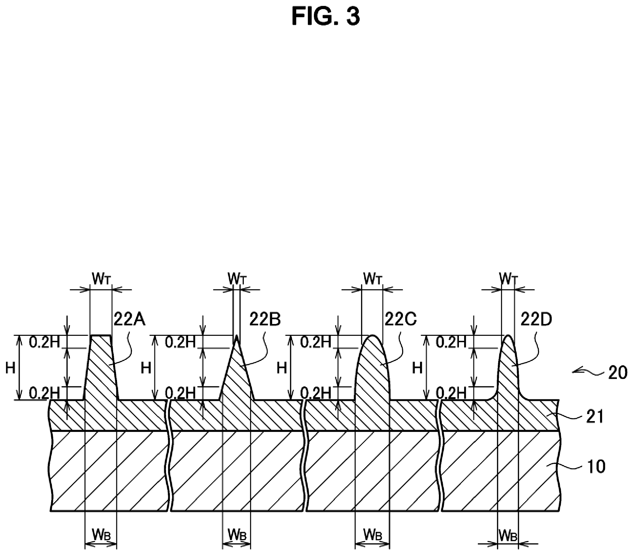

FIG. 3 shows specific examples of the upward narrowing shape of the ridge portion 22 according to the present embodiment. As shown in FIG. 3, the sectional shape of the ridge portion 22 in the above-described vertical section (the X-Z section) may be various shapes such as a trapezoidal shape, a triangular shape, a hanging bell shape, an elliptical shape, or a rounded wedge shape that narrow in the width W with distance from the base part 21 if they are upward narrowing shapes as described above. For example, the sectional shape of a ridge portion 22A shown in FIG. 3 is a trapezoidal shape (a tapered shape), the sectional shape of a ridge portion 22B is a triangular shape, the sectional shape of a ridge portion 22C is a hanging bell shape, and the sectional shape of a ridge portion 22D is a wedge shape having rounded top and bottom. In this manner, when the ridge portion 22 has the upward narrowing shape, the reflection film 30 covering the leading end 22a and part of side surfaces 22b of the ridge portion 22 is easy to form, and polarization properties can be provided for the polarizing element 1. The upward narrowing shape can also be formed by nano-imprinting, which is also advantageous in terms of ease of manufacturing.

In addition, when the ridge portion 22 has the upward narrowing shape such as a tapered shape, the refractive index of the grid structural body 20 gradually changes. Consequently, an effect of preventing reflection of incident light because of the physical change in refractive index of the grid structural body 20 is obtained similarly to a moth-eye structure. This also enables the effects that the reflectance at the surface of the ridge portion 22 of the grid structural body 20 can be reduced and the transmissivity of the grid structural body 20 can be improved to be expected.

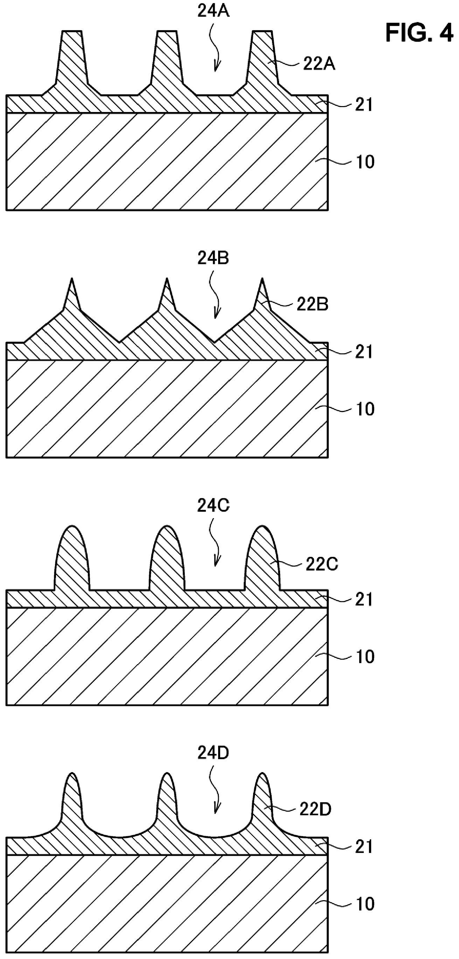

In addition, FIG. 4 shows specific examples of the shape of a concavity 24 formed between the ridge portions 22, 22 adjacent to each other. The concavity 24 is a groove extending in the longitudinal direction (the Y direction) of the ridge portions 22. As shown in FIG. 4, the sectional shape of the concavity 24 in the above-described vertical section (the X-Z section) may be various shapes that narrows in width toward the bottom of the concavity 24. For example, the sectional shape of a concavity 24A shown in FIG. 4 is a trapezoidal shape (a tapered shape), the sectional shape of a concavity 24B is a triangular shape (a V-shape), the sectional shape of a concavity 24C is a substantially rectangular shape with a flat bottom, and the sectional shape of a concavity 24D is a U-shape with a rounded bottom. An optimum shape can be selected as appropriate as the shape of these concavities 24 in consideration of productivity such as releasability when forming the concavities 24 by nano-imprinting.

In addition, the material constituting the grid structural body 20 is not particularly limited if it is a transparent organic material, and a publicly-known organic material can be used. For example, from the perspectives of ensuring transparency and excellent ease of manufacturing, various thermosetting resins, various ultraviolet curable resins, or the like preferably are used as the material of the grid structural body 20.

Further, from the perspectives of ease of manufacturing and manufacturing cost, a material different from the material of the substrate 10 preferably is used as the material constituting the grid structural body 20. In addition, in the case where the materials of the grid structural body 20 and the substrate 10 are different, their refractive indexes are different. Therefore, in a case where the refractive index of the entire polarizing element 1 is affected, a refractive index adjustment layer may be provided as appropriate between the grid structural body 20 and the substrate 10.

For example, as the material constituting the grid structural body 20, a curable resin such as a polymerizable epoxy compound or a polymerizable acrylic compound can be used. A polymerizable epoxy compound is a monomer, oligomer, or prepolymer having one or multiple epoxy groups in the molecule. Examples of polymerizable epoxy compounds include various bisphenol epoxy resins (such as bisphenol A and F), novolac epoxy resin, various modified epoxy resins such as rubber or urethane, naphthalene epoxy resin, biphenyl epoxy resin, phenol novolac epoxy resin, stilbene epoxy resin, triphenol methane epoxy resin, dicyclopentadiene epoxy resin, triphenyl methane epoxy resin, and prepolymers of the above.

A polymerizable acrylic compound is a monomer, oligomer, or prepolymer having one or multiple acrylic groups in the molecule. Herein, monomers are further classified into monofunctional monomers having one acrylic group in the molecule, bifunctional monomers having two acrylic groups in the molecule, and multifunctional monomers having three or more acrylic groups in the molecule.

Examples of "monofunctional monomers" include carboxylic acids (such as acrylic acids), hydroxy monomers (2-hydroxyethyl acrylate, 2-hydroxypropyl acrylate, 4-hydroxybutyl acrylate), alkyl or alicyclic monomers (isobutyl acrylate, t-butyl acrylate, isooctyl acrylate, lauryl acrylate, stearyl acrylate, isobornyl acrylate, cyclohexyl acrylate), other functional monomers (2-methoxyethyl acrylate, methoxyethylene glycol acrylate, 2-ethoxyethyl acrylate, tetrahydrofurfuryl acrylate, benzyl acrylate, ethyl carbitol acrylate, phenoxyethyl acrylate, N,N-dimethylamino ethyl acrylate, N,N-dimethylamino propyl acrylamide, N,N-dimethyl acrylamide, acryloyl morpholine, N-isopropyl acrylamide, N,N-diethyl acrylamide, 2-(perfluorooctyl)ethyl acrylate, 3-perfluorohexyl-2-hydroxypropyl acrylate, 3-perfluorooctyl-2-hydroxypropyl-acrylate, 2-(perfluorodecyl)ethyl-acrylate, 2-(perfluoro-3-methylbutyl)ethyl acrylate), 2,4,6-tribromophenol acrylate, 2,4,6-tribromophenol methacrylate, 2-(2,4,6-tribromophenoxy)ethyl acrylate), and 2-ethylhexyl acrylate.

Examples of "bifunctional monomers" include tri(propylene glycol) di-acrylate, trimethylolpropane-diaryl ether, and urethane diacrylate.

Examples of "multifunctional monomers" include trimethylolpropane tri-acrylate, dipentaerythritol penta- and hexa-acrylate, and ditrimethylolpropane tetra-acylate.

Examples other than the polymerizable acrylic compounds listed above include acrylmorpholine, glycerol acrylate, polyether acrylates, N-vinylformamide, N-vinylcaprolactam, ethoxy diethylene glycol acrylate, methoxy triethylene glycol acrylate, polyethylene glycol acrylate, ethoxylated trimethylolpropane tri-acrylate, ethoxylated bisphenol A di-acrylate, aliphatic urethane oligomers, and polyester oligomers.

In addition, examples of curing initiators for curable resins described above include thermal curing initiators and light curing initiators. A curing initiator may be cured with some energy beam (for example, an electron beam) or the like other than heat and light. In a case where the curing initiator is a thermal curing initiator, a curable resin is a thermosetting resin, and in a case where the curing initiator is a light curing initiator, a curable resin is a light curing resin.

Among them, an ultraviolet-curing initiator preferably is used as the curing initiator. The ultraviolet-curing initiator is a type of light curing initiators. Examples of ultraviolet-curing initiators include 2,2-dimethoxy-1,2-diphenylethane-1-one, 1-hydroxy-cyclohexyl phenyl ketone, and 2-hydroxy-2-methyl-1-phenyl propane-1-one. Consequently, the curable resin preferably is an ultraviolet curable resin. In addition, from the perspective of transparency, the curable resin more preferably is an ultraviolet curable acrylic resin.

Note that a method for forming the grid structural body 20 is not particularly limited if it is a method in which the base part 21 and the ridge portions 22 described above can be formed. For example, a concavity-convexity forming method by a technology such as photolithography or imprinting can be used. Among them, the base part 21 and the ridge portions 22 of the grid structural body 20 preferably are formed by imprinting from the perspective that a concave-convex pattern can be formed in a short time and easily, and further, the base part 21 can be formed reliably.

In the case of forming the base part 21 and the ridge portions 22 of the grid structural body 20 by nano-imprinting, the substrate 10 is coated with a material (a grid structural body material) for forming the grid structural body 20, then a master with concavities and convexities formed thereon is pressed against the grid structural body material, and ultraviolet rays are radiated or heat is applied in that state, so that the grid structural body material can be cured, for example. The grid structural body 20 having the base part 21 and the ridge portions 22 can thereby be formed.

### <2.3. Reflection Film (Functional Film)>

The polarizing element 1 according to the present embodiment includes the reflection film 30 formed on the ridge portions 22 of the grid structural body 20 as shown in FIG. 1 and FIG. 2.

As shown in FIG. 1, the reflection film 30 is formed to cover and wrap the leading end 22a and part of the side surfaces 22b of the ridge portion 22 of the grid structural body 20. Then, as shown in FIG. 1, the reflection film 30 is formed to extend in the longitudinal direction (the Y direction) of the ridge portions 22 of the grid structural body 20. This enables the reflection film 30 to reflect light having an electric field component in a direction (the reflection axis direction: the Y direction) parallel to the longitudinal direction of the ridge portions 22, in light incident on the polarizing element 1.

The material constituting the reflection film 30 is not particularly limited if it is a material having reflectiveness for light in the used band. Examples of the material include a single metal element such as Al, Ag, Cu, Mo, Cr, Ti, Ni, W, Fe, Si, Ge, or Te and a metal material such as an alloy containing one or more kinds of these elements.

Note that the reflection film 30 may be a single-layer film made of metal described above, or may be a multi-layer film made of a plurality of metal films. In addition, the reflection film 30 may include another layer such as a dielectric film according to necessity if it has the reflective function. The dielectric film is a thin film made of a dielectric. As the material of the dielectric film, a common material such as SiO₂, Al₂O₃, MgF₂, or TiO₂ can be used. In addition, the dielectric film preferably has a refractive index of more than 1.0 and less than or equal to 2.5. Note that because optical properties of the reflection film 30 are influenced by surrounding refractive indexes as well, polarization properties may be controlled by the material of the dielectric film.

### <2.4. Special Shape of Ridge Portion and Reflection Film>

Herein, the special shape of the ridge portion 22 of the grid structural body 20 and the reflection film 30 in the polarizing element 1 according to the present embodiment will be described in detail.

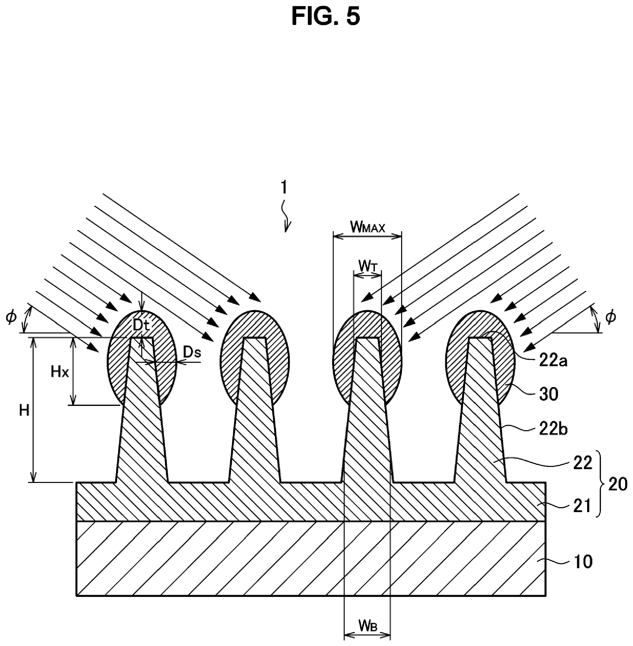

In the polarizing element 1 according to the present embodiment, the reflection film 30 is formed to cover and wrap the leading end 22a and the upper side of at least one of the side surfaces 22b of the ridge portion 22 of the grid structural body 20 and not to cover the lower side of both the side surfaces 22b of the ridge portion 22 and the base part 21, as shown in FIG. 1 and FIG. 5. Note that in the example shown in FIG. 1 and FIG. 5, the reflection film 30 covers the upper side of both the side surfaces 22b of the ridge portion 22, but may cover the upper side of only one of the side surfaces 22b of the ridge portion 22.

Herein, "the state in which the reflection film 30 covers and wraps the leading end 22a and the upper side of at least one of the side surfaces 22b of the ridge portion 22 of the grid structural body 20" is a state in which "the leading end 22a of the ridge portion 22" and "the upper side of the side surfaces 22b connecting the leading end 22a of the ridge portion 22 and the base part 21" are both continuously covered by the reflection film 30, and "the lower side of the side surfaces 22b" and "the base part 21" are exposed without being covered by the reflection film 30, as shown in FIG. 1 and FIG. 5, for example. In this state, the reflection film 30 does not cover the entirety of the side surfaces 22b of the ridge portion 22 (the entire side surfaces 22b from the leading end 22a of the ridge portion 22 to the base part 21).

Further, the surface of the reflection film 30 covering and wrapping the leading end 22a and the upper side of at least one of the side surfaces 22b of the ridge portion 22 (hereinafter referred to as "the top of the ridge portion 22" in some cases) has a rounded, curved shape (for example, a vertically long, substantially elliptical shape), and bulges in the width direction (the X direction) of the ridge portion 22. In this manner, the surface of the reflection film 30 has a rounded, smoothly curved curvilinear shape, and does not have any angulated corner portion or stepped portion. A maximum width W_{MAX} of the reflection film 30 covering and wrapping the top of the ridge portion 22 in this manner is more than or equal to the bottom width W_{B} of the ridge portion 22. Further, W_{MAX} preferably is larger than W_{B}.

Herein, the maximum width W_{MAX} of the reflection film 30 covering and wrapping the ridge portion 22 is a maximum horizontal width among horizontal widths of both-side outermost surfaces of the reflection film 30 in the width direction (the X direction) of the ridge portion 22. As shown in FIG. 1 and FIG. 5, and the like, the horizontal widths (the widths in the X direction) of the both-side outermost surfaces of the reflection film 30 covering and wrapping the ridge portion 22 vary depending on a height position (a height in the Z direction) of the reflection film 30, and the maximum value of these horizontal widths is the maximum width W_{MAX}. In other words, the maximum width W_{MAX} is a maximum value of the total width of thicknesses of the reflection film 30 on both the sides, Ds × 2, and the horizontal width W of the ridge portion 22. For example, in a case where light is incident on the grid structural body 20 in a front direction (the Z direction) (in a case where the incident angle θ = 0°), W_{MAX} is equivalent to an effective grid width of the reflection film 30.

The bottom width W_{B} of the ridge portion 22 is the horizontal width of the ridge portion 22 (the width in the X direction) at a height position (a height in the Z direction) of 20% of the height H of the ridge portion 22 upward from the lowermost part of the ridge portion 22 (the upper surface of the base part 21) as shown in FIG. 1 and FIG. 3. That is, the bottom width W_{B} of the ridge portion 22 is the horizontal width of the ridge portion 22 at a height position of 0.2 × H upward from the upper surface of the base part 21.

In addition, the top width W_{T} of the ridge portion 22 is a horizontal width of the ridge portion 22 (a width in the X direction) at a height position (a height in the Z direction) of 20% of the height H of the ridge portion 22 downward from the leading end 22a of the ridge portion 22 as shown in FIG. 1 and FIG. 3. That is, the top width W_{T} of the ridge portion 22 is a horizontal width of the ridge portion 22 at a height position of 0.8 × H upward from the upper surface of the base part 21 (that is, a height position of 0.2 × H downward from the leading end 22a of the ridge portion 22).

Note that in the following description, a protruding structural body combining the ridge portion 22 and the reflection film 30 is referred to as a "grid portion" and the height of the protruding structural body (that is, the grid portion) combining the ridge portion 22 and the reflection film 30 is referred to as a "grid height" in some cases. In addition, the maximum width W_{MAX} of the reflection film 30 covering and wrapping the ridge portion 22 is referred to as the "grid maximum width W_{MAX}" and the bottom width W_{B} of the ridge portion 22 is referred to as the "grid bottom width W_{B}" in some cases. In addition, the top width W_{T} of the ridge portion 22 is referred to as the "ridge portion top width W_{T}" and the width of the ridge portion 22 at the central position in the height direction is referred to as a "ridge portion central width" in some cases.

In this manner, in the present embodiment, the horizontal width of the ridge portion 22 at the height position of 20% upward from the lowermost part (bottom) of the ridge portion 22 is used as the bottom width W_{B} of the ridge portion 22, and the horizontal width of the ridge portion 22 at the height position of 20% downward from the leading end 22a of the ridge portion 22 is used as the top width W_{T} of the ridge portion 22. This is because the width of the lowermost part of the ridge portion 22 on the upper surface of the base part 21 and the width of the leading end 22a of the ridge portion 22 fluctuate significantly depending on manufacturing conditions of the grid structural body 20 and the like, and thus, these widths are difficult to measure precisely.

As described above, in the grid structural body 20 according to the present embodiment, the ridge portions 22 having the upward narrowing shape as well as the reflection film 30 covering and wrapping the leading end 22a and only the upper side of the side surfaces 22b of the ridge portion 22 are formed. Then, the lower side of the side surfaces 22b of the ridge portion 22 is open without being covered by the reflection film 30.

As a result, the sectional shape of the ridge portion 22 covered and wrapped by the curved reflection film 30 (that is, the sectional shape of the grid portion) has a special sectional shape as will be described below. In other words, as shown in FIG. 1 and FIG. 5, and the like, the horizontal width of a portion on the upper side of the ridge portion 22 where the reflection film 30 is present (for example, the grid maximum width W_{MAX}) is large, and the horizontal width of a portion ranging from an exposed central part of the ridge portion 22 not covered by the reflection film 30 toward the bottom side (for example, the bottom width W_{B} of the ridge portion 22 as exposed) is small. Then, the sectional shape of the entire protruding structural body (that is, the "grid portion") composed of the ridge portion 22 and the curved reflection film 30 has a constricted portion that constricts to the inner side and has a narrow width in the X direction at a position immediately under the curved lower end of the reflection film 30. Such a special sectional shape of the grid portion can be compared to a tree shape. Specifically, a leaf portion of a roundly and widely spreading tree is equivalent to a portion of the reflection film 30 that covers and wraps the top of the ridge portion 22. A trunk portion of the tree is equivalent to the lower side portion of the ridge portion 22 that is not covered by the reflection film 30. A ground portion where the tree grows is equivalent to the base part 21. Thus, in the following description, the special sectional shape of the grid portion composed of the ridge portion 22 of the grid structural body 20 and the reflection film 30 as described above will be referred to as a "special tree shape".

The grid portion of the grid structural body 20 of the polarizing element 1 according to the present embodiment has the special tree shape as described above. An effective grid width WA decreases and a gap width WG increases accordingly in a case where incident light is incident on the polarizing element 1 in an oblique direction, for example. Herein, the effective grid width W_{A} is the width of the reflection film 30 in a direction perpendicular to the oblique incident light. The gap width W_{G} is the width of a gap between the reflection films 30, 30 of mutually adjacent two grid portions, which is a gap in the direction perpendicular to the oblique incident light. As the effective grid width W_{A} is larger, the oblique incident light is more likely to be reflected by the reflection film 30 and less likely to reach the transparent ridge portions 22 and the base part 21. Consequently, the transmittance for the oblique incident light decreases in the polarizing element 1. On the other hand, as the gap width W_{G} is larger, the oblique incident light is more likely to pass through the gap between the mutually adjacent two reflection films 30, 30 to reach the transparent ridge portions 22 and the base part 21. Thus, the transmittance for the oblique incident light can be raised.

Hence, the gap width W_{G} for oblique incident light increases, and the oblique incident light is likely to pass through the gap between the rounded reflection films 30, 30 to reach the transparent grid structural body 20 to be transmitted because the grid portion of the polarizing element 1 according to the present embodiment has the above-described special tree shape. Consequently, the transmission axis transmittance Tp for oblique incident light is high, and thus, transmissivity for oblique incident light and the polarization splitting properties (Tp × Rs properties) are very excellent. Further, the reflective function for oblique incident light exerted by the reflection film 30 and the transmission function for oblique incident light exerted by the grid structural body 20 can be achieved in a balanced way, and the polarization splitting properties for oblique incident light can be improved further.

### <2.5. Method for Forming Reflection Film and Specific Examples>

Herein, a method for forming the reflection film 30 will be described with reference to FIG. 5.

As a method for forming the reflection film 30 such that the reflection film 30 covers the leading end 22a and part of both the side surfaces 22b of the ridge portion 22 of the grid structural body 20, the reflection film 30 preferably is formed by performing sputtering or vapor deposition alternately on the ridge portions 22 of the grid structural body 20 in an oblique direction (at a deposition incident angle ϕ) as shown in FIG. 5. This can form the reflection film 30 so as to cover and wrap the leading end 22a and the upper side of both the side surfaces 22b of the ridge portion 22. Note that the deposition incident angle ϕ for forming the reflection film 30 by sputtering or vapor deposition is not particularly limited, and can be set at approximately 5 to 70° with respect to the surface of the substrate 10, for example.

In this manner, in the present embodiment, the reflection film 30 made of a metal material is formed by a sputtering or vapor deposition method after the grid structural body 20 made of a transparent material is formed. This enables the deposition conditions, material, and film thickness of the reflection film 30 to be easily modified. In addition, the case where the reflection film 30 is made of a multi-layer film can also be easily dealt with. Therefore, a film design through use of an interference effect can be made by combining metal, semiconductor, and dielectric, and it is not necessary to consider a material constitution that can be etched and the like when forming the reflection film 30 by etching as in the conventional technology. This also facilitates adjusting the reflectance for a polarization wave parallel to the grid structural body 20 and adjusting the transmittance (a transmitted amount) for polarized light in the direction perpendicular to the grid. In addition, depositing the reflection film 30 after forming the grid structural body 20 eliminates the need for a facility such as a vacuum dry etching device or the like, and eliminates the need for preparing gas, a safety device such as a pretreatment device, and the like in conformity to a complicated process and an etching material. Thus, running cost for facility investment, maintenance, and the like can be saved, so that a cost advantage can also be obtained.

Note that a thickness Dt of the reflection film 30 covering the leading end 22a of the ridge portion 22 and a thickness Ds of the reflection film 30 covering the side surfaces 22b of the ridge portion 22 shown in FIG. 5 are not particularly limited, and can be modified as appropriate in accordance with the shape of the ridge portion 22 of the grid structural body 20, performance required of the reflection film 30, or the like. From the perspective of obtaining more excellent reflection performance, for example, the thicknesses Dt and Ds of the reflection film 30 preferably are set at 2 to 200 nm, more preferably are set at 5 to 150 nm, further preferably are set at 10 to 100 nm, and particularly preferably are set at 15 to 80 nm. Note that the thickness Ds of the reflection film 30 is the thickness of the thickest portion of the reflection film 30 covering the side surfaces 22b of the ridge portion 22 as shown in FIG. 5.

In addition, the shape of the reflection film 30 is not particularly limited if it is a shape that can form the special tree shape described above, and can be selected as appropriate in accordance with conditions of a device for forming the reflection film 30 or performance required of the reflection film 30.

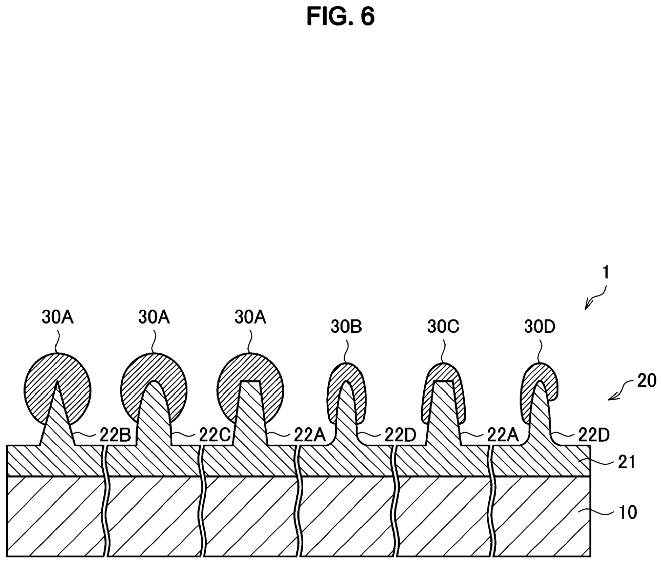

FIG. 6 is a sectional view schematically showing specific examples of the shape of the reflection film 30. As shown in FIG. 6, the reflection film 30 may have various shapes if they are curved shapes so as to enfold the top of the ridge portion 22 (the leading end 22a and the upper side of the side surfaces 22b).

For example, a reflection film 30A shown in FIG. 6 covers the tops of ridge portions 22A, 22B, and 22C having various sectional shapes in a roundly enfolding manner, and has a substantially elliptical shape greatly bulging in the width direction of the ridge portions 22. In addition, a reflection film 30B has a curved shape that covers the top of a substantially wedge-like ridge portion 22D in an enfolding manner. In addition, a reflection film 30C has a curved shape that covers the top of the trapezoidal ridge portion 22A in an enfolding manner. A coverage rate Rc of one of the side surfaces 22b of the ridge portion 22 and the coverage rate Rc of the other side surface 22b obtained by these reflection films 30B and 30C are substantially identical.

In addition, a reflection film 30D covers the top of the substantially wedge-like ridge portion 22D in an enfolding manner, but is unevenly located on the side of one of the side surfaces 22b (the left side surface 22b shown in FIG. 6) of the ridge portion 22. Specifically, the reflection film 30D covers a wide range of the left side surface 22b of the ridge portion 22, and the coverage rate Rc thereof is approximately 80%. On the other hand, the reflection film 30D only covers a narrow range on the upper side of the right side surface 22b, and the coverage rate Rc thereof is approximately 25%. In this manner, the coverage rate Rc obtained by the reflection film 30D may be different between one of the side surfaces 22b and the other side surface 22b of the ridge portion 22.

### <2.6. Suitable Range of Coverage Rate Rc of Ridge Portion Achieved by Reflection Film>

Next, a suitable range of the coverage rate Rc of the side surface 22b of the ridge portion 22 obtained by the reflection film 30 according to the present embodiment will be described.

The coverage rate Rc preferably is more than or equal to 25% and less than or equal to 80%. Herein, the coverage rate Rc is a proportion of a height (Hx) of a portion of the side surfaces 22b of the ridge portion 22 covered by the reflection film 30 to the height (H) of the ridge portion 22 shown in FIG. 1 and FIG. 5. The coverage rate Rc is expressed by Equation (1) below.
$Rc \left[%\right] = \left(Hx/H\right) \times 100$
H: height in the Z direction of the ridge portion 22
Hx: height in the Z direction of the portion of the side surfaces 22b of the ridge portion 22 covered by the reflection film 30

In addition, an open rate Rr is a proportion of a height (H-Hx) of a portion of the side surfaces 22b of the ridge portion 22 that is not covered by the reflection film 30 to the height (H) of the ridge portion 22 shown in FIG. 1 and FIG. 5. The open rate Rr is expressed by Equation (2) below.
$Rr \left[%\right] = \left(\left(H-Hx\right)/H\right) \times 100$

From the above definitions, Rr = 100-Rc holds. Thus, in the case where the coverage rate Rc of the side surfaces 22b of the ridge portion 22 obtained by the reflection film 30 is more than or equal to 25% and less than or equal to 80%, the open rate Rr of the side surfaces 22b of the ridge portion 22 obtained by the reflection film 30 is more than or equal to 20% and less than or equal to 75%.

As described above, in the polarizing element 1 according to the present embodiment, the coverage rate Rc of the side surfaces 22b of the ridge portion 22 obtained by the reflection film 30 preferably is more than or equal to 25% and less than or equal to 80% (that is, the open rate Rr is more than or equal to 20% and less than or equal to 75%). In detail, in the present embodiment, the reflection film 30 is formed to cover the leading end 22a and the upper side of both the side surfaces 22b of the ridge portion 22 and not to cover but open the lower side of both the side surfaces 22b. Then, the coverage rate Rc preferably is more than or equal to 25% and less than or equal to 80%, more preferably is more than or equal to 30% and less than or equal to 70%, and still more preferably is more than or equal to 40% and less than or equal to 50%.

Such a configuration enables the polarizing element 1 according to the present embodiment to exert sufficient transmissivity even for oblique incident light at a large incident angle θ (for example, 45 to 60°). For example, when oblique incident light is split by the polarizing element 1 into the s-polarized light (reflected light) and the p-polarized light (transmitted light), the transmittance Tp for the p-polarized light (transmitted light) transmitted through the polarizing element 1 can be maintained at a high value irrespective of the incident angle θ of the oblique incident light. In addition, setting the coverage rate Rc at more than or equal to 25% and less than or equal to 80% enables the reflection function obtained by the reflection film 30 described above to be more reliably exerted without depending on the incident angle θ while maintaining a contrast (CR = Tp/Ts) which is a ratio of the transmission axis transmittance (Tp) to transmission axis reflectance (Ts) at a favorable level. Consequently, high transmissivity for transmitted light can be ensured and the polarization splitting properties can be improved irrespective of the incident angle θ of oblique incident light.

In contrast to this, in a case where the reflection film 30 is formed to cover only the leading end 22a of the ridge portion 22 of the grid structural body 20 and in a case where the reflection film 30 is formed to cover the leading end 22a and the entirety of the side surface 22b on one side of the ridge portion 22 as comparative examples, it is considered that the transmittance Tp fluctuates greatly depending on the incident angle θ of oblique incident light, and sufficient transmissivity cannot be obtained for oblique incident light at the large incident angle θ. In addition, in a case where the reflection film 30 covers the leading end 22a and the entirety of both the side surfaces 22b of the ridge portion 22 of the grid structural body 20 (in a case where the coverage rate Rc is 100%) as a comparative example, the transmissivity decreases considerably when the incident angle θ of oblique incident light is large.

Thus, from the perspective of improving the transmissivity for transmitted light and the polarization splitting properties without depending on the incident angle θ of oblique incident light, the leading end 22a and part of at least one of the side surfaces 22b (the upper side of the side surface 22b) of the ridge portion 22 preferably are covered by the reflection film 30 as in the polarizing element 1 according to the present embodiment.

Further, from the perspective of the Tp × Rs properties required as the polarizing beam splitter (PBS), the coverage rate Rc of the side surfaces 22b of the ridge portion 22 obtained by the reflection film 30 preferably is more than or equal to 25% and less than or equal to 80% in the polarizing element 1 according to the present embodiment.

In a case where the coverage rate Rc is less than 25%, the transmission axis transmittance Tp for the p-polarized light transmitted through the polarizing element 1 decreases, and the transmittance Tp fluctuates depending on the incident angle θ, so that a sufficiently high value of Tp × Rs cannot be obtained. Therefore, sufficient transmissivity for transmitted light and the polarization splitting properties expressed as Tp × Rs cannot be obtained for oblique incident light at the large incident angle θ. On the other hand, in a case where the coverage rate Rc exceeds 80%, the transmission axis transmittance Tp decreases as the incident angle θ of oblique incident light is larger (for example, 45 to 60°) similarly to the case where the leading end 22a and the entirety of both the side surfaces 22b of the ridge portion 22 of the grid structural body 20 are covered. Thus, the transmittance Tp fluctuates greatly depending on the incident angle θ.

Consequently, the coverage rate Rc of the side surfaces 22b of the ridge portion 22 obtained by the reflection film 30 preferably is more than or equal to 25% and less than or equal to 80%. The transmission axis transmittance Tp for the second polarized light (p-polarized light) transmitted through the polarizing element 1 can thereby be more than or equal to 75% in the case where light is incident on the polarizing element 1 in an oblique direction at the incident angle θ of 45°, for example. As a result, Tp × Rs can be more than or equal to 70%. Thus, even in a case where wide-range oblique incident light is incident at the large incident angle θ, the transmissivity for the second polarized light (p-polarized light) in the transmission axis direction of the polarizing element 1 can be increased to improve the polarization splitting properties of the polarizing element 1, so that oblique incident light can be suitably split by the polarizing element 1 into the first polarized light (s-polarized light) and the second polarized light (p-polarized light).

From a similar perspective, the coverage rate Rc more preferably is more than or equal to 30% and less than or equal to 70% (that is, the open rate Rr is more than or equal to 30% and less than or equal to 70%). High transmittance Tp of more than or equal to 80% can thereby be obtained in the case of the above-described oblique incident conditions, so that high Tp × Rs of more than or equal to 72% can be obtained. In addition, the coverage rate Rc more preferably is more than or equal to 30% and less than or equal to 60% (that is, the open rate Rr is more than or equal to 40% and less than or equal to 70%). High transmittance Tp of more than or equal to 83% can thereby be obtained in the case of the above-described oblique incident conditions, so that high Tp × Rs of more than or equal to 75% can be obtained. Further, the coverage rate Rc still more preferably is more than or equal to 40% and less than or equal to 50% (that is, the open rate Rr is more than or equal to 50% and less than or equal to 60%). Very high transmittance Tp of more than or equal to 85% can thereby be obtained in the case of the above-described oblique incident conditions, so that very high Tp × Rs of more than or equal to 77% can be obtained.

In addition, as to the reflection axis reflectance Rs, the coverage rate Rc preferably is more than or equal to 20%. High reflectance Rs of more than or equal to 85% is thereby obtained in the case of the above-described oblique incident conditions.

In addition, as to the contrast CR (CR = Tp/Ts) of the transmitted light, sufficient contrast CR is obtained if the coverage rate Rc is more than or equal to 20%. As the coverage rate Rc is higher, higher contrast CR is obtained.

### <2.7. Suitable Range of Tp × Rs>

Next, a suitable range of "Tp × Rs" which is an index representing the polarization splitting properties of the wire grid polarizing element 1 according to the present embodiment will be described.

Tp × Rs [%] represents the product of the transmission axis transmittance (Tp) and the reflection axis reflectance (Rs) in percentage. This Tp × Rs serves as the index representing the polarization splitting properties of the wire grid polarizing element 1. $Tp \times Rs \left[%\right] = \left(Tp\left[%\right]/100\right) \times \left(Rs\left[%\right]/100\right) \times 100$

Note that as described above, the transmission axis transmittance (Tp) is the transmittance for the second polarized light (p-polarized light) having an electric field component parallel to the transmission axis (the X direction) of the polarizing element 1. The reflection axis reflectance (Rs) is the reflectance for the first polarized light (s-polarized light) having an electric field component parallel to the reflection axis (the Y direction) of the polarizing element 1.

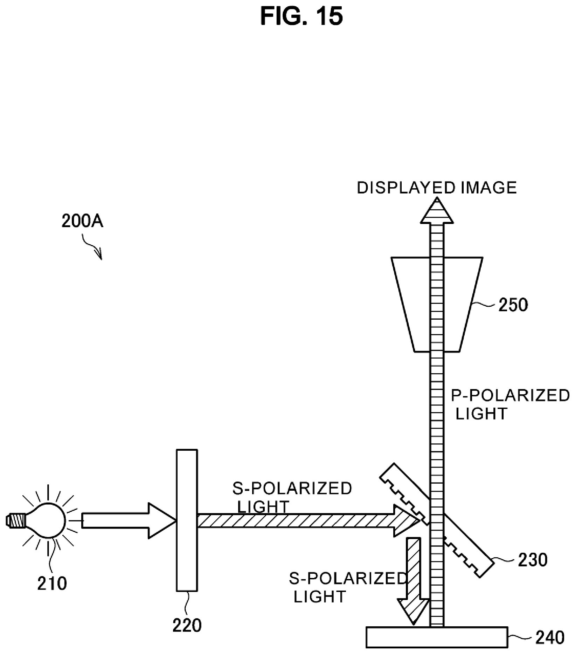

In the case of splitting incident light into the s-polarized light and the p-polarized light using the wire grid polarizing element 1 according to the present embodiment as a polarizing beam splitter (see FIG. 15 to FIG. 17), the polarizing element 1 is arranged at an inclination by a predetermined angle (for example, 45°) with respect to incident light from a light source. For example, when incident light from the light source is incident on the polarizing element 1 obliquely at the incident angle θ of approximately 45°, the incident light is split by the polarizing element 1 into the first polarized light (s-polarized light: reflected light) and the second polarized light (p-polarized light: transmitted light). In the incident light, the s-polarized light is light having an electric field component in the direction parallel to the longitudinal direction (the reflection axis direction shown in FIG. 2: the Y direction) of the ridge portions 22 of the grid structural body 20. On the other hand, in the incident light, the p-polarized light is light having an electric field component in the direction parallel to the width direction (the transmission axis direction shown in FIG. 2: the X direction) of the ridge portions 22 of the grid structural body 20.

The s-polarized light in the reflection axis direction mainly becomes reflected light reflected by the reflection film 30 of the polarizing element 1. The reflectance [%] for the s-polarized light at this time is the reflection axis reflectance (Rs). The reflection axis reflectance (Rs) represents the proportion of the s-polarized light reflected by the polarizing element 1 in the s-polarized light incident on the polarizing element 1. Note that reflection axis transmittance (Rp) represents the proportion of the s-polarized light transmitted through the polarizing element 1 in the s-polarized light incident on the polarizing element 1.

On the other hand, the p-polarized light in the transmission axis direction mainly becomes transmitted light transmitted through the grid structural body 20 and the substrate 10 of the polarizing element 1 which are transparent. The transmittance [%] for the p-polarized light at this time is the transmission axis transmittance (Tp). The transmission axis transmittance (Tp) represents the proportion of the p-polarized light transmitted through the polarizing element 1 in the p-polarized light incident on the polarizing element 1. Note that the transmission axis reflectance (Ts) represents the proportion of the p-polarized light reflected by the polarizing element 1 in the p-polarized light incident on the polarizing element 1.

Consequently, this means that as the transmission axis transmittance Tp is higher, the p-polarized light in the transmission axis direction can efficiently be transmitted. This also means that as the reflection axis reflectance Rs is higher, the s-polarized light in the reflection axis direction can efficiently be reflected. Thus, as the value of Tp × Rs which is the product of Tp and Rs is higher, both the transmissivity for the p-polarized light (transmitted light) and the reflectiveness for the s-polarized light (reflected light) will be high, so that the polarizing element 1 will be excellent in polarization splitting properties as the polarizing beam splitter.

Herein, the suitable range of the value of Tp × Rs according to the present embodiment will be described. A case where light having a wavelength in a predetermined range (for example, 430 to 680 nm) is incident on the polarizing element 1 according to the present embodiment at a predetermined incident angle θ (for example, 45°) in an oblique direction and the light is split into the p-polarized light (transmitted light) and the s-polarized light (reflected light) is considered. In the case of such oblique incident conditions, Tp × Rs preferably is more than or equal to 70% from the perspective of favorable polarization splitting properties of the polarizing element 1.

When Tp × Rs is less than 70%, a display device to which the polarizing element is applied has poor light utilization efficiency to be deficient in brightness of a displayed image and inferior in visibility. In contrast to this, when Tp × Rs is more than or equal to 70%, a display device to which the polarizing element 1 is applied can be increased in light utilization efficiency to ensure sufficient brightness of a displayed image and improve visibility.

Further, Tp × Rs more preferably is more than or equal to 72%, still more preferably is more than or equal to 75%, and particularly preferably is more than or equal to 80%. This enables the light utilization efficiency, the brightness of a displayed image, and the visibility as described above to be further improved.

### <2.8. Suitable Range of Height H of Ridge Portions>

In a case where incident light is incident on the polarizing element 1 according to the present embodiment at a relatively large incident angle θ (for example, 45°), the height H (see FIG. 1, FIG. 3, and the like) of the ridge portion 22 of the grid structural body 20 preferably is more than or equal to 160 nm, more preferably is more than or equal to 180 nm, and particularly preferably is more than or equal to 220 nm. This enables high transmission axis transmittance Tp, excellent Tp × Rs properties, and high contrast CR of transmitted light to be obtained.

Specifically, as to the transmittance, when the height H of the ridge portion 22 is more than or equal to 160 nm, the transmission axis transmittance Tp for oblique incident light becomes more than or equal to 80%, so that high transmittance is obtained. Further, when H is more than or equal to 180 nm, Tp of more than or equal to 85% is obtained, which is more preferable. In addition, when H is more than or equal to 220 nm, Tp of more than or equal to 87% is obtained, which is particularly preferable.

In addition, as to the Tp × Rs properties required as the polarizing beam splitter (PBS), when the height H of the ridge portion 22 is more than or equal to 160 nm, excellent Tp × Rs of more than or equal to 70% is obtained. Further, when H is more than or equal to 180 nm, Tp × Rs of more than or equal to 75% is obtained, which is more preferable. In addition, when H is more than or equal to 220 nm, Tp × Rs of more than or equal to 77% is obtained, which is particularly preferable.

In addition, as to the contrast CR (CR = Tp/Ts) of the transmitted light, the height H of the ridge portion 22 should only be more than or equal to 100 nm, and when H is more than or equal to 160 nm, excellent contrast CR of more than or equal to 150 is obtained. Further, when H is more than or equal to 180 nm, excellent CR of more than or equal to 250 is obtained, which is more preferable. In addition, when H is more than or equal to 220 nm, excellent CR of more than or equal to 500 is obtained, which is particularly preferable.

As described above, it is understood that in order to obtain favorable various properties (Tp, Tp × Rs, and CR), particularly Tp, of the polarizing element 1, the height H of the ridge portion 22 preferably is greater. The following is considered to be the reason for this. In other words, in a case where the deposition incident angle ϕ (see FIG. 5) when depositing the reflection film 30 on the ridge portions 22 by sputtering, vapor deposition, or the like is identical, the coverage rate Rc obtained by the reflection film 30 increases as the height H of the ridge portion 22 is smaller. When the coverage rate Rc increases, the range of the ridge portion 22 covered by the reflection film 30 is wider, which makes the p-polarized light less likely to be transmitted through the grid structural body 20, resulting in decreased transmittance Tp. Consequently, it can be said that under the condition that the deposition incident angle ϕ is identical, it is preferable to reduce the coverage rate Rc by making the height H of the ridge portion 22 greater to raise the transmittance Tp.

### <2.9. Suitable Range of Leading End Thickness Dt of Functional Film (Reflection Film)>

In a case where incident light is incident on the polarizing element 1 according to the present embodiment at a relatively large incident angle θ (for example, 45°), the thickness Dt of the reflection film 30 (the leading end thickness Dt of the reflection film 30: see FIG. 5) covering the leading end 22a of the ridge portion 22 of the grid structural body 20 preferably is more than or equal to 5 nm, and more preferably is more than or equal to 15 nm.

When the leading end thickness Dt of the reflection film 30 is more than or equal to 5 nm, both the reflection axis reflectance Rs and the transmission axis transmittance Tp for oblique incident light become more than or equal to 85%, so that high transmittance is obtained. Further, in a case of considering Tp properties and the Tp × Rs properties required as the polarizing beam splitter, Dt more preferably is more than or equal to 15 nm.

### <2.10. Suitable Range of Side Surface Thickness Ds of Functional Film (Reflection Film)>

In addition, the thickness Ds of the reflection film 30 (the side surface thickness Ds of the reflection film 30: see FIG. 5) covering the side surfaces 22b of the ridge portion 22 of the grid structural body 20 preferably is more than or equal to 10 nm and less than or equal to 30 nm, more preferably is more than or equal to 12.5 nm and less than or equal to 25 nm, and particularly preferably is more than or equal to 15 nm and less than or equal to 25 nm. This enables high transmission axis transmittance Tp, excellent Tp × Rs properties, and high contrast CR of transmitted light to be obtained.

Specifically, as to the transmittance, when the side surface thickness Ds of the reflection film 30 is more than or equal to 10 nm and less than or equal to 30 nm, the transmission axis transmittance Tp for oblique incident light becomes more than or equal to 80%, so that high transmittance is obtained. Further, when Ds is more than or equal to 12.5 nm and less than or equal to 25 nm, Tp of more than or equal to 85% is obtained, which is more preferable.

In addition, as to the reflectance, when the side surface thickness Ds of the reflection film 30 is more than or equal to 10 nm, the reflection axis reflectance Rs of oblique incident light becomes more than or equal to 80%, so that high reflectance is obtained. Further, when Ds is more than or equal to 12.5 nm, Rs of more than or equal to 85% is obtained, which is more preferable.

In addition, as to the Tp × Rs properties required as the polarizing beam splitter (PBS), when the side surface thickness Ds of the reflection film 30 is more than or equal to 12.5 nm and less than or equal to 30 nm, excellent Tp × Rs of more than or equal to 70% is obtained. Further, when Ds is more than or equal to 15 nm and less than or equal to 25 nm, Tp × Rs of more than or equal to 76% is obtained, which is more preferable.

In addition, as to the contrast CR (CR = Tp/Ts) of the transmitted light, the side surface thickness Ds of the reflection film 30 should only be more than or equal to 10 nm, and when Ds is more than or equal to 12.5 nm, excellent contrast CR of more than or equal to 50 is obtained. Further, when Ds is more than or equal to 15 nm, CR of more than or equal to 100 is obtained, which is more preferable.

### <2.11. Uneven Location of Reflection Film>

In addition, in the polarizing element 1 according to the present embodiment, the reflection film 30 covering the ridge portion 22 may be unevenly located on one side of the ridge portion 22 to present a bilaterally asymmetric shape in the width direction (the X direction) of the ridge portion 22. Specifically, the side surface thickness Ds, the coverage rate Rc, and the like of the reflection film 30 may be changed between one of the side surfaces 22b and the other side surface 22b of the ridge portion 22 to unevenly locate the reflection film 30 on the one of the side surfaces 22b of the ridge portion 22. That is, the reflection film 30 may cover the one of the side surfaces 22b of the ridge portion 22 thickly and widely, and may cover the other side surface 22b thinly and narrowly.

In the case of unevenly locating the reflection film 30 on the one side of the ridge portion 22 in this manner, a difference between the transmission axis transmittance Tp (+) for incident light on the polarizing element 1 at an incident angle of +θ (+30° to +60°) and the transmission axis transmittance Tp (-) for incident light at an incident angle of -θ (-30° to -60°) preferably is within 3%. Then, the thickness Ds and the coverage rate Rc of the reflection film 30 covering each of the one of the side surfaces 22b and the other side surface 22b of the ridge portion 22 preferably are adjusted such that the difference between Tp (+) and Tp (-) falls within 3%, thereby unevenly locating the reflection film 30 on the one side of the ridge portion 22 in an appropriate manner.

Note that the incident angle of +θ means that oblique incident light is incident on the ridge portion 22 in a direction inclined to one side in the X direction (the width direction of the ridge portion 22). On the other hand, the incident angle of -θ means that oblique incident light is incident on the ridge portion 22 in a direction inclined to the other side in the X direction.

As described above, in the case of unevenly locating the reflection film 30 on the one side of the ridge portion 22, the difference between Tp (+) and Tp (-) preferably falls within 3%. This enables high transmission axis transmittance Tp, excellent Tp × Rs properties, and high contrast CR of transmitted light to be obtained even in the case where the reflection film 30 is unevenly located on the one side of the ridge portion 22.

Specifically, as to the transmittance, the transmission axis transmittance Tp for oblique incident light at the incident angles θ of +45° and -45° becomes more than or equal to 85% even in the case where the reflection film 30 is unevenly located on the one side, so that high transmittance is obtained.

In addition, as to the reflectance, the reflection axis reflectance Rs of oblique incident light at the incident angles θ of +45° and -45° becomes more than or equal to 85% even in the case where the reflection film 30 is unevenly located on the one side, so that high reflectance is obtained.

In addition, as to the Tp × Rs properties required as the polarizing beam splitter (PBS), Tp × Rs of oblique incident light at the incident angle θ of 45° becomes more than or equal to 75% even in the case where the reflection film 30 is unevenly located on the one side, so that excellent Tp × Rs properties are obtained.

In addition, as to the contrast CR (CR = Tp/Ts) of the transmitted light, excellent contrast CR is obtained even in the case where the reflection film 30 is unevenly located on the one side. Further, from the perspective of improving the contrast, of the thicknesses Ds of the reflection film 30 covering each of one of the side surfaces 22b and the other side surface 22b of the ridge portion 22, a thinner one of the thicknesses Ds preferably is more than or equal to 5 nm (the coverage rate Rc thereof is more than or equal to 22%), and the thinner one of the thicknesses Ds of the reflection film 30 more preferably is more than or equal to 10 nm (the coverage rate Rc thereof is more than or equal to 33%).

### <2.12. Other Constituent Members>

The polarizing element 1 according to the present embodiment can further include constituent members other than the substrate 10, the grid structural body 20, and the reflection film 30 described above.

For example, the polarizing element 1 preferably further includes the protection film 40 formed to cover at least the surface of the reflection film 30 as shown in FIG. 7. In detail, the protection film 40 more preferably covers the entire surface of the grid structural body 20 as shown in FIG. 7. That is, the protection film 40 more preferably is formed to entirely cover the side surfaces 22b of the ridge portion 22 and the surface of the base part 21 of the grid structural body 20 as well as the surface of the reflection film 30. Forming this protection film 40 can further increase abrasion resistance, antifouling property, and waterproofness of the polarizing element 1.

In addition, the protection film 40 more preferably further includes a water-repellent coating or an oleophobic coating. This can further increase the antifouling property and waterproofness of the polarizing element 1.

The material constituting the protection film 40 is not particularly limited if it can increase the abrasion resistance, antifouling property, and waterproofness of the polarizing element 1. Examples of the material constituting the protection film 40 include a film made of a dielectric material, and more specifically include inorganic oxides, silane-based water-repellent materials, and the like. Inorganic oxides include Si oxides, Hf oxides, and the like. Silane-based water-repellent materials may contain fluorinated silane compounds such as perfluorodecyltriethoxysilane (FDTS), or may contain non-fluorinated silane compounds such as octadecyl trichlorosilane (OTS).

Among these materials, the protection film 40 more preferably contains at least one of an inorganic oxide and a fluorinated water-repellent material. When the protection film 40 contains an inorganic oxide, the scratch resistance of the polarizing element can be increased further. When the protection film 40 contains a fluorinated water-repellent material, the antifouling property and waterproofness of the polarizing element can be increased further.

Note that the protection film 40 should only be formed to cover at least the surface of the reflection film 30, and more preferably is formed to cover the entire surfaces of the grid structural body 20 and the reflection film 30, as shown in FIG. 7. In this case, for example, the protection film 40 may cover end surfaces of the grid structural body 20 (end surfaces of the base part 21) as shown in the upper diagram in FIG. 7, or the protection film 40 may not cover the end surfaces of the grid structural body 20 (the end surfaces of the base part 21) as shown in the lower diagram in FIG. 7. Alternatively, as shown in FIG. 8, the protection film 40 can also be formed to cover the entire polarizing element 1 including the surface of the substrate 10 in addition to the surfaces of the grid structural body 20 and the reflection film 30. In this manner, covering the outermost surface of the grid structural body 20 or the polarizing element 1 with the protection film 40 made of an inorganic oxide enables the thermal resistance R of the entire polarizing element 1 to be reduced further, so that the heat dissipation of the polarizing element 1 is improved further.

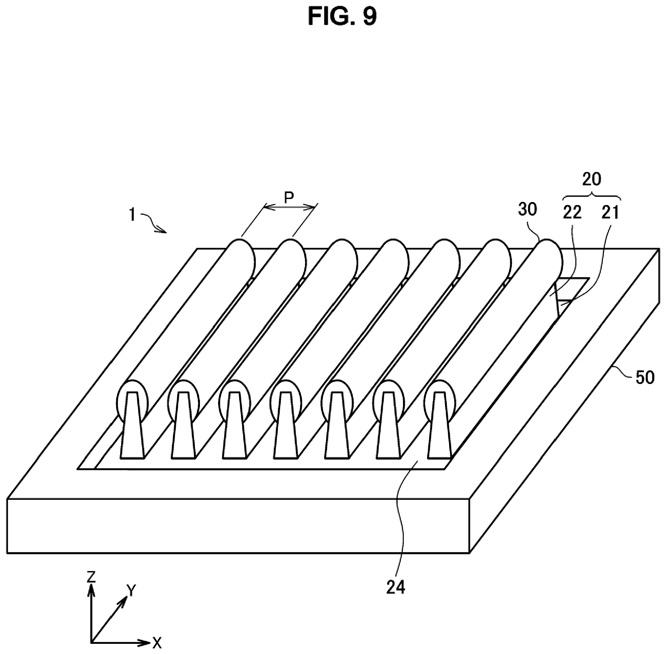

Further, the polarizing element 1 according to the present embodiment preferably is provided with a heat dissipation member 50 in a manner surrounding the substrate 10, as shown in FIG. 9. This heat dissipation member 50 enables heat conveyed from the substrate 10 to be discharged more efficiently. Herein, the heat dissipation member 50 is not particularly limited if it is a member having a high heat dissipation effect. The heat dissipation member 50 may be a radiator, a heatsink, a heat spreader, a die pad, a heat pipe, a metal cover, an enclosure, or the like, for example.

### <2.13. Image of Actual Grid Structural Body>

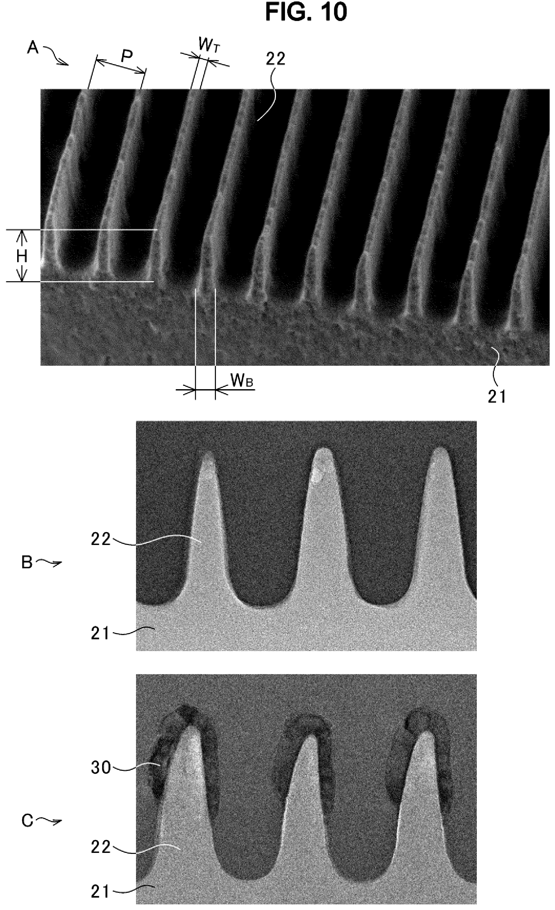

Next, an example of the polarizing element 1 according to the present embodiment actually produced and photographed under magnification using a scanning electron microscope (SEM) will be described with reference to FIG. 10. FIG. 10A is an SEM image of the grid structural body 20 before being covered by the reflection film 30, as seen in an oblique direction. FIG. 10B is an SEM image showing a section of the ridge portions 22 of the grid structural body 20 before being covered by the reflection film 30. FIG. 10C is an SEM image showing a section of the ridge portions 22 of the grid structural body 20 covered by the reflection film 30.

As shown in FIG. 10A and FIG. 10B, the base part 21 provided along the surface of the substrate 10 and the ridge portions 22 protruding from the base part 21 are formed in the grid structural body 20. The plurality of ridge portions 22 are arrayed at an almost equal pitch P. Each of the ridge portions 22 has an upward narrowing shape that narrows in width with distance from the base part 21. The top width W_{T} of the ridge portion 22 is narrower than the bottom width W_{B} of the ridge portion 22. The pitch P is sufficiently larger than the bottom width W_{B} of the ridge portion 22. The height H of the ridge portion 22 is greater than the pitch P. In the example of FIG. 10, P = 140 nm, W_{T} = 10 nm, W_{B} = 30 nm, and H = 220 nm hold. In addition, as shown in FIG. 10C, the reflection film 30 is formed to cover and wrap the leading end 22a and both the side surfaces 22b of the ridge portion 22. The outer surface of the reflection film 30 is rounded and curved, and bulges in the width direction of the ridge portion 22.

### <3. Method for Manufacturing Polarizing Element>

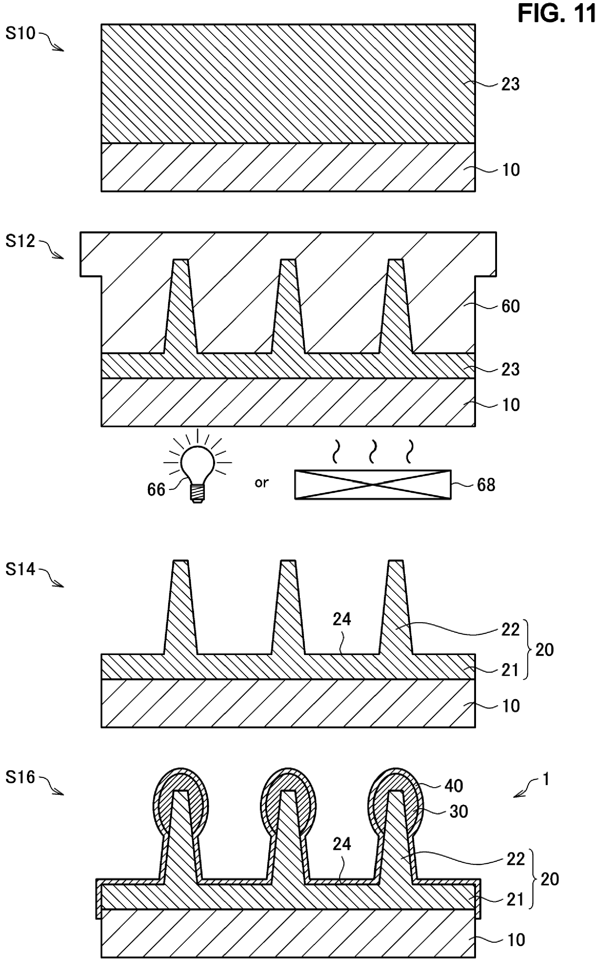

Next, a method for manufacturing the wire grid polarizing element 1 according to the present embodiment will be described with reference to FIG. 11. FIG. 11 is a process diagram showing the method for manufacturing the wire grid polarizing element 1 according to the present embodiment.

As described above, the polarizing element 1 according to the present embodiment is the wire grid polarizing element 1 of the hybrid type made of an inorganic material (the substrate 10) and an organic material (the grid structural body 20). Hereinafter, the method for manufacturing the wire grid polarizing element 1 of the hybrid type will be described.

As shown in FIG. 11, the method for manufacturing the wire grid polarizing element 1 according to the present embodiment includes a grid structural body material forming step (S10), a nano-imprinting step (S12), a grid structural body forming step (S14), and a reflection film forming step (S16).

### Grid Structural Body Material Forming Step (S10)

First, in S10, a grid structural body material 23 made of a transparent organic material (for example, an ultraviolet curable resin or a thermosetting resin) is stacked on the substrate 10 made of a transparent inorganic material (for example, glass) by coating or the like. Note that various materials described above can be used as the inorganic material of the substrate 10. In addition, various materials described above can be used as the organic material of the grid structural body 20. Further, the film thickness of the grid structural body material 23 should only be adjusted as appropriate in accordance with the dimensions of the base part 21 and the ridge portions 22 of the grid structural body 20 formed by nano-imprinting in S20.

### Nano-Imprinting Step (S12) and Grid Structural Body Forming Step (S14)

Then, the grid structural body material 23 is subjected to nano-imprinting in S12 to form the grid structural body 20 on the substrate 10 in S14. The grid structural body 20 is a micro concave-convex structural body in which the base part 21 provided on the substrate 10 and the plurality of ridge portions 22 protruding from the base part 21 are integrally formed. The micro concave-convex structural body is a structural body having micro convexities and concavities on the order of several nanometers to several tens of nanometers, for example.

**In** the nano-imprinting step in S12, a master 60 on which a reversed shape of the micro concave-convex shape of the grid structural body 20 has been formed is used to transfer the micro concave-convex shape of the master 60 to a surface of the grid structural body material 23 (S12). A concave-convex pattern composed of the base part 21, the ridge portions 22, and the concavities 24 described above are thereby formed on the grid structural body material 23. Further, in the nano-imprinting step, an energy beam is radiated to the grid structural body material 23 along with the transfer of the above-described concave-convex pattern to cure the grid structural body material 23 to which the concave-convex pattern has been transferred, thereby forming the grid structural body 20 (S14). For example, in the case where the grid structural body material 23 is made of an ultraviolet curable resin, the ultraviolet curable resin to which the concave-convex pattern has been transferred may be cured by radiating ultraviolet rays to the grid structural body material 23 using an ultraviolet radiation device 66. Alternatively, in the case where the grid structural body material 23 is made of a thermosetting resin, the thermosetting resin to which the concave-convex pattern has been transferred may be cured by heating the grid structural body material 23 using a heating device 68 such as a heater.

In the above-described steps S12 and S14, the ridge portions 22 each having the upward narrowing shape that narrows in width with distance from the base part 21 are formed as the ridge portions 22 of the grid structural body 20. The ridge portions 22 in the example of FIG. 11 have a trapezoidal shape (a tapered shape), but may have other various upward narrowing shapes as shown in FIG. 3.

In this manner, the present embodiment enables the master 60 to easily be peeled from the grid structural body material 23 because the ridge portions 22 each having the upward narrowing shape are imprinted in the nano-imprinting step S12, resulting in excellent mold releasability. In addition, the ridge portions 22 of the grid structural body 20 can be correctly molded into a desired shape without losing their shape.

### Reflection Film Forming Step (S16)

Then, in S16, the reflection film 30 covering part of the ridge portion 22 of the grid structural body 20 is formed using a metal material such as Al or Ag. The reflection film 30 is an example of a functional film that provides the polarizing element 1 with a predetermined function. The reflection film 30 is a metal thin film (a grid of fine metal wires) for reflecting incident light incident on the grid structural body 20 of the polarizing element 1.

In this reflection film forming step S16, the reflection film 30 is formed as will be described below. In other words, the reflection film 30 is formed such that the reflection film 30 covers and wraps the leading end 22a and the upper side of at least one of the side surfaces 22b of the ridge portion 22 and does not cover the lower side of both the side surfaces 22b of the ridge portion 22 and the base part 21. Further, the reflection film 30 is formed such that the surface of the reflection film 30 covering and wrapping the ridge portion 22 is rounded and bulges in the width direction of the ridge portion 22. In addition, the reflection film 30 is formed such that the maximum width W_{MAX} (the grid maximum width W_{MAX}) of the reflection film 30 covering and wrapping the ridge portion 22 is more than or equal to the aforementioned bottom width W_{B} (the grid bottom width W_{B}) of the ridge portion.

As a method for forming this reflection film 30, the sputtering or vapor deposition method can be used as shown in FIG. 5, for example. A metal material is sputtered or vapor-deposited on the ridge portions 22 of the grid structural body 20 alternately in oblique directions to deposit the reflection film 30. This enables the reflection film 30 having a desired shape to be suitably formed so as to roundly cover and wrap the top of the ridge portion 22.

By forming the reflection film 30 in this manner, the ridge portion 22 of the grid structural body 20 and the reflection film 30 become to have the special tree shape described above. Even in the case where light is incident on the polarizing element 1 in an oblique direction at a relatively large and wide-range incident angle θ (for example, 30 to 60°) as described earlier, the transmission axis transmittance Tp for the p-polarized light included in the oblique incident light can thereby be maintained at a high value, so that the transmissivity for the p-polarized light (transmitted light) can be ensured. Thus, the value of Tp × Rs can be maintained at a high value (for example, more than or equal to 70%), which can improve the polarization splitting properties of the polarizing element 1 for oblique incident light.

Note that the method for manufacturing the polarizing element 1 according to the present embodiment may include a step (a protection film forming step) of forming the protection film 40 that covers the surface of the polarizing element 1 according to necessity after the reflection film forming step S16 shown in FIG. 11. The protection film 40 preferably is formed to cover the entire surfaces of the grid structural body 20 and the reflection film 30. Various materials described above can be used as the material of the protection film 40.

The method for manufacturing the polarizing element 1 according to the present embodiment has been described above. Use of the steps described above enables the polarizing element 1 excellent in polarization properties and heat dissipation to be manufactured without causing elevated manufacturing cost and complicated manufacturing of the polarizing element 1.

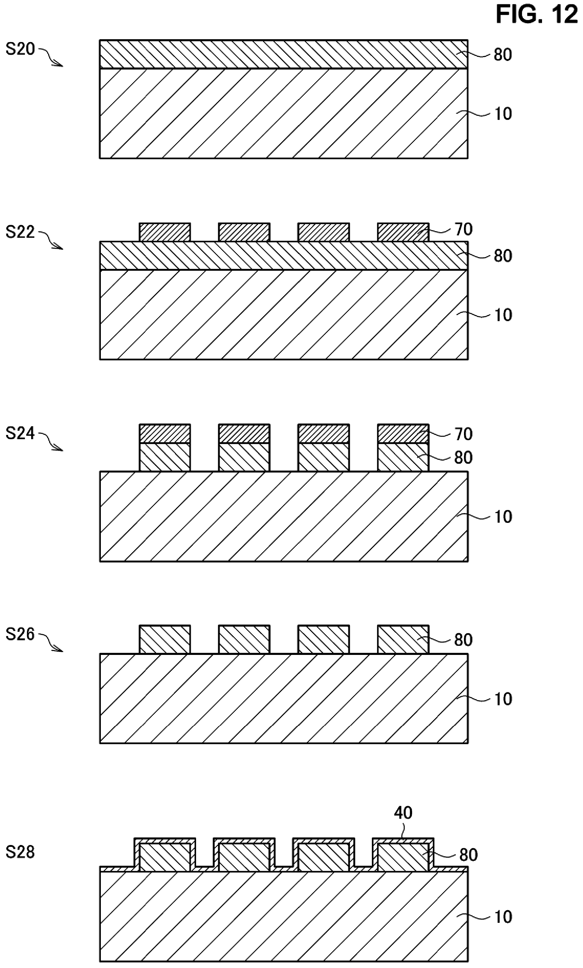

Herein, a conventional method for manufacturing a wire grid polarizing element will be briefly described with reference to FIG. 12 for comparison with the manufacturing method according to the present embodiment.

As shown in FIG. 12, in the conventional method for manufacturing a wire grid polarizing element, a metal film 80 is first deposited on the substrate 10 in order to produce a convex grid shape (S20). In this S20, a reflection film made of a material that reflects light in the used band, or the like, for example, the metal film 80 of aluminum or the like, is deposited on the substrate 10 made of an inorganic material such as glass using sputtering, vapor deposition, or the like.

Then, a resist mask 70 is patterned on the metal film 80 using the photolithography technology (S22). Thereafter, the metal film 80 is subjected to etching using a vacuum dry etching device or the like to form a convex shape made of the metal film 80 (S24). For example, in a case where an etch selectivity between the resist mask 70 and the metal film 80 cannot be achieved at this time, an oxide film of SiO₂ or the like is further deposited on the metal film 80 by sputtering or the like, and the resist mask 70 is formed thereon by the photolithography technology. Thereafter, the resist mask 70 is peeled from the metal film 80 (S26), then, the protection film 40 made of an SiO₂ film or the like is deposited by CVD or the like, and water repellent/oleophobic coating treatment is also performed according to necessity (S28).

Note that although a process of producing a reflection-type wire grid polarizing element having a basic configuration is shown in steps S20 to S28 of the above-described conventional manufacturing method, a further complicated process is required when considering a case where the metal film 80 is a multi-layer film. Thus, the conventional wire grid polarizing element produced by the process as shown in S20 to S28 of FIG. 12 is presumed to be expensive in manufacturing cost and require a long manufacturing time. In addition, in a case of mass-producing polarizing elements, a plurality of accurate, expensive etching devices and photolithography devices need to be prepared in accordance with the production volume in order to form a micro convex shape smaller than the wavelength of light, so that facility investment is also predicted to be more expensive.

In contrast to this, by molding the grid structural body 20 using an imprinting technology such as nano-imprinting, the method for manufacturing the polarizing element 1 according to the present embodiment (see FIG. 11) enables the manufacturing cost, manufacturing time, and facility investment to be reduced considerably as compared with the above-described conventional manufacturing method (see FIG. 12).

The method for manufacturing the polarizing element 1 according to the present embodiment is not particularly limited in nano-imprinting conditions while the grid structural body material 23 is subjected to nano-imprinting (S12 in FIG. 11). As shown in S12 in FIG. 11, for example, nano-imprinting is performed using a replica master (which may be a proper type master) as the master 60, and UV radiation, heating, or the like is performed on the grid structural body material 23, thereby curing the grid structural body material 23 in a state where the concave-convex pattern has been imprinted. Thereafter, the master 60 is released from the grid structural body material 23 having been cured. This enables the grid structural body 20 in which the base part 21 and the ridge portions 22 have been formed to be molded by transfer.

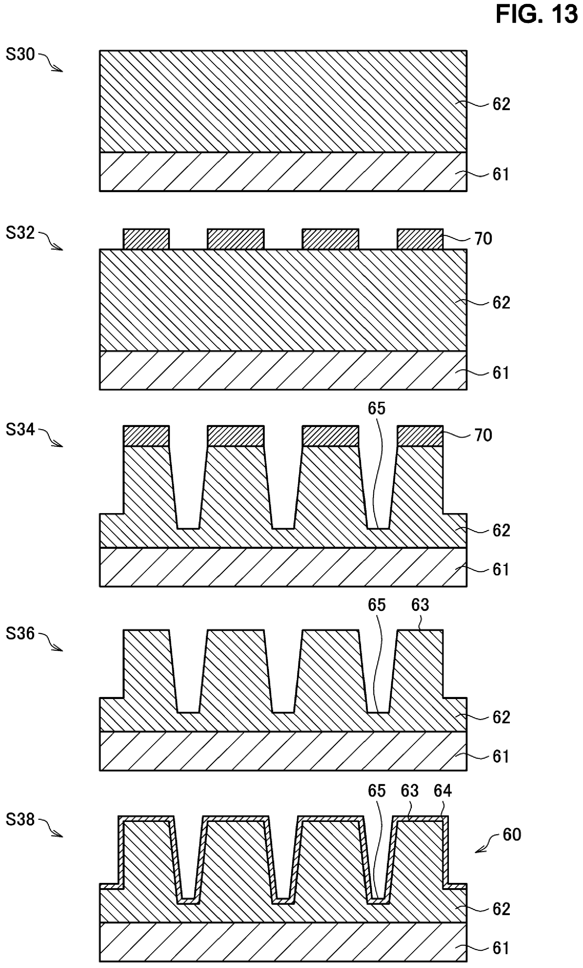

Note that the master 60 used in the nano-imprinting step S12 (FIG. 11) in the method for manufacturing the polarizing element 1 according to the present embodiment can be produced by the photolithography technology as shown in FIG. 13, for example. FIG. 13 is a process diagram showing a method for manufacturing the master 60 according to the present embodiment.

As shown in FIG. 13, a master metal film 62 is first deposited on a master base material 61 (S30), and then the resist mask 70 is formed on the master metal film 62 (S32). Then, the master metal film 62 is etched using the resist mask 70, and concave grooves 65 corresponding to the ridge portions 22 of the above-described grid structural body 20 are formed in the master metal film 62 having been etched (S34).

Thereafter, the resist mask 70 is peeled from the master metal film 62, thereby obtaining the master 60 (S36). The master 60 has a micro concave-convex structure composed of a plurality of the convexities 63 and concave grooves 65 molded on the master base material 61. The micro concave-convex structure on the surface of the master 60 has an inverted shape of the micro concave-convex structure on the surface of the above-described grid structural body 20 of the polarizing element 1. The concave groove 65 in the master 60 has an inverted shape of the ridge portion 22 of the grid structural body 20, and the convexity 63 of the master 60 has an inverted shape of the concavity 24 between the ridge portions 22, 22 of the grid structural body 20.

Further, the manufacturing method according to the present embodiment may include a step of forming a release film coating 64 on the surface of the micro concave-convex structure of the master 60 according to necessity (S38). By providing the release film coating 64 on the surface of the master 60, the master 60 can easily be peeled from the grid structural body material 23 after subjecting the grid structural body material 23 to nano-imprinting in the nano-imprinting step (S12) shown in FIG. 11 described above, which can further improve the releasability.

### <4. Projection Display Device>

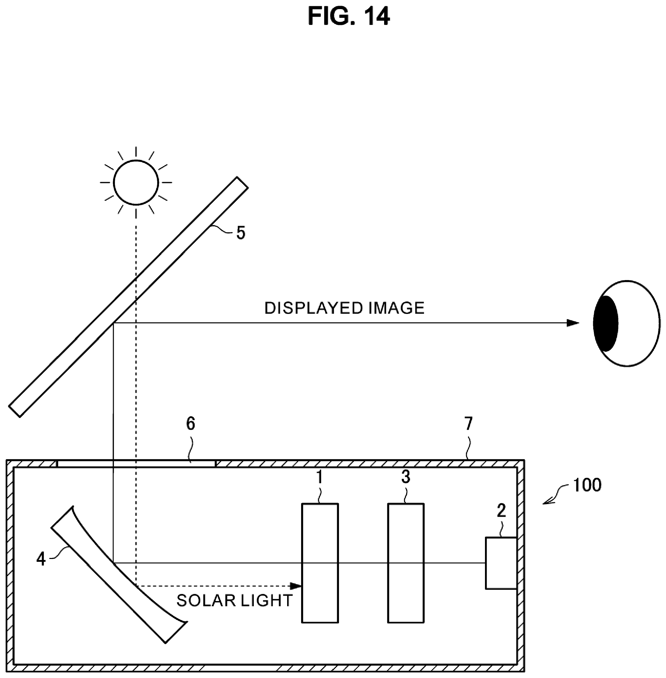

Next, a projection display device to which the wire grid polarizing element 1 according to the present embodiment is applied will be described with reference to FIG. 14.

The projection display device according to the present embodiment includes the wire grid polarizing element 1 according to the present embodiment described above. When the projection display device according to the present embodiment includes the polarizing element 1, excellent polarization properties as well as heat tolerance and heat dissipation of the polarizing element 1, and the like can be achieved.

Herein, the projection display device is a device that projects light toward a target, and radiates the light having been projected (projected light) to a to-be-displayed surface (projection surface) of the target, thereby displaying a virtual image such as an image or video. Examples of types of projection display devices include a head-up display device (HUD), a projector device, and the like.

### <4.1. Head-Up Display Device>

First, a head-up display device 100 including the wire grid polarizing element 1 according to the present embodiment will be described with reference to FIG. 14. FIG. 14 is a schematic diagram showing an example of the head-up display device 100 according to the present embodiment.

As shown in FIG. 14, the head-up display device 100 according to the present embodiment includes the wire grid polarizing element 1 according to the present embodiment described above. Because the head-up display device 100 includes the polarizing element 1, the polarization properties, heat tolerance, and heat dissipation can be improved. A head-up display with a conventional polarizing element incorporated therein is inferior in heat dissipation, and thus, it is considered that heat tolerance is not sufficient in consideration of a long-term use and response to future increase in luminance and magnified display.

As shown in FIG. 14, the head-up display device 100 includes a light source 2, a display element 3 that outputs a displayed image, a reflector 4 that reflects the displayed image to a display surface 5, and a cover portion 6 provided at an opening of a housing 7. In the head-up display device 100, arrangement of the polarizing element 1 is not particularly limited. For example, the polarizing element 1 can be arranged between the display element 3 and the reflector 4 as shown in FIG. 14.

Herein, the head-up display device 100 may be a vehicle head-up display device provided for a vehicle. The vehicle head-up display device displays video on a semi-transmissive plate (equivalent to "the display surface 5") such as a front glass or a combiner of the vehicle. The vehicle head-up display device is, for example, a video display device disposed on the dashboard of the vehicle to project video light to the front glass (the display surface 5) and display driving information as a virtual image.

The head-up display device 100 is configured to output a displayed image toward the front glass surface (the display surface 5) from below. Therefore, solar light enters the head-up display device 100 oppositely to the output direction of the displayed image and is incident on the display element 3 in some cases. The head-up display device 100 according to the present embodiment is provided with the reflector 4 for reflecting and magnifying a displayed image for the purpose of meeting the request for size reduction and magnifying the displayed image. In such a case, in the conventional head-up display device, solar light incident on the reflector from the outside concentrates on the vicinity of the display element, which might cause degradation or failure of the display element by heat.

In contrast to this, the head-up display device 100 according to the present embodiment is provided with the polarizing element 1 of the hybrid type excellent in heat dissipation and heat tolerance as described above for the purpose of preventing solar light from being incident on the display element 3. This polarizing element 1 can stably exert the polarizing function even at a high temperature of approximately 200°C, for example. Consequently, even under a high-temperature environment such as the inside of a vehicle in the summer, for example, solar light incident on the reflector 4 from the outside can be shielded by the polarizing element 1 to be prevented from reaching the display element 3. This can restrain degradation or failure of the display element 3.

Note that the constituent members of the head-up display device 100 shown in FIG. 14 are an example of basic constituent members, and the constituent members of the projection display device are not limited to those in the example of FIG. 14. The head-up display device 100 can include other constituent members as appropriate in accordance with required performance or the like.

In addition, by using the polarizing element 1 as a pre-polarizing plate arranged in front of the display element 3, the polarizing element 1 can restrain solar light from being incident on the display element 3 while transmitting a displayed image output from the display element 3. Consequently, heat tolerance and durability of the head-up display device 100 can be increased further.

In addition, the arrangement of the wire grid polarizing element in the projection display device is not limited to the example of arrangement of the polarizing element 1 in the head-up display device 100 shown in FIG. 14, and can be selected and modified as appropriate in accordance with the configuration of the projection display device, required performance, or the like. For example, the polarizing element 1 can be arranged between the display element 3 and the light source 2 although not shown. Alternatively, the polarizing element 1 can also be incorporated in the reflector 4 although not shown. Further, the cover portion 6 provided in the head-up display device 100 shown in FIG. 14 can also be implemented by the polarizing element 1.

In addition, the heat dissipation member 50 (see FIG. 9) may be provided around the polarizing element 1 installed in the head-up display device 100 although not shown. This heat dissipation member 50 can further improve heat dissipation of the polarizing element 1, which can further improve the polarization properties and heat tolerance of the polarizing element 1.

### <4.2. Projection Display Device Including Polarizing Beam Splitter>

Next, a projection display device in which the reflection-type wire grid polarizing element 1 according to the present embodiment is used as a polarizing beam splitter 230 will be described with reference to FIG. 15 to FIG. 17. Hereinafter, first, matters common to three specific examples of projection display devices 200A, 200B, and 200C (hereinafter collectively referred to as a "projection display device 200" in some cases) shown in FIG. 15 to FIG. 17 will be described comprehensively. Thereafter, the respective specific examples shown in FIG. 15 to FIG. 17 will be described individually.

As shown in FIG. 15 to FIG. 17, the projection display device 200 includes a light source 210, a PS converter 220, the polarizing beam splitter 230, a reflection-type liquid crystal display element 240, and a lens 250. Note that a phase-difference compensating plate (not shown) may be installed between the polarizing beam splitter 230 and the reflection-type liquid crystal display element 240.

The light source 210 may be a point light source having a single light emitting unit, or may be a light source having a plurality of light emitting units such as LEDs. In addition, light output from the light source 210 may be parallel light, or may be diffused light. Consequently, light of the light source 210 is incident in some cases on the polarizing beam splitter 230 (a reflection-type wire grid polarizing plate) at the incident angle θ in a predetermined range (for example, a range of 45° ± 15°) centering on 45°, for example.

The PS converter 220 is a polarization conversion element for converting light from the light source 210 into specific polarized light (for example, the p-polarized light or the s-polarized light). The PS converter 220 may convert light from the light source 210 into the p-polarized light or into the s-polarized light.

The polarizing beam splitter 230 is implemented by the reflection-type wire grid polarizing plate. The reflection-type wire grid polarizing plate is an example of the wire grid polarizing element 1 according to the present embodiment. The polarizing beam splitter 230 is arranged such that light from the light source 210 is incident at the incident angle θ in the predetermined range including 45°. This incident angle θ in the predetermined range is, for example, 45° ± 15° described above, that is, more than or equal to 30° and less than or equal to 60°.

For example, in FIG. 15 to FIG. 17, the polarizing beam splitter 230 is arranged at an inclination of 45° with respect to an incident direction of incident light such that the incident light from the light source 210 is incident on the polarizing beam splitter 230 at the incident angle θ of mainly 45°. In addition, the polarizing beam splitter 230 is arranged at an inclination of 45° with respect to the reflection-type liquid crystal display element 240 such that incident light from the reflection-type liquid crystal display element 240 is incident on the polarizing beam splitter 230 at the incident angle θ of mainly 45°.

The polarizing beam splitter 230 splits incident light into the first polarized light (s-polarized light) and the second polarized light (p-polarized light). For example, the polarizing beam splitter 230 may split the incident light into the s-polarized light and the p-polarized light by reflecting the first polarized light (s-polarized light) in the incident light and transmitting the second polarized light (p-polarized light). To the contrary, the polarizing beam splitter 230 may split the incident light into the s-polarized light and the p-polarized light by reflecting the second polarized light (p-polarized light) in the incident light and transmitting the first polarized light (s-polarized light).

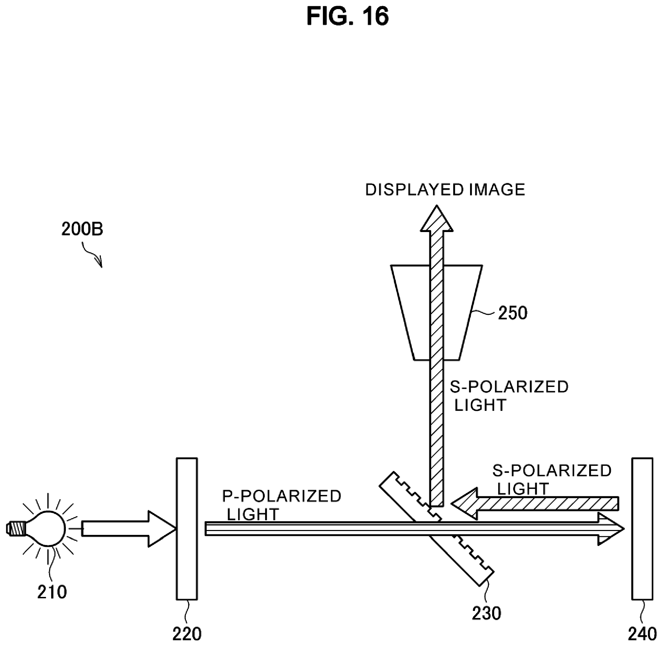

In a case where desired polarized light is reflected by the polarizing beam splitter 230, the polarizing beam splitter 230 is arranged such that light including the polarized light to be reflected is incident on the surface of the polarizing beam splitter 230 (that is, the concave-convex surface on the side where the grid structural body 20 of the polarizing element 1 is formed). For example, in the case where the s-polarized light incident from the PS converter 220 is reflected by the polarizing beam splitter 230 as shown in FIG. 15, the surface of the polarizing beam splitter 230 should only be oriented toward the PS converter 220 that outputs the s-polarized light. On the other hand, in the case where the s-polarized light incident from the reflection-type liquid crystal display element 240 is reflected by the polarizing beam splitter 230 as shown in FIG. 16, the surface of the polarizing beam splitter 230 should only be oriented toward the reflection-type liquid crystal display element 240 that outputs the s-polarized light.

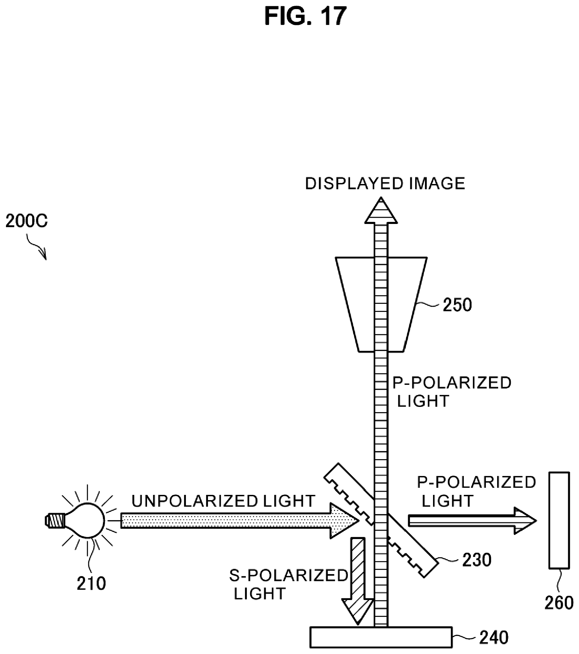

The reflection-type liquid crystal display element 240 is a display element that reflects incident light to output light representing a displayed image. As shown in FIG. 15 and FIG. 17, the reflection-type liquid crystal display element 240 may be arranged such that the first polarized light (s-polarized light) reflected by the polarizing beam splitter 230 is incident on the surface of the reflection-type liquid crystal display element 240. Alternatively, as shown in FIG. 16, the reflection-type liquid crystal display element 240 may be arranged such that the second polarized light (p-polarized light) transmitted through the polarizing beam splitter 230 is incident on the surface of the reflection-type liquid crystal display element 240.

In addition, the reflection-type liquid crystal display element 240 reflects and modulates the incident first polarized light (s-polarized light) to output the second polarized light (p-polarized light) representing a displayed image as shown in FIG. 15 and FIG. 17. However, the reflection-type liquid crystal display element 240 is not limited to such an example, and may reflect and modulate the incident second polarized light (p-polarized light) to output the first polarized light (s-polarized light) representing a displayed image as shown in FIG. 16.

The lens 250 magnifies light representing a displayed image output from the reflection-type liquid crystal display element 240 for output to the outside. The lens 250 is arranged such that the light representing a displayed image output from the reflection-type liquid crystal display element 240 is incident through the polarizing beam splitter 230. For example, as shown in FIG. 15 and FIG. 17, the lens 250 may be arranged such that the second polarized light (p-polarized light) reflected and modified by the reflection-type liquid crystal display element 240 is transmitted through the polarizing beam splitter 230 to be incident on the lens 250. Alternatively, as shown in FIG. 16, the lens 250 may be arranged such that the first polarized light (s-polarized light) reflected and modified by the reflection-type liquid crystal display element 240 is reflected by the polarizing beam splitter 230 to be incident on the lens 250.

As described above, the projection display device 200 according to the present embodiment uses the aforementioned wire grid polarizing element 1 according to the present embodiment as the polarizing beam splitter 230. Consequently, the polarizing beam splitter 230 is excellent in reflectiveness for the s-polarized light, transmissivity for the p-polarized light, and the Tp × Rs properties for oblique incident light at the incident angle θ in a relatively large and wide range (for example, 30 to 60°), and excellent in properties of splitting the oblique incident light into the p-polarized light and the s-polarized light.

Next, the respective specific examples of the projection display devices 200A, 200B, and 200C shown in FIG. 15 to FIG. 17 will be described individually.

As shown in FIG. 15, the projection display device 200A according to the first specific example of the present embodiment includes the light source 210, the PS converter 220, the polarizing beam splitter 230, the reflection-type liquid crystal display element 240, and the lens 250.

Light output from the light source 210 is unpolarized light, and the light includes a p-polarized light component and an s-polarized light component in an identical proportion. Therefore, when only one of the polarized lights is selected and extracted by the polarizing beam splitter 230 implemented by the polarizing element 1, the light volume will decrease to about a half. Thus, the light output from the light source 210 is converted by the PS converter 220 into either the first polarized light (s-polarized light) or the second polarized light (p-polarized light). This can restrain the light volume of polarized light extracted by the polarizing beam splitter 230 from decreasing to improve the light use efficiency. For example, the PS converter 220 shown in FIG. 15 converts light from the light source 210 into the first polarized light (s-polarized light).

The light converted by the PS converter 220 into the s-polarized light is incident on the polarizing beam splitter 230 arranged at an inclination obliquely at approximately 45°. The polarizing beam splitter 230 reflects the first polarized light (s-polarized light) for output toward the reflection-type liquid crystal display element 240 at an output angle of 45°. The reflection-type liquid crystal display element 240 modulates and reflects the first polarized light (s-polarized light) to generate the second polarized light (p-polarized light) representing a displayed image, and outputs the second polarized light (p-polarized light) toward the polarizing beam splitter 230. The second polarized light (p-polarized light) is transmitted through the polarizing beam splitter 230, magnified by the lens 250, and then projected on the display surface not shown, so that the displayed image is displayed.

The projection display device 200A having the above configuration includes a reflection-type wire grid polarizing plate implemented by the wire grid polarizing element 1 according to the present embodiment as the polarizing beam splitter 230. This can improve the polarization splitting properties of the polarizing beam splitter 230 for oblique incident light and incident light at the wide incident angle θ, and can improve heat dissipation and heat tolerance of the polarizing beam splitter 230 and the projection display device 200A.

In contrast to this, a projection display device (not shown) including a conventional polarizing element as a polarizing beam splitter is inferior in heat dissipation of the polarizing element. Therefore, it is considered that heat tolerance is not sufficient from the perspectives of a long-term use and response to increase in luminance and magnified display. In addition, the incident angle θ of light incident on the polarizing beam splitter is not only 45°, but also every angle within a predetermined range (for example, approximately 45° ± 15°) centering on 45°. In this manner, even in the case where oblique incident light at the large and wide-range incident angle θ is incident on the polarizing beam splitter, the polarizing beam splitter is required to have performance capable of suitably splitting oblique incident light into the s-polarized light and the p-polarized light irrespective of the incident angle θ. However, the polarizing beam splitter including the conventional polarizing element raises problems of deterioration of the light utilization efficiency and an adverse influence on the image quality of the displayed image, such as uneven luminance, because of poor polarization splitting properties for the above-described oblique incident light.

In this respect, the polarizing beam splitter 230 of the projection display device 200A according to the first specific example of the present embodiment is superior in polarization splitting properties for oblique incident light at the large and wide-range incident angle θ as described above. Consequently, the light utilization efficiency can be improved in the projection display device 200A, and uneven luminance and the like can be reduced to improve the image quality of the displayed image.

In addition, the projection display device is not limited to the example of the projection display device 200A shown in FIG. 15 described above, and the constituent members and arrangement of the projection display device can be modified as appropriate as in the projection display device 200B shown in FIG. 16, the projection display device 200C shown in FIG. 17, or the like, for example.

As shown in FIG. 16, the projection display device 200B according to the second specific example of the present embodiment includes the light source 210, the PS converter 220, the polarizing beam splitter 230, the reflection-type liquid crystal display element 240, and the lens 250.

In the projection display device 200B, the PS converter 220 converts light from the light source 210 into the second polarized light (p-polarized light). The light converted by the PS converter 220 into the p-polarized light is transmitted through the polarizing beam splitter 230 arranged at an inclination obliquely at approximately 45° to be incident on the reflection-type liquid crystal display element 240. The reflection-type liquid crystal display element 240 modulates and reflects the second polarized light (p-polarized light) to generate the first polarized light (s-polarized light) representing a displayed image, and outputs the first polarized light (s-polarized light) toward the polarizing beam splitter 230. The polarizing beam splitter 230 reflects the first polarized light (s-polarized light) for output toward the lens 250 at the output angle of 45°. The first polarized light (s-polarized light) is magnified by the lens 250 and then projected on the display surface not shown, so that the displayed image is displayed.

The projection display device 200B having the above configuration is excellent in polarization splitting properties for oblique incident light, the light utilization efficiency can be improved, and uneven luminance and the like can be reduced to improve the image quality of the displayed image, similarly to the projection display device 200A described above (see FIG. 15).

In addition, as shown in FIG. 17, the projection display device 200C according to the third specific example of the present embodiment includes the light source 210, the polarizing beam splitter 230, the reflection-type liquid crystal display element 240, the lens 250, and a light absorber 260, but does not include the above-described PS converter 220.

In the projection display device 200C, unpolarized light output from the light source 210 is directly incident on the polarizing beam splitter 230 arranged at an inclination obliquely at approximately 45°. The polarizing beam splitter 230 reflects a component of the first polarized light (s-polarized light) in unpolarized light for output toward the reflection-type liquid crystal display element 240 at the output angle of 45°. On the other hand, in the unpolarized light incident on the polarizing beam splitter 230, a component of the second polarized light (p-polarized light) is transmitted through the polarizing beam splitter 230 to be incident on the light absorber 260. Most of this component of the second polarized light (p-polarized light) is absorbed into the light absorber 260. This can restrain the unnecessary second polarized light (p-polarized light) from being incident on another optical system in the projection display device 200C.

The reflection-type liquid crystal display element 240 modulates and reflects the component of the first polarized light (s-polarized light) incident from the polarizing beam splitter 230 to generate the second polarized light (p-polarized light) representing a displayed image, and outputs the second polarized light (p-polarized light) toward the polarizing beam splitter 230. The second polarized light (p-polarized light) is transmitted through the polarizing beam splitter 230, magnified by the lens 250, and then projected on the display surface not shown, so that the displayed image is displayed.

Because the PS converter 220 is not installed in the projection display device 200C having the above configuration, the component of the second polarized light (p-polarized light) in the unpolarized light output from the light source 210 is absorbed into the light absorber 260 and is not utilized for displaying the displayed image. Therefore, the light volume of the displayed image is reduced to about a half. However, cost and installation space required for the PS converter 220 can be saved, and the number of parts of the projection display device 200C can be reduced. This brings about advantages that the projection display device 200C can be reduced in cost and the projection display device 200C can be reduced in size.

The specific examples of the projection display device 200 in which the reflection-type wire grid polarizing element 1 according to the present embodiment is used as the polarizing beam splitter 230 have been described above. Note that the projection display device is not limited to the specific examples of the projection display device 200 shown in FIG. 15 to FIG. 17, but the constituent members and arrangement of the projection display device may be modified as appropriate, or another constituent member may be provided as appropriate, in accordance with required performance or the like.

### <5. Vehicle>

Next, a vehicle including the video display device according to the present embodiment will be described.

The vehicle (not shown) according to the present embodiment includes the projection display device having the wire grid polarizing element 1 according to the present embodiment described above. Note that the vehicle may be various automobiles such as a standard motor vehicle, a light motor vehicle, a bus, a truck, a racing car, a construction-use vehicle, and other large-sized vehicles, for example, or besides may be various rides such as a two-wheeled motor vehicle, a train, a linear motor car, and an attraction vehicle if it is a vehicle in which the projection display device can be installed.

The vehicle according to the present embodiment can project and display a displayed image on a display surface (for example, the display surface 5 shown in FIG. 14) provided for the vehicle by means of the polarizing element 1 and the projection display device described above. The display surface preferably is a semi-transmissive plate such as a front glass, side glass, rear glass, or combiner of the vehicle, for example. However, the display surface is not limited to such an example, and may be a surface of various parts, members, on-vehicle equipment, or the like provided for the vehicle if it is a surface of a target on which the displayed image can be projected.

The projection display device provided for the vehicle according to the present embodiment is, for example, the head-up display device 100 shown in FIG. 14, the projection display device 200 having the polarizing beam splitter 130 shown in FIG. 15 to FIG. 17, or the like. However, the projection display device is not limited to such an example, and may be various image display devices such as a projector, a car navigation device, and a terminal device having an image display function mounted on the vehicle if it is a device that can project or display an image.

As described above, in the head-up display device 100, solar light is transmitted through the front glass (the display surface 5) from the outside of the vehicle to enter the head-up display device 100 in some cases, as shown in FIG. 14. Heat of this solar light and the like might cause degradation or failure of the display element 3. Therefore, for the purpose of preventing solar light from being incident on the display element 3, the wire grid polarizing element 1 of the hybrid type described above is provided in the head-up display device 100. This polarizing element 1 is excellent in heat dissipation and heat tolerance because of the hybrid structure having high thermal conductivity. Consequently, solar light incident on the head-up display device 100 from the outside can be shielded by the polarizing element 1 to be prevented from reaching the display element 3, which can prevent failure and breakage of the display element 3. Further, the polarizing element 1 can also prevent breakage of the polarizing element 1 itself because of the excellent heat dissipation and heat tolerance.

Similarly, even in the case where the projection display device 200 shown in FIG. 15 to FIG. 17 is installed in the vehicle, failure and breakage of another part such as the reflection-type liquid crystal display element 240 can be prevented because the polarizing element 1 used as the polarizing beam splitter 230 can shield solar light from the outside. Further, breakage of the polarizing element 1 itself excellent in heat dissipation and heat tolerance can also be prevented.

In the projection display device provided in the vehicle according to the present embodiment as described above, excellent polarization properties (such as solar light shielding performance and polarization splitting properties) are obtained by the polarizing element 1, and excellent heat tolerance and durability of the projection display device can also be achieved.

Note that the vehicle is not particularly limited if it includes the projection display device and the polarizing element described above, and other conditions can be set and modified as appropriate in accordance with performance required of the vehicle.

### <6. Protection Film>

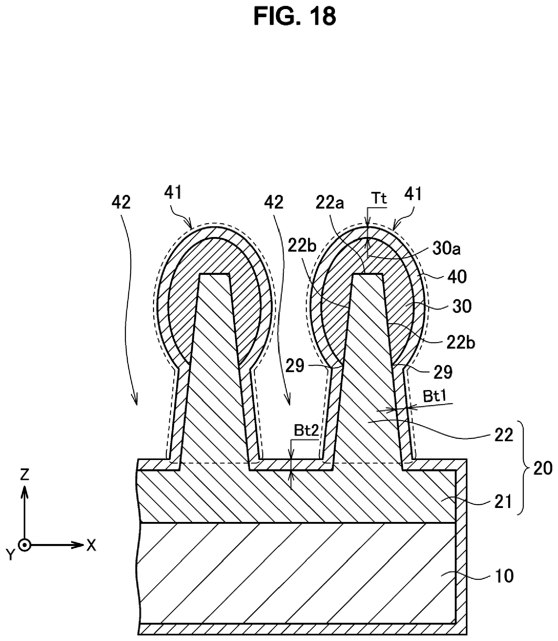

Next, a protection film 40 that covers surfaces of the grid structural body 20 and the reflection film 30 (functional film) of the wire grid polarizing element 1 according to the present embodiment will be described in more detail with reference to FIG. 7 and FIG. 8 described above as well as FIG. 18. FIG. 18 is an enlarged sectional view showing the wire grid polarizing element 1 covered by the protection film 40 according to the present embodiment.

### <6.1. Complicated Structure of Grid Structural Body Covered by Protection Film>

As shown in FIG. 7 and FIG. 8 described earlier, the wire grid polarizing element 1 according to the present embodiment includes the protection film 40 that covers the entire surface of the wire grid polarizing element 1. The protection film 40 is made of an inorganic material, for example, a dielectric material such as SiO₂ or Al₂O₃. This protection film 40 is deposited so as to cover the entire surfaces of the grid structural body 20 and the reflection film 30. In more detail, the protection film 40 is deposited on the entire surface of the polarizing element 1 so as to continuously cover surfaces of exposed portions of the base part 21 and the ridge portions 22 of the grid structural body 20 as well as a surface of an exposed portion of the reflection film 30 covering and wrapping the upper side of the ridge portion 22. The protection film 40 is made of an inorganic material such as an inorganic oxide, for example. The inorganic oxide may be, for example, a dielectric material such as SiO₂ or Al₂O₃ or may be a metal oxide such as Al₂O₃. Al₂O₃ is a dielectric material and also a metal oxide. The dielectric material is a material constituting a dielectric. The dielectric has properties of transmitting no direct current, but being polarized by an alternating current electric field to store electricity. Al₂O₃ has, for example, a dielectric constant of about 9.9 and SiO₂ has, for example, a dielectric constant of about 3.9.

By providing the protection film 40, the surfaces of the grid structural body 20 and the reflection film 30 of the polarizing element 1 can be protected. The grid structural body 20 and the reflection film 30 can thereby be increased in abrasion resistance, antifouling property, and waterproofness.

In particular, because of being formed of an organic material such as resin, the grid structural body 20 is more likely to degrade due to heat, light, water, or the like than the substrate 10 formed of an inorganic material such as glass. By covering the grid structural body 20 made of resin by the protection film 40 made of an inorganic material with no gap therebetween, the grid structural body 20 can be protected from external heat, air, water, or the like (barrier properties). This can restrain resin of the grid structural body 20 from being altered or degrading due to heat, air, water, or the like. In addition, as shown in FIG. 7 and FIG. 8, covering the outermost surface of the polarizing element 1 by the protection film 40 made of an inorganic oxide or the like enables the thermal resistance R of the entire polarizing element 1 to be reduced further, which can further improve the heat dissipation of the polarizing element 1.

In the meantime, as described above, the polarizing element 1 according to the present embodiment is a wire grid polarizing element of the hybrid type in which the substrate 10 made of an inorganic material and the grid structural body 20 made of an organic material are combined. Further, as shown in FIG. 18, a grid 41 (the entire protruding structural body in which the ridge portion 22 and the reflection film 30 are combined) of the polarizing element 1 according to the present embodiment has the special tree shape described above. Therefore, a valley 42 having a complicated shape is formed between the grids 41, 41 adjacent to each other. As a result, the surface of the grid structural body 20 of the polarizing element 1 has a complicated concave-convex structure in which a plurality of convexities (the grids 41) and a plurality of concavities (the valleys 42) are mixed.

The grid structural body 20 having such a complicated concave-convex structure and the protection film 40 that covers the grid structural body 20 will be described in detail again with reference to FIG. 18.

As shown in FIG. 18, the grid structural body 20 is obtained by integrally forming the base part 21 provided on the substrate 10 and the plurality of ridge portions 22 protruding from the base part 21. The grid structural body 20 is formed of an organic material such as resin, and the substrate 10 is formed of an organic material such as glass. The ridge portion 22 of the grid structural body 20 has the upward narrowing shape that narrows in width in the X direction with distance from the base part 21 in the upward direction (the Z direction).

The reflection film 30 (functional film) is made of a metal material such as Al and covers only the leading end part side of the ridge portion 22. In detail, the reflection film 30 covers and wraps the leading end 22a and the upper side of both the side surfaces 22b, 22b of the ridge portion 22 and does not cover the lower side of both the side surfaces 22b, 22b of the ridge portion 22 and the surface of the base part 21. The coverage rate (Rc) of both the side surfaces 22b, 22b of the ridge portion 22 obtained by the reflection film 30 is more than or equal to 30% and less than or equal to 70%.

The surface of the reflection film 30 covering and wrapping the upper side of the ridge portion 22 in this manner is rounded and bulges in the width direction (the X direction in FIG. 1) of the ridge portion 22. The maximum width (W_{MAX}) of the reflection film 30 covering and wrapping the ridge portion 22 is more than or equal to the width (W_{B}) of the lower side of the ridge portion 22. As shown in FIG. 18, a sectional shape of the entire protruding structural body (that is, the grid 41) composed of the ridge portion 22 and the reflection film 30 has the special tree shape described above. This special tree shape has constricted portions 29, 29 at positions immediately under lower ends on both the left and right sides of the reflection film 30 covering and wrapping the ridge portion 22, and the width in the width direction (the X direction) of the entire protruding structural body (that is, the grid 41) is narrowed at the positions of the constricted portions 29, 29.

As described above, the grid 41 of the grid structural body 20 according to the present embodiment has the reflection film 30 that roundly bulges in the X direction at the upper side of the ridge portion 22, the constricted portions 29, 29 recessed inwardly in the X direction at the positions of the lower end of the reflection film 30, and the lower side of the ridge portion 22 not covered by the reflection film 30. Therefore, the grid 41 has a complicated sectional shape like a single tree. The grid 41 having such a special tree shape enables the polarization splitting properties (Tp × Rs properties) for oblique incident light to be improved as described above.

Then, the valley 42 having a complicated shape is formed between the grids 41, 41 adjacent to each other in the X direction. The valley 42 is a concavity formed between the grids 41, 41 adjacent to each other. An upper part of the valley 42 is a space interposed between the reflection films 30, 30 on both the left and right sides and is open upward. A bottom part of the valley 42 is a semi-closed space surrounded in three directions by the ridge portions 22, 22 on both the left and right sides and the base part 21 on the bottom side.

The width in the X direction of the upper part of the valley 42 is narrow, and the width in the X direction of the bottom part of the valley 42 is wide. That is, at the upper part of the valley 42, the reflection films 30, 30 on both the sides thereof bulge. Therefore, the grids 41, 41 on both the sides of the upper part of the valley 42 are close to each other, so that the width of the upper part of the valley 42 is narrow. On the other hand, at the bottom part of the valley 42, the lower side of the side surfaces 22b, 22b of the ridge portions 22, 22 on both the sides thereof is not covered by the reflection film 30. Therefore, the grids 41, 41 on both the sides of the bottom part of the valley 42 are apart from each other because of the absence of the reflection film 30, so that the width of the bottom part of the valley 42 is wide. In this manner, the sectional shape (the X-Z section) of the valley 42 has such a vase-type shape that an entrance on the upper side is narrow and the semi-closed space on the bottom side is wide.

As described above, in the polarizing element 1 according to the present embodiment, the plurality of grids 41 have a complicated structure having the special tree shape. The valley 42 between the grids 41, 41 adjacent to each other is the semi-closed space also having a complicated vase-type shape accordingly. Consequently, the surface of the polarizing element 1 has a complicated concave-convex structure composed of these plurality of grids 41 and the plurality of valleys 42. Consequently, it is difficult to cover the entire surface of the complicated concave-convex structure by the protection film 40 having a uniform film thickness, so that the protection film 40 has problems as will be described in detail in the next section.

### <6.2. Problems of Protection Film>

As shown in FIG. 18, the protection film 40 continuously covers the entire surface of the complicated concave-convex structure composed of the plurality of grids 41 and the plurality of valleys 42 described above. That is, the protection film 40 continuously covers the surface of the grid 41 (that is, a surface including the surface of the reflection film 30 and the lower side of both the side surfaces 22b, 22b of the ridge portion 22 not covered by the reflection film 30) and the bottom surface of the valley 42 (that is, an upper side surface of the base part 21). In the case of continuously covering the entire surfaces of the grid 41 and the valley 42 of the grid structural body 20 by the protection film 40 in this manner, it is ideal to deposit the protection film 40 having a uniform thickness on the entire surfaces.

However, when the protection film 40 is deposited on the surfaces of the grid 41 and the valley 42, a deposition material is easy to adhere to the leading end part of the grid 41 protruding in the upward direction but is difficult to enter into the valley 42 having the complicated vase-type shape. Thus, an adhering amount of the deposition material is likely to fluctuate between the surface of the leading end part of the grid 41 and the surface of the valley 42 on the bottom side. Thus, it is very difficult to deposit the extremely thin protection film 40 on the order of several nanometers to several tens of nanometers in a uniform film thickness on the entire surface of the complicated concave-convex structure composed of these grids 41 and the valleys 42 by an existing deposition method.

For example, Patent Literature 2 above (JP 2014-085516A) describes depositing a covering layer on the surface of the wire grid polarizing plate by a sputtering method. In the sputtering method, however, the deposition material has a strong straight traveling property when being deposited, so that the deposition material poorly adheres to the micro concave-convex structure, resulting in a decrease in uniformity of the film thickness. Particularly in the case of the complicated micro concave-convex structure composed of the grid 41 having the above-described special tree shape and the valley 42 having the vase-type shape as in the present embodiment, it is extremely difficult to deposit the protection film 40 in a uniform film thickness by the sputtering method. That is, adhesion of the deposition material to sidewalls on the lower side of the grid 41 having the above-described special tree shape (the lower side of the side surfaces 22b of the ridge portion 22) and the bottom surface of the valley 42 having the vase-type shape (the upper surface of the base part 21) considerably deteriorates. Therefore, it is extremely difficult to deposit the protection film 40 in a uniform film thickness.

As described above, it is very difficult to uniformly deposit the extremely thin protection film 40 on the entire surface of the complicated micro concave-convex structure according to the present embodiment although it is ideal that the film thickness of the protection film 40 should be uniform. Therefore, the film thickness of the protection film 40 deposited by an existing deposition method is actually not uniform, and the deposited protection film 40 inevitably has thickness unevenness.

In this respect, stably covering the grid structural body 20 and the reflection film 30 by the thick protection film 40 increases the barrier properties of the thick protection film 40 for the grid structural body 20 and the like. This can restrain resin constituting the grid structural body 20 from degrading over time due to external heat, light, water, or the like, thereby ensuring reliability (heat tolerance and light tolerance) of the grid structural body 20. However, an excessively large thickness of the protection film 40 raises the problem of a decrease in the optical properties of the polarizing element 1, in particular, the transmissivity (Tp properties) and polarization splitting properties (Tp × Rs properties) of the grid structural body. On the other hand, an excessively small thickness of the protection film 40 raises the problem of degradation in resin of the grid structural body 20 due to heat, light, or the like, so that the reliability (heat tolerance and light tolerance) of the grid structural body 20 decreases. In this manner, the optical properties and reliability of the polarizing element 1 have a trade-off relationship depending on the thickness of the protection film 40.

Thus, the inventors of the present application have made an earnest effort to ascertain such an acceptable range of thickness unevenness of the protection film 40 that, in the case where the surface of the grid structural body 20 having a complicated micro concave-convex structure as shown in FIG. 18 is covered by the thin protection film 40 having a thickness of approximately several nanometers to several tens of nanometers, resin of the grid structural body 20 can be restrained from degrading to improve reliability with the optical properties of the polarizing element 1 being maintained. The inventors then have yielded the polarizing element 1 in which the thickness of the protection film 40 is optimized within the acceptable range.

### <6.3. Optimized Thickness of Protection Film>

Next, an optimized thickness (film thickness) of the protection film 40 in the wire grid polarizing element 1 according to the present embodiment will be described with reference to FIG. 18.

As shown in FIG. 18, the protection film 40 of the polarizing element 1 according to the present embodiment continuously covers the surface of the reflection film 30 as well as the lower side of both the side surfaces 22b, 22b of the ridge portion 22 (that is, the surface of the grid 41) and the surface of the base part 21 (that is, the bottom surface of the valley 42). The protection film 40 may be a thin film of a single-layer structure composed of a single covering material, or may be a thin film of a laminate structure of a plurality of layers composed of a plurality of types of covering materials.

The thickness (film thickness) of the protection film 40 preferably is 6 to 10 nm.

As a method for measuring the thickness (film thickness) of the protection film 40, the following measuring method can be used, for example. After the protection film 40 is deposited on the entire surface of the grid structural body 20 in which the ridge portion 22 is covered by the reflection film 30 to produce a sample of the polarizing element 1, a cross-section of the sample is observed using a transmission electron microscope (TEM). Then, data on a sectional image of the sample obtained by the observation is captured into a length measuring application to measure the thickness of the protection film 40. On this occasion, the thicknesses of the protection films 40 in the plurality of (for example, three or more) grids 41 are measured per sample, and an average value of measured values of these thicknesses is used as the thickness (film thickness) of the protection film 40.

Note that the method for measuring the thickness (film thickness) of the protection film 40 is not limited to such a measuring method, and the thickness (film thickness) of the protection film 40 may be measured when a cross-section of a sample is observed using the above-described transmission electron microscope, for example. In addition, the above-described measuring method may also be applied to measurement of thicknesses Tt and Bt of the protection film 40 at respective portions of the grid 41 which will be described below.

A ratio "Bt/Tt" of the thicknesses of the protection film 40 according to the present embodiment preferably satisfies Expression (10) below.
$Bt / Tt \geq 0.85$
Tt: thickness of the protection film 40 that covers a top 30a of the reflection film 30 covering and wrapping the ridge portion 22
Bt: thickness of the protection film 40 that covers the lower side of both the side surfaces 22b, 22b of the ridge portion 22 and the surface of the base part 21
Bt1: thickness of the protection film 40 that covers the lower side of both the side surfaces 22b, 22b of the ridge portion 22
Bt2: thickness of the protection film 40 that covers the surface of the base part 21

As shown in FIG. 18, Tt is the thickness of the protection film 40 that covers the top 30a of the reflection film 30 covering the leading end 22a of the ridge portion 22 in the leading end part of the grid 41. In other words, Tt is the thickness of the protection film 40 that covers the metal material portion of the leading end part of the grid 41 (the top 30a of the reflection film 30 made of a metal material such as Al).

On the other hand, Bt is the thickness of the protection film 40 that covers the resin portion on the lower side of the grid structural body 20 (in the ridge portion 22 and the base part 21 made of resin, a portion where resin is exposed without being covered by the reflection film 30). In other words, Bt is the thickness of the protection film 40 that covers a surface of a substantially cup-shaped portion where resin of the grid structural body 20 is exposed in the bottom part of the valley 42 between the grids 41, 41 adjacent to each other (the lower side of the side surfaces 22b, 22b of the opposed two of the ridge portions 22, 22 and the surface of the base part 21).

Herein, Bt preferably is an average value of Bt1 and Bt2 shown in FIG. 18. Bt1 is a thickness of the protection film 40 that covers the lower side of the side surfaces 22b of the ridge portion 22. Bt2 is a thickness of the protection film 40 that covers the surface of the base part 21 (the bottom surface of the valley 42). Bt1 and Bt2 are both thicknesses of the protection film 40 deposited on the bottom part of the valley 42. Therefore, it is considered that Bt1 and Bt2 are substantially the same thickness (Bt ≈ Bt1 ≈ Bt2) irrespective of the method for depositing the protection film 40. However, actually there may be cases in which Bt1 and Bt2 are slightly different. In this case, it is preferable to obtain an average value of Bt1 and Bt2 as measured and use the obtained average value as Bt (Bt = Average(Bt1,Bt2)). The use of the average value enables the thickness Bt of the protection film 40 that covers the exposed portion of resin of the grid structural body 20 in the bottom part of the valley 42 to be obtained more correctly. Note that the method for calculating Bt is not limited to such an example, and it may be set such that Bt = Bt1 holds or such that Bt = Bt2 holds, for example.

"Bt/Tt" in Expression (10) above is a ratio of Bt to Tt. When the value of "Bt/Tt" is 1, it means that Bt and Tt have the same value and that the thickness Tt of the protection film 40 that covers the leading end part of the grid 41 and the thickness Bt of the protection film 40 that covers the bottom part of the valley 42 are completely uniform. On the other hand, as the value of "Bt/Tt" is away from 1, it means that the difference between Bt and Tt increases, which causes thickness unevenness between the thickness Tt of the protection film 40 that covers the leading end part of the grid 41 and the thickness Bt of the protection film 40 that covers the bottom part of the valley 42.

When "Bt/Tt" satisfies Expression (10) above, the resin portion of the grid structural body 20 can be restrained from degrading with the optical properties (for example, high Tp properties and high Tp × Rs properties) required of the polarizing element 1 being maintained, which can improve reliability (heat tolerance and light tolerance) of the polarizing element 1.

When "Bt/Tt" is less than 0.85, the thickness Bt of the protection film 40 that covers the bottom part of the valley 42 becomes thinner to decrease the barrier properties, so that reliability (heat tolerance and light tolerance) of the grid structural body 20 decreases. Thus, "Bt/Tt" preferably is more than or equal to 0.85 in order to ensure reliability (heat tolerance and light tolerance) of the grid structural body 20 when used for more than or equal to a predetermined time period.

Further, the ratio "Bt/Tt" of the thicknesses of the protection film 40 according to the present embodiment more preferably satisfies Expression (11) below.
$0.85 \leq Bt / Tt \leq 1.07$

If "Bt/Tt" is more than 1.07, the thickness Bt of the protection film 40 that covers the valley 42 is extremely thick, so that the valley 42 is filled with the protection film 40, which might cause the optical properties to degrade. Thus, "Bt/Tt" preferably is less than or equal to 1.07 in order to restrain the valley 42 from being filled with the protection film 40 to maintain the required optical properties.

Further, the ratio "Bt/Tt" of the thicknesses of the protection film 40 according to the present embodiment more preferably satisfies Expression (12) below.
$1.00 < Bt / Tt \leq 1.07$

If "Bt/Tt" is more than 1.00, it can be said that the organic material portion of the grid structural body 20 not covered by the reflection film 30 can be protected by the protection film 40. Thus, the organic material portion can be restrained from degrading to further improve reliability (heat tolerance and light tolerance) of the grid structural body 20.

As described above, the thickness of the protection film 40 of the polarizing element 1 according to the present embodiment preferably satisfies Expression (10), more preferably satisfies Expression (11), and still more preferably satisfies Expression (12). Accordingly, in the case of covering the grid structural body 20 having a complicated concave-convex structure as shown in FIG. 18 by the thin protection film 40, the grid 41 and the valley 42 of the grid structural body 20 can be appropriately covered by the protection film 40 within the acceptable range of thickness unevenness of the protection film 40 necessary for achieving both the optical properties and reliability of the polarizing element 1. Accordingly, in the case where the polarizing element 1 is used as a polarizing beam splitter, for example, the resin portion of the grid structural body 20 can be restrained from degrading with the required optical properties (Tp properties and Tp × Rs properties) of the polarizing element 1 being maintained, which can improve reliability (heat tolerance and light tolerance) of the polarizing element 1.

In addition, it is not necessary to deposit the protection film 40 in a completely uniform thickness, which actually enables the protection film 40 to be deposited with thickness unevenness within the above-described acceptable range using an ALD method which will be described later, for example.

### <6.4. Material and Layer Structure of Protection Film>

Next, a material and a layer structure of the protection film 40 according to the present embodiment will be described.

The material of the protection film 40 is not limited to a particular material as long as the optical properties of the polarizing element 1 can be maintained and reliability (for example, light tolerance and heat tolerance) can be increased. Examples of the material of the protection film 40 include dielectric materials, inorganic oxides such as metal oxides, silane-based water-repellent materials, fluorinated water-repellent materials, and the like. Dielectric materials are, for example, Si oxides, Hf oxides, and the like. Metal oxides are, for example, Al oxides and the like. When the protection film 40 contains an inorganic oxide, the abrasion resistance of the polarizing element 1 and the barrier properties that protect the grid structural body 20 from heat, light, water, or the like can be increased further. When the protection film 40 contains a water-repellent material such as a fluorinated water-repellent material, the antifouling property and waterproofness of the polarizing element 1 can be increased further.

In particular, the protection film 40 preferably has a single-layer structure made of SiO₂. Accordingly, the use of SiO₂ as the material of the protection film 40 enables coverage by the protection film 40 having high transmittance in a wide wavelength range.

Alternatively, the protection film 40 preferably has a laminate structure including a first layer made of Al₂O₃ and a second layer made of SiO₂. Accordingly, the protection film 40 can combine high barrier properties derived from Al₂O₃ and high transmittance derived from SiO₂.

Note that the protection film 40 is not limited to the above-described example, and may be formed of another inorganic oxide and metal oxide other than SiO₂ and Al₂O₃, or may may have a laminate structure of three or more layers. For example, the protection film 40 may further contain a water-repellent coating or an oleophobic coating. The antifouling property and waterproofness of the polarizing element 1 can thereby be increased further.

### <6.5. Method for Depositing Protection Film>

Next, the method for depositing the protection film 40 in the method for manufacturing the polarizing element 1 according to the present embodiment will be described in detail.

As described above, the method for manufacturing the wire grid polarizing element 1 according to the present embodiment includes the grid structural body material forming step (S10), the nano-imprinting step (S12), the grid structural body forming step (S14), and the reflection film forming step (S16) shown in FIG. 11, and may further include a step (S18) of depositing the protection film 40.

The step (S18) of depositing the protection film 40 is a step of depositing the protection film 40 that covers the entire surface of the polarizing element 1 (the entire surfaces of the grid structural body 20 and the reflection film 30). In this deposition step (S18), the protection film 40 is deposited such that the protection film 40 continuously covers the surface of the reflection film 30 and the lower side of both the side surfaces 22b, 22b of the ridge portion 22 (that is, the entire surface of the grid 41) and the surface of the base part 21 (that is, the bottom surface of the valley 42) as shown in FIG. 18.

In the step (S18) of depositing the protection film 40 according to the present embodiment, an atomic layer deposition (ALD) method is used as the deposition method. The ALD method is a thin film forming technology utilizing a continuous chemical reaction of a gas phase. The ALD method is a method for repeating alternate introduction and exhaust of two or more types of gas-phase raw materials (precursors referred to as precursors) into and from a reaction chamber and causing raw material molecules adsorbed to a surface of a deposition target (covering target surface) to react to turn into a film. In the ALD method, different types of precursors do not enter the reaction chamber simultaneously unlike the CVD method, and the precursors are introduced (pulse) and exhausted (purged) in independent steps, respectively. The precursor molecules behave in a self-controlling manner on the covering target surface at each pulse, and the reaction terminates at a time point when there is no more site to which the precursor molecules can be adsorbed.

The ALD method can carefully control the film thickness and material in an atomic layer level, which advantageously enables extremely thin and uniform deposition as compared with the CVD method. Consequently, in the case of depositing the protection film 40 on the entire surface of the complicated micro concave-convex structure of the grid structural body 20 in the deposition step (S18) according to the present embodiment, the protection film 40 preferably is deposited by the ALD method. This enables the protection film 40 to be deposited substantially uniformly on the entire surface of the complicated micro concave-convex structure.

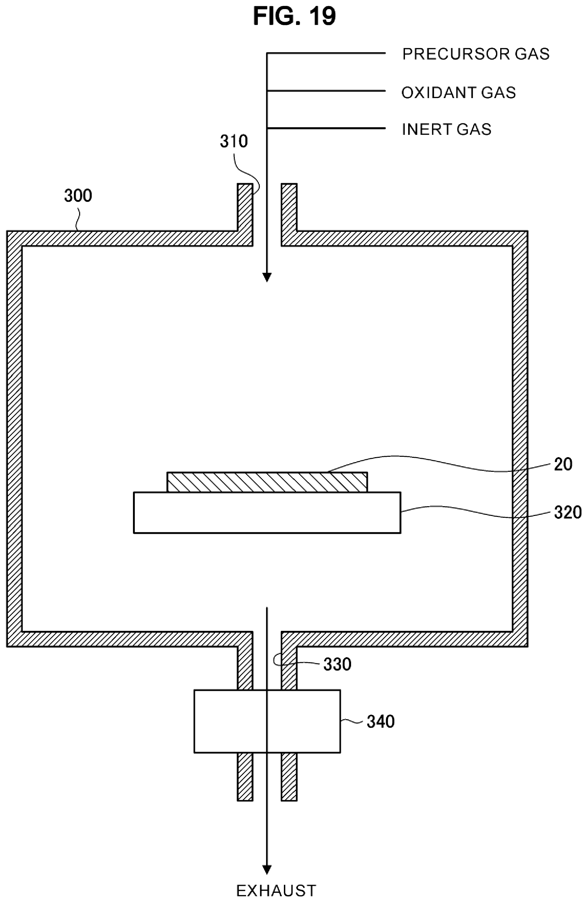

Herein, the step (S18) of depositing the protection film 40 by the ALD method according to the present embodiment will be described in detail with reference to FIG. 19. FIG. 19 is a schematic diagram showing the step (S18) of depositing the protection film 40 by the ALD method according to the present embodiment.

First, a configuration of a chamber 300 to be used in the step (S18) of depositing the protection film 40 by the ALD method according to the present embodiment will be described. As shown in FIG. 19, the chamber 300 forms a processing space for performing the above-described deposition processing by the ALD method. In the chamber 300, the grid structural body 20 is arranged. The chamber 300 includes a gas inlet 310, a jig 320, a gas outlet 330, and a vacuum pump 340.

The gas inlet 310 is an opening for introducing (pulse) gas such as gas-phase raw materials (for example, a precursor and an oxidant) into the chamber 300. The gas inlet 310 is provided in an upper part of the chamber 300, for example. Respective valves (neither shown) for precursor gas, oxidant gas, and inert gas are switched to introduce gas through the gas inlet 310.

The jig 320 holds the grid structural body 20 in the state where the ridge portion 22 is covered by the reflection film 30 (the state before deposition of the protection film 40) in the chamber 300. As shown in FIG. 19, the grid structural body may be held by the single jig 320. In order to improve the efficiency of the deposition processing, a plurality of the grid structural bodies 20 may be held by the single jig 320.

The gas outlet 330 is an opening for exhausting gas in the chamber 300 to the outside of the chamber 300. The gas outlet 330 is provided in a lower part of the chamber 300, for example. The gas outlet 330 is provided with an exhaust valve not shown. The exhaust valve opens or closes the gas outlet 330. The gas outlet 330 is also provided with the vacuum pump 340. When the vacuum pump 340 is operated, gas in the chamber 300 can be exhausted (purged) to the outside through the gas outlet 330.

Next, the step (S18) of depositing the protection film 40 by the ALD method according to the present embodiment in which the above-described chamber 300 is used will be described.

In the deposition step (S18) according to the present embodiment, first, the grid structural body 20 in the state where the ridge portion 22 is covered by the reflection film 30 (the state before deposition of the protection film 40) is arranged in the chamber 300 (S180) as shown in FIG. 19.

Then, first to fourth steps (S181 to S184) of alternately introducing (pulse) and exhausting (purging) gas of two types of gas-phase raw materials (hereinafter referred to as "precursor gas" and "oxidant gas", respectively) for depositing the protection film 40 into and from the chamber 300 are repeated.

Specifically, first, the precursor gas (first precursor gas) is introduced into the chamber 300 through the gas inlet 310 (S181: first step). Accordingly, the introduced precursor gas adsorbs to the surface of the grid structural body 20 (a covering target surface) to cause a chemical reaction, thereby producing a first atomic layer on the covering target surface.

Then, inert gas is introduced into the chamber 300 through the gas inlet 310 (S182: second step). Excess precursor gas (residual gas) in the chamber 300 is thereby flushed with the inert gas, so that the excess precursor gas is exhausted through the gas outlet 330 to the outside. As a result, an excess precursor component is removed from the inside of the chamber 300.

Further, the oxidant gas (second precursor gas) is introduced into the chamber 300 through the gas inlet 310 (S183: third step). This causes the precursor of the first atomic layer deposited on the covering target surface of the grid structural body 20 and the introduced oxidant gas to chemically react with each other to bind oxygen to the precursor, thereby producing a second atomic layer on the above-described first atomic layer.

Then, inert gas is introduced into the chamber 300 through the gas inlet 310 (S184: fourth step). Excess oxidant gas (residual gas) in the chamber 300 is thereby flushed with the inert gas, so that the excess oxidant gas is exhausted through the gas outlet 330 to the outside. As a result, an excess oxidant component is removed from the inside of the chamber 300.

Thereafter, alternate introduction and exhaust of the precursor gas and the oxidant gas into and from the chamber 300 (S181 to S184: the first to fourth steps) are repeated as described above. The first atomic layer and the second atomic layer can thereby be alternately deposited on the covering target surface of the grid structural body 20 to deposit the protection film 40 of a desired material.

For example, in the case of depositing the protection film 40 having a single-layer structure made of SiO₂, alkylaminosilylamine and ozone are used as the two types of gas-phase raw materials (precursor and oxidant). Alternatively, in the case of depositing the protection film 40 having a single-layer structure made of Al₂O₃, trimethyl aluminum (TMA) and water are used as the two types of gas-phase raw materials (precursor). Alternatively, in the case of depositing the protection film 40 having a laminate structure including a first covering layer made of Al₂O₃ and a second covering layer made of SiO₂, the first covering layer having a single-layer structure made of Al₂O₃ may be deposited, and then the second covering layer having a single-layer structure made of SiO₂ may be deposited on the first covering layer.

Further, in the deposition step (S18) by the special ALD method according to the present embodiment, the precursor gas and the oxidant gas are introduced into and fills the chamber without the precursor gas and the oxidant gas being exhausted respectively from the chamber 300 to the outside in the precursor gas introducing step (S181) and the oxidant gas introducing step (S183).

In this respect, in a deposition step by a conventionally common ALD method, precursor gas and oxidant gas are introduced into the chamber 300 while exhausting the precursor gas and the oxidant gas in the chamber 300 in the precursor gas introducing step and the oxidant gas introducing step (S181, S183).

In contrast to this, in the deposition step (S18) by the special ALD method according to the present embodiment, the precursor gas and the oxidant gas are continuously introduced into the chamber 300 in the precursor gas introducing step and the oxidant gas introducing step (S181, S183: the first and third steps) without the precursor gas and the oxidant gas in the chamber 300 being exhausted through the gas outlet 330. Specifically, in the precursor gas introducing step (S181: the first step), the precursor gas is introduced into the chamber 300 through the gas inlet 310 in a state where the exhaust valve of the gas outlet 330 is closed to bring the chamber 300 into a sealed state, and the precursor gas in the chamber 300 is not exhausted through the gas outlet 330. Similarly, in the oxidant gas introducing step (S183: the third step), the oxidant gas is introduced into the chamber 300 through the gas inlet 310 in a state where the exhaust valve of the gas outlet 330 is closed to bring the chamber 300 into the sealed state, and the oxidant gas in the chamber 300 is not exhausted through the gas outlet 330.

Accordingly, in the respective introducing steps (S181 and S183), the precursor gas and the oxidant gas introduced into the chamber 300 can be caused to sufficiently fill and stay in the chamber 300 to sufficiently come into contact with the covering target surface of the grid structural body 20. Consequently, the precursor gas and the oxidant gas can be sufficiently introduced deep into the valley 42 having the vase-type shape on the surface of the complicated micro concave-convex structure composed of the grids 41 and the valleys 42 shown in FIG. 18 to appropriately deposit the first and second atomic layers having necessary layer thicknesses. Thus, the protection film 40 having a desired film thickness can be deposited not only on the surface of the leading end part of the grid 41 but also on the surface of the valley 42 having the vase-type shape.

Hence, the thickness Tt of the protection film 40 that covers the leading end part of the grid 41 (that is, the metal portion of the top 30a of the reflection film 30) and the thickness Bt of the protection film 40 that covers the surface of the bottom part of the valley 42 (that is, the resin portion of the grid structural body 20) can be made substantially equivalent to each other, so that the protection film 40 that satisfies Expression (10) above can be deposited. As a result, uniformity of the thickness of the protection film 40 deposited by the ALD method according to the present embodiment can be improved further than in the case of the conventionally common ALD method. Thus, the protection film 40 more excellent in uniformity can be deposited within the acceptable range of thickness unevenness defined by Expression (10) above.

The step (S18) of depositing the protection film 40 by the ALD method in the method for manufacturing the polarizing element 1 according to the present embodiment has been described above in detail. According to the present embodiment, the ALD method can be used as the method for depositing the protection film 40, and deposition conditions (conditions related to introduction and exhaust of the precursor gas and the oxidant gas) in the precursor gas introducing step and the oxidant gas introducing step (S181, S183) by the ALD method can be optimized in accordance with the complicated micro concave-convex structure of the above-described grid structural body 20.

The extremely thin protection film 40 on the order of several nanometers to several tens of nanometers can thereby be deposited very uniformly on the entire surface of the complicated micro concave-convex structure. Thus, the extremely uniform thin protection film 40 can be deposited within the acceptable range of thickness unevenness of the protection film 40 defined by Expression (10) above. Accordingly, the grid structural body 20 can be strongly protected by the protection film 40. Thus, reliability (heat tolerance and light tolerance) of the polarizing element 1 can be improved with the optical properties of the polarizing element 1 including the protection film 40 being maintained.

In this respect, in the case of using the sputtering method, vacuum evaporation method, or CVD method, which is a conventional deposition method, it is difficult to appropriately deposit the protection film on the surface of the complicated micro concave-convex structure as in the present embodiment. For example, in the sputtering method, the straight traveling property of the deposition material is high as described above. Thus, adhesion of the deposition material to a portion of the complicated micro concave-convex structure which is shadowed with respect to a direction in which the deposition material travels is poor, which makes it difficult to deposit the uniform protection film 40. In addition, also in the vacuum evaporation method, adhesion of the deposition material is poor, which makes it difficult to deposit the uniform protection film 40. In addition, in the CVD method, a deposition temperature is as high as more than or equal to several hundred degrees C although adhesion of the deposition material is good, so that resin of the grid structural body 20 is softened, which breaks the micro concave-convex structure.

In contrast to this, according to the present embodiment, the use of the ALD method as the deposition method results in good adhesion of the deposition material to the micro concave-convex structure, which can considerably improve uniformity of the protection film 40 as compared with the conventional sputtering method and vacuum evaporation method. Further, the ALD method according to the present embodiment enables the protection film 40 to be deposited at low deposition temperature (for example, less than or equal to 190°) lower than a heat resisting temperature (for example, 200°) of resin of the grid structural body 20. Accordingly, resin of the grid structural body 20 is difficult to soften when the protection film 40 is deposited, so that the micro concave-convex structure of the grid structural body 20 can be held. Further, reliability (heat tolerance and light tolerance) of the grid structural body 20 covered by the protection film 40 can also be considerably improved as compared with the conventional deposition methods.

Note that the conditions for deposition by the ALD method according to the present embodiment include capacity of the chamber 300, types of gas used, flow rates of the gas, deposition temperature, whether or not exhaust is performed, state of the grid structural body 20 arranged in the chamber 300, and the like. These conditions can be set at optimum values as appropriate so as to satisfy desired deposition conditions.

### <7. Reinforcement Film>

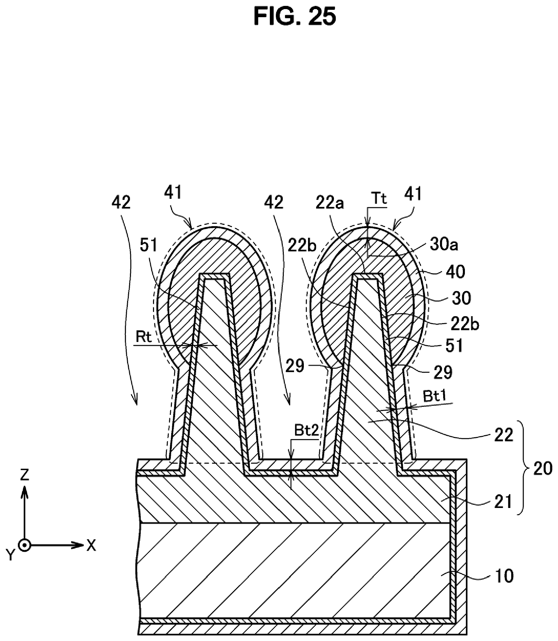

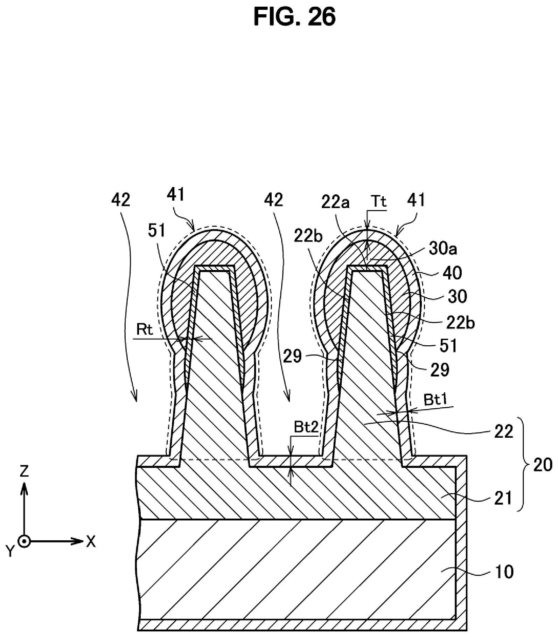

Next, a reinforcement film 51 that is provided between the grid structural body 20 and the reflection film 30 (functional film) of the wire grid polarizing element 1 according to the present embodiment will be described with reference to FIG. 25 and FIG. 26 described above. FIG. 25 is an enlarged sectional view showing the wire grid polarizing element 1 including the reinforcement film 51 that covers the entire grid structural body 20 according to the present embodiment. FIG. 26 is an enlarged sectional view showing the wire grid polarizing element 1 including the reinforcement film 51 that covers part of the ridge portion 22 of the grid structural body 20 according toa modification example of the present embodiment.

### <7.1. Overview of Reinforcement Film>

As described above, the greater height H (see FIG. 1, FIG. 3, and the like) of the ridge portion 22 of the grid structural body 20 according to the present embodiment is more preferable. For example, the height H is preferably 160 nm or more. The increased height H of the ridge portion 22 can improve the various optical properties (for example, the Tp properties, the Tp × Rs properties, and the contrast (CR)) required of the wire grid polarizing element 1.

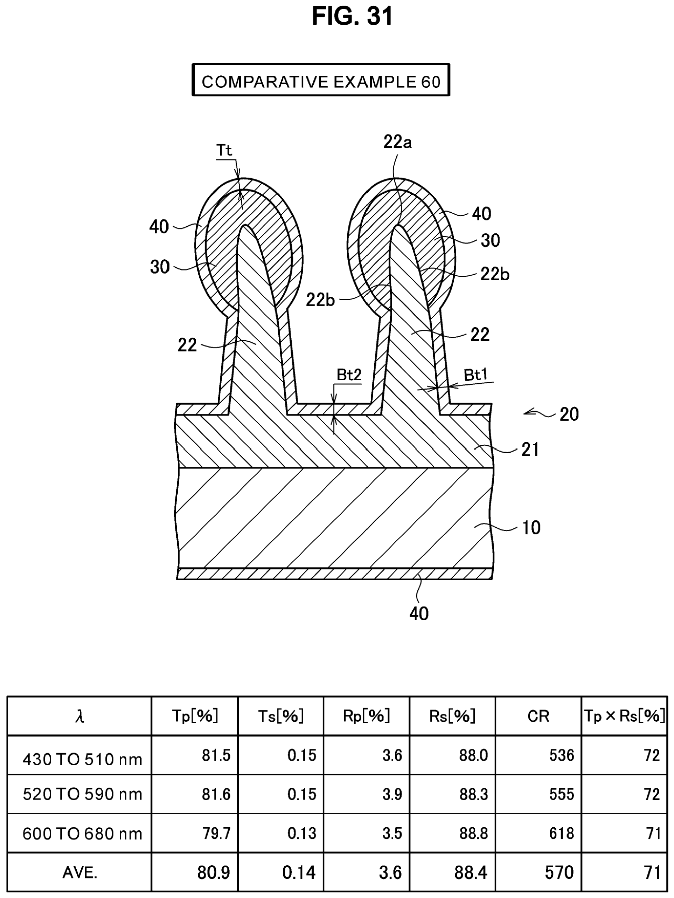

The ridge portion 22 of the grid structural body 20 according to the present embodiment is, however, formed of an organic material (such as resin) lower in strength and heat tolerance than an inorganic material (such as glass). Further, the ridge portion 22 has an upward narrowing shape that narrows toward the leading end thereof. The ridge portion 22 formed of an organic material is therefore lower in rigidity and heat tolerance than the ridge portion 22 formed of an inorganic material. When the high-temperature reflection film 30 (a functional film made of metal such as Al) is deposited by a deposition method such as an vapor deposition method or a sputtering method to cover the leading end part of the ridge portion 22, the height H of the ridge portion 22 increased as described above thus causes the ridge portion 22 made of an organic material to be softened by heat and force applied when the reflection film 30 is deposited. The ridge portion 22 therefore fails to maintain the upward narrowing shape that extends straight upward (Z direction) and is inclined in the leftward and rightward directions (X direction) in some cases (see FIG. 31). When the ridge portion 22 is inclined due to the deposition of the reflection film 30 (functional film) that covers the ridge portion 22 in this manner, a problem arises that the various optical properties (for example, the Tp properties, the Tp × Rs properties, and the CR) required of the wire grid polarizing element 1 decrease.

Accordingly, to solve the problem, the wire grid polarizing element 1 according to the present embodiment is provided with the reinforcement film 51 between the upper part of the ridge portion 22 of the grid structural body 20 and the reflection film 30 (functional film) and the upper part of the ridge portion 22 is reinforced by the reinforcement film 51 as shown in FIG. 25 and FIG. 26. The reinforcement film 51 is made of an inorganic oxide such as a dielectric material and is more excellent in rigidity and heat tolerance than the resin of the ridge portion 22. The reinforcement film 51 is deposited to cover at least the upper part of the ridge portion 22. The reinforcement film 51 is interposed between the upper part of the ridge portion 22 made of resin and the reflection film 30 made of metal such as Al.

The upper part of the ridge portion 22 is reinforced by this reinforcement film 51. This can restrain the ridge portion 22 from being inclined in the leftward and rightward directions (X direction) due to heat and force applied to the ridge portion 22 when the reflection film 30 is deposited on the upper part of the ridge portion 22. The ridge portion 22 can thus maintain a desired shape that extends straight upward (Z direction). Therefore, the reflection film 30 supported by the ridge portion 22 is not also inclined. The reflection film 30 does not shield incident light against the design intent. It is thus possible to obtain the transmission properties and the reflection properties of the wire grid polarizing element 1 for incident light in accordance with the design intent. The optical properties (for example, the Tp properties, the Tp × Rs properties, and the CR) of the wire grid polarizing element 1 can be therefore improved.

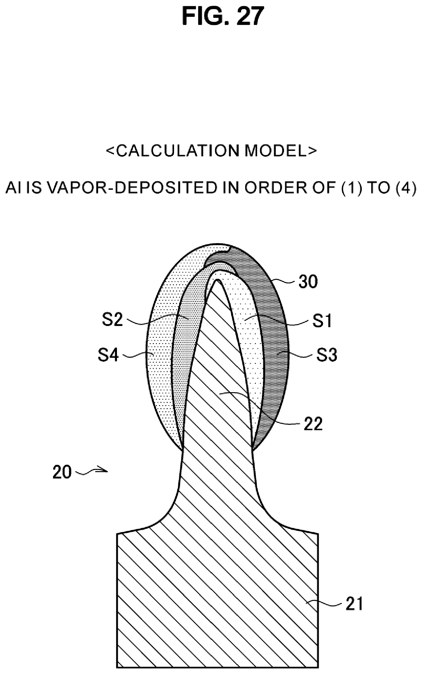

Here, the principle that the ridge portion 22 of the grid structural body 20 is inclined or narrowed due to the deposition of the reflection film 30 in a case where the reinforcement film 51 is not provided will be described with reference to FIG. 27 to FIG. 29.

A result of earnest consideration by the inventors of the present application shows that the ridge portion 22 is inclined in the leftward and rightward directions (X direction) (see FIG. 31) when the reflection film 30 is deposited on the upper part of the ridge portion 22 of the grid structural body 20 by vapor deposition or the like. One of possible reasons for this is that the ridge portion 22 is softened by heat applied when the reflection film 30 is vapor-deposited. In addition, another one of the possible reasons is that a high-temperature metal material (such as Al) for the reflection film 30 is vapor-deposited on the ridge portion 22 from above at an oblique angle (see FIG. 5) while alternating left and right, and accumulated stress (distortion) caused by the heat shrinkage of the vapor-deposited metal film (reflection film 30) thus applies force that inclines the ridge portion 22 toward the vapor deposition side.

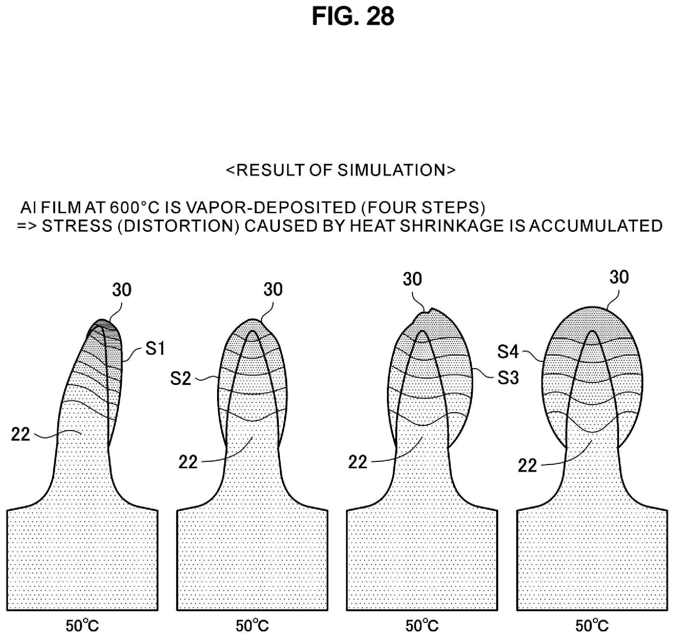

FIG. 27 and FIG. 28 use a model for the ridge portion 22 of the grid structural body 20 and the reflection film 30 to show a result of simulation of a deformation behavior of the ridge portion 22 inclined when the reflection film 30 is vapor-deposited. FIG. 27 is a schematic diagram showing a model in which the reflection film 30 is alternately vapor-deposited on the upper part of the ridge portion 22 from the left and the right. FIG. 28 is a schematic diagram showing a result of simulation of a deformation behavior of the ridge portion 22 using the above-described model. Note that the gradation in FIG. 28 shows the degree of displacement of the ridge portion 22 and the reflection film 30 at the time of vapor deposition.

In the model shown in FIG. 27, high-temperature Al is alternately vapor-deposited on the upper part of the ridge portion 22 from both the left and right sides. This deposits the reflection film 30 (Al film) such that the reflection film 30 covers and wraps the upper part of the ridge portion 22 from both the left and right sides. In the model shown in FIG. 27, for example, Al at 600°C is vapor-deposited on the upper part of the ridge portion 22 while alternating between left and right twice each in the order of S1 to S4 (vapor-deposited in four steps in total).

A result of simulation of a deformation behavior of the ridge portion 22 using this model shows that the heat shrinkage of the vapor-deposited Al film (reflection film 30) accumulates stress and the ridge portion 22 is deformed and inclined toward the vapor deposition side as shown in FIG. 28. Specifically, first, high-temperature Al was vapor-deposited on the right side of the ridge portion 22 and the ridge portion 22 was therefore inclined toward the right side on which the Al was vapor-deposited in the first vapor deposition (S1). Then, in the second vapor deposition (S2), high-temperature Al was vapor-deposited on the left side of the ridge portion 22 and the ridge portion 22 therefore returned straight. Further, in the third vapor deposition (S3), high-temperature Al was vapor-deposited again on the right side of the ridge portion 22 and the ridge portion 22 was therefore inclined to the right again. Thereafter, in the fourth vapor deposition (S4), high-temperature Al was vapor-deposited again on the left side of the ridge portion 22 and the ridge portion 22 therefore returned straight again. Note that the ridge portion 22 returned straight after the fourth vapor deposition (S4) as a result of the simulation in FIG. 28, but the ridge portion 22 remained inclined in a sample that was an implemented product in which the Al film was actually vapor-deposited on the ridge portion 22.

When Al is vapor-deposited on the ridge portion 22 from above at an oblique angle in this manner while alternating between left and right, the vapor-deposited Al film (reflection film 30) repeatedly undergoes a high-temperature state immediately after vapor deposition and a decreased-temperature state on standby alternately. On that occasion, the thermal expansion coefficient difference between the resin of the ridge portion 22 and the Al of the reflection film 30 prevents the Al film (reflection film 30) from being shrunk and residual stress is left inside the Al film and around the Al film. This residual stress is considered one of factors that incline the ridge portion 22. In other word, it is considered that the vapor deposition of high-temperature Al softens the resin of the ridge portion 22 and the application of the above-described residual stress to this softened ridge portion 22 inclines and curves the ridge portion 22 in any of the leftward and rightward directions (vapor deposition direction).

Therefore, a technology has been conventionally demanded that solves such a problem that the ridge portion 22 of the grid structural body 20 is inclined due to the deposition of an Al film (reflection film 30) and improves the optical properties of the polarizing element 1.

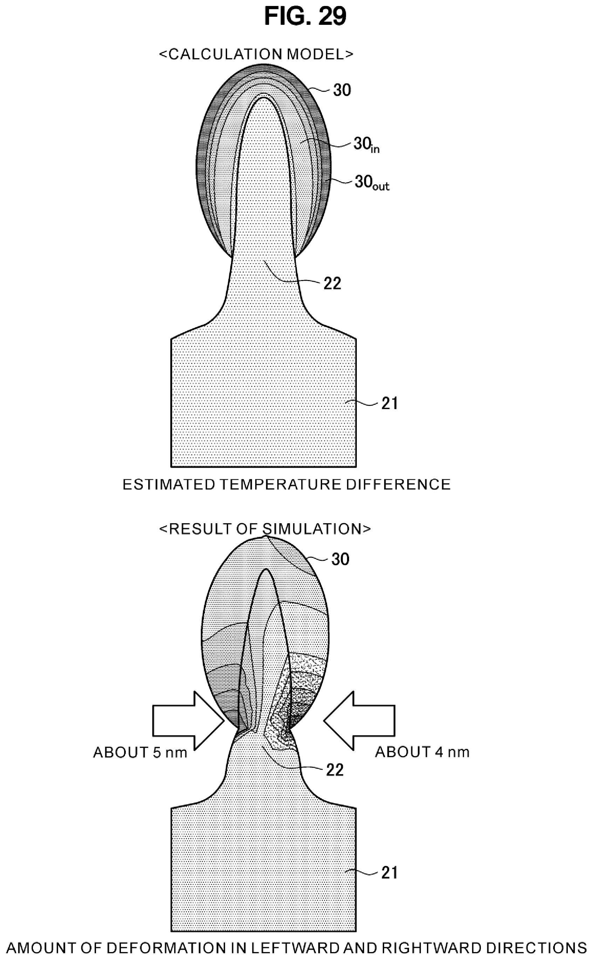

Next, a factor that causes the ridge portion 22 to be narrowed by the vapor deposition of the reflection film 30 will be described with reference to FIG. 29. FIG. 29 is a schematic diagram in which a model is used for the ridge portion 22 of the grid structural body 20 and the reflection film 30 to show a result of simulation of a deformation behavior of the ridge portion 22 narrowed when the reflection film 30 is vapor-deposited.

When Al is vapor-deposited on the ridge portion 22 from above at an oblique angle as described above while alternating between left and right when an Al film (reflection film 30) is deposited, the vapor-deposited Al film (reflection film 30) repeatedly undergoes a high-temperature state immediately after vapor deposition and a decreased-temperature state on standby alternately. On that occasion, the thermal expansion coefficient difference between the resin of the ridge portion 22 and the Al of the reflection film 30 prevents the Al film (reflection film 30) from being shrunk and residual stress is left inside the Al film and around the Al film. It is assumed that the reflection film 30 having this residual stress left therein and the polarizing element 1 including the ridge portion 22 are disposed under a high-temperature environment. In this case, it has been found that the resin of the ridge portion 22 is softened and the residual stress of the Al film is relieved by the high-temperature environment to deform and inwardly close the reflection film 30 on both the left and right sides of the ridge portion 22 and the ridge portion 22 is sandwiched and narrowed by the reflection film 30 on both the left and right sides.

FIG. 29 shows a result of simulation performed to ascertain a behavior of the ridge portion 22 narrowed in this manner. The gradation of the reflection film 30 (Al film) in the upper diagram in FIG. 29 shows the temperature distribution of the reflection film 30. The gradation in the lower diagram in FIG. 29 shows the amounts of deformation of the reflection film 30 (Al film) and the ridge portion 22 in the leftward and rightward directions.

As shown in the upper diagram in FIG. 29, a model for the ridge portion 22 and the reflection film 30 is prepared. This model assumes that a section 30ᵢₙ inside a vapor-deposited Al film (reflection film 30) is a portion formed in the first vapor deposition and the temperature of the section 30ᵢₙ is decreased to room temperature. On the other hand, a section 30ₒᵤₜ outside the vapor-deposited Al film (reflection film 30) is a portion formed in the third or subsequent vapor deposition. That is, it is assumed that high-temperature Al for the section 30ₒᵤₜ is vapor-deposited outside the low-temperature section 30ᵢₙ. When the temperature of this outside section 30ₒᵤₜ is decreased to room temperature thereafter, the outside section 30ₒᵤₜ is shrunk and this also applies shrinking force to the inside section 30ᵢₙ. The resin (low thermal expansion coefficient) of the ridge portion 22 located further inside this inside section 30ᵢₙ, however, prevents the Al film (high thermal expansion coefficient) of the inside section 30ᵢₙ from being shrunk. Therefore, residual stress in the shrinking direction is left in the inside section 30ᵢₙ.

Then, when the Al film (reflection film 30) having residual stress left therein as described above and the polarizing element 1 including the ridge portion 22 are placed under a high-temperature environment, the ridge portion 22 made of resin is softened and the residual stress in the Al film of the inside section 30ᵢₙ is released to shrink and inwardly close the Al film in the leftward and rightward directions. As a result, as shown in the lower diagram in FIG. 29, the Al film (reflection film 30) on both the left and right sides of the ridge portion 22 is deformed and inwardly closed in the leftward and rightward directions to narrow the softened ridge portion 22 by about 4 nm.

As described above, the occurrence of a phenomenon that the ridge portion 22 is narrowed by residual stress when the polarizing element 1 is disposed under a high-temperature environment may cause the polarizing element 1 to fail to exert desired optical properties. For example, in a case where the polarizing element 1 is mounted on a head-up display device for a vehicle, the ridge portion 22 of the polarizing element 1 may be deformed and narrowed to degrade the optical properties of the polarizing element 1 when the head-up display device reaches high temperature due to direct sunlight in the summer.

Therefore, it has also been conventionally demanded to solve such a problem that the ridge portion 22 of the grid structural body 20 is narrowed due to residual stress at the time of deposition of an Al film (reflection film 30) and also improve the optical properties of the polarizing element 1.

Accordingly, to solve the problem that the ridge portion 22 is inclined and narrowed as described above, the polarizing element 1 according to the present embodiment is newly provided with the reinforcement film 51 that covers the upper part of the ridge portion 22 and reinforces the ridge portion 22 using the reinforcement film 51. In other word, the polarizing element 1 according to the present embodiment includes the reinforcement film 51 interposed between the upper part of the ridge portion 22 of the grid structural body 20 and the reflection film 30 (functional film) as shown in FIG. 25 and FIG. 26. This reinforcement film 51 covers and wraps the upper part of the ridge portion 22 for reinforcement. Then, the reinforcement film 51 is made of an inorganic oxide such as a dielectric material and is more excellent in rigidity and heat tolerance than the ridge portion 22 made of resin. Note that the resin of the ridge portion 22 has, for example, a softening point of 120°C. The softening point of the inorganic oxide of the reinforcement film 51 is higher than the temperature of the softening point of the resin. The inorganic oxide of the reinforcement film 51 is not therefore softened even in a case where the resin of the ridge portion 22 is softened by the vapor deposition or the like of the high-temperature reflection film 30.

According to the present embodiment, when the reflection film 30 (such as an Al film) is deposited around the upper part of the ridge portion 22 by vapor deposition or the like, the reinforcement film 51 excellent in heat tolerance thus reinforces the ridge portion 22 made of resin easy to soften due to heat and the ridge portion 22 does not come into direct contact with the vapor-deposited high-temperature reflection film 30. The ridge portion 22 can be restrained from being inclined in the leftward and rightward directions (X direction) even if the ridge portion 22 is softened when the high-temperature reflection film 30 is deposited because the reinforcement film 51 excellent in rigidity and heat tolerance reinforces the ridge portion 22.

In addition, it is assumed that the reflection film 30 is prevented from having heat shrinkage at the time of the above-described deposition and the ridge portion 22 of the grid structural body 20 is thus softened because the polarizing element 1 is used in a high-temperature environment with residual stress left in the reflection film 30. According to the present embodiment, the reinforcement film 51 excellent in rigidity and heat tolerance is interposed between the softened ridge portion 22 and the reflection film 30 even in this case. Even when the reflection film 30 on both the left and right sides of the ridge portion 22 is deformed and inwardly closed in the leftward and rightward directions by the residual stress in the reflection film 30 as shown in FIG. 29, the reinforcement film 51 having high rigidity can restrain the deformation. This makes it possible to solve the problem that the ridge portion 22 is narrowed due to residual stress at the time of deposition of the reflection film 30.

### <7.2. Configuration of Reinforcement Film>

Next, the configuration of the reinforcement film 51 according to the present embodiment will be described in more detail with reference to FIG. 25 and FIG. 26.

As shown in FIG. 25 and FIG. 26, the wire grid polarizing element 1 according to the present embodiment includes the reinforcement film 51 that covers the ridge portion 22 inside the protection film 40 and the reflection film 30 in addition to the protection film 40 that covers the entirety of the grid structural body 20 and the reflection film 30 (functional film). The reinforcement film 51 is a film made of an organic material. The film is for reinforcing the ridge portion 22. The reinforcement film 51 is therefore made of an inorganic oxide higher in rigidity than the organic material of the ridge portion 22. The reinforcement film 51 is interposed between at least the ridge portion 22 covered with the reflection film 30 and the reflection film 30. The reinforcement film 51 covers and wraps at least the leading end 22a and the upper side of both the side surfaces 22b, 22b (also referred to as the "upper part of the ridge portion 22" later in some cases) of the ridge portion 22 of the grid structural body 20. The reflection film 30 (functional film) covers and wraps the upper part of the ridge portion 22 with the reinforcement film 51 in between and does not cover the lower side of both the side surfaces 22b, 22b of the ridge portion 22 and the upper surface of the base part 21. On the other hand, the protection film 40 covers the entire surfaces of the grid structural body 20, the reinforcement film 51, and the reflection film 30.

The reinforcement film 51 shown in FIG. 25 covers the entire grid structural body 20 (that is, the leading end 22a and both the side surfaces 22b, 22b of the ridge portion 22 and the upper surface of the base part 21). The reinforcement film 51 shown in FIG. 25 is therefore interposed between the upper part of the ridge portion 22 and the reflection film 30 and also interposed between the lower part of the ridge portion 22 and the base part 21 and the protection film 40. The reflection film 30 thus indirectly covers the upper part of the ridge portion 22 with the reinforcement film 51 in between and is not in direct contact with the upper part of the ridge portion 22. In addition, the protection film 40 indirectly covers the lower part of the ridge portion 22 and the upper surface of the base part 21 with the reinforcement film 51 in between and is not in direct contact with the lower part of the ridge portion 22 and the upper surface of the base part 21.

On the other hand, the reinforcement film 51 shown in FIG. 26 covers only the upper part (the leading end 22a and the upper side of both the side surfaces 22b, 22b of the ridge portion 22) of the ridge portion 22 of the grid structural body 20 and does not cover the lower side of both the side surfaces 22b, 22b of the ridge portion 22 and the upper surface of the base part 21. The covered range of the upper part of the ridge portion 22 with the reinforcement film 51 shown in FIG. 26 is wider than the covered range of the upper part of the ridge portion 22 with the reflection film 30. The reinforcement film 51 shown in FIG. 26 is therefore interposed between the upper part of the ridge portion 22 and the reflection film 30. The reflection film 30 thus indirectly covers the upper part of the ridge portion 22 with the reinforcement film 51 in between and is not in direct contact with the upper part of the ridge portion 22. In addition, the reinforcement film 51 shown in FIG. 26 is not interposed between the lower ends of both the side surfaces 22b, 22b of the ridge portion 22 and the base part 21 and the protection film 40. The protection film 40 therefore covers the lower ends of both the side surfaces 22b, 22b of the ridge portion 22 and the base part 21 in direct contact.

As shown in FIG. 25 and FIG. 26, the reinforcement film 51 should only be interposed between at least the upper part of the ridge portion 22 covered with the reflection film 30 (functional film) and the reflection film 30 of the grid structural body 20. That is, the reinforcement film 51 should only cover at least the upper part of the ridge portion 22 covered with the reflection film 30 of the grid structural body 20. The reinforcement film 51 may also cover the other portions (the lower part of the ridge portion 22 and the base part 21) of the grid structural body 20 (see FIG. 25) or does not need to cover them (see FIG. 26).

The reinforcement film 51 is interposed between the upper part of the ridge portion 22 and the reflection film 30 to keep the upper part of the ridge portion 22 and the reflection film 30 out of direct contact. The reinforcement film 51 made of an inorganic oxide then covers and wraps the upper part of the ridge portion 22 made of an organic material such as resin to cause the reinforcement film 51 having high rigidity and heat tolerance to reinforce the upper part of the ridge portion 22.

When the reflection film 30 is deposited outside the reinforcement film 51 that covers the upper part of the ridge portion 22, the upper part of the ridge portion 22 covered and reinforced by the reinforcement film 51 can be thus restrained from being inclined in the leftward and rightward directions (X direction) due to heat and stress applied at the time of the deposition. Therefore, the ridge portion 22 can maintain an upward narrowing shape that extends straight in the upward direction (Z direction) when the reflection film 30 is deposited. It is therefore possible to restrain the grid 41 (the entire protruding structural body including the ridge portion 22, the reinforcement film 51, and the reflection film 30) of the polarizing element 1 from being inclined. The Tp properties and the contrast of the polarizing element 1 can be thus restrained from decreasing. As a result, it is possible to improve the optical properties (for example, the Tp properties, the Tp × Rs properties, and the CR) of the polarizing element 1 in comparison with the polarizing element 1 not provided with the reinforcement film 51.

In addition, the reinforcement film 51 shown in FIG. 25 covers the entire grid structural body 20 made of resin. This enables the reinforcement film 51 to protect the resin portions of the lower part of the ridge portion 22 and the upper surface of the base part 21 of the grid structural body 20. The grid structural body 20 can also thereby be increased in abrasion resistance, antifouling property, and waterproofness.

In particular, because of being formed of an organic material such as resin, the grid structural body 20 is more likely to degrade due to heat, light, water, or the like than the substrate 10 formed of an inorganic material such as glass. By covering the grid structural body 20 made of resin by the reinforcement film 51 and the protection film 40 each made of an inorganic oxide with no gap therebetween, the grid structural body 20 can be protected from external heat, air, water, or the like (barrier properties). This can restrain resin of the grid structural body 20 from being altered or degrading due to heat, air, water, or the like. In addition, as shown in FIG. 25, covering the entire surface of the polarizing element 1 by both the reinforcement film 51 and the protection film 40 each made of an inorganic oxide enables the thermal resistance R of the entire polarizing element 1 to be reduced further, which can further improve the heat dissipation of the polarizing element 1.

### <7.3. Material and Layer Structure of Reinforcement Film>

Next, a material and a layer structure of the reinforcement film 51 according to the present embodiment will be described.

The reinforcement film 51 is a film made of an organic material. The film is for reinforcing the ridge portion 22. The reinforcement film 51 is therefore made of an inorganic oxide higher in rigidity than the organic material of the ridge portion 22. The reinforcement film 51 is preferably made of, for example, a dielectric material such as SiO₂ or Al₂O₃. This enables the reinforcement film 51 made of a dielectric material to suitably reinforce the ridge portion 22. In a case where the reinforcement film 51 is formed of a dielectric material, the reinforcement film 51 is composed of a thin film (for example, a SiO₂ thin film or an Al₂O₃ thin film) made of a dielectric material. The reinforcement film 51 may be, however, composed of a thin film made of an inorganic oxide such as a metal oxide other than a dielectric material.

In addition, the material of the reinforcement film 51 may be the same as or different from the material of the protection film 40. If the material of the reinforcement film 51 is the same as the material of the protection film 40, both the reinforcement film 51 and the protection film 40 can be relatively easily deposited using the same material and deposition method.

As long as the material of the reinforcement film 51 is an inorganic oxide that can reinforce the ridge portion 22 and maintain the optical properties of the polarizing element 1, the material of the reinforcement film 51 is not limited in particular. The material of the reinforcement film 51 preferably includes a dielectric material or a metal oxide. Dielectric materials are, for example, Si oxides, Hf oxides, and the like. Metal oxides are, for example, Al oxides and the like. When the reinforcement film 51 contains an inorganic oxide, the abrasion resistance of the polarizing element 1 and the barrier properties that protect the grid structural body 20 from heat, light, water, or the like can be increased further. In addition, the reinforcement film 51 may include, for example, a silane-based water-repellent material, a fluorinated water-repellent material, or the like in addition to the inorganic oxide. When the reinforcement film 51 contains a water-repellent material, the antifouling property and waterproofness of the polarizing element 1 can be increased further.

In addition, the reinforcement film 51 may be a thin film of a single-layer structure composed of one type of inorganic oxide (for example, one type of dielectric material) or a thin film of a laminate structure composed of a plurality of types of inorganic oxides (for example, a plurality of types of dielectric materials).

For example, the reinforcement film 51 may have a single-layer structure made of SiO₂. The use of SiO₂ as the material of the reinforcement film 51 enables the ridge portion 22 of the grid structural body 20 to be covered with the reinforcement film 51 having high transmittance within a wide wavelength range. In addition, the reinforcement film 51 may have a single-layer structure made of Al₂O₃. The use of Al₂O₃ as the material of the reinforcement film 51 enables the ridge portion 22 of the grid structural body 20 to be covered with the reinforcement film 51 having high barrier properties that protect the grid structural body 20 from external heat, air, water, or the like.

Alternatively, the reinforcement film 51 may have a laminate structure including a first layer made of Al₂O₃ and a second layer made of SiO₂. Accordingly, the reinforcement film 51 can combine high barrier properties derived from Al₂O₃ and high transmittance derived from SiO₂.

Note that the reinforcement film 51 is not limited to the above-described example, and may be formed of another inorganic oxide and metal oxide other than SiO₂ and Al₂O₃, or may contain another material. For example, the reinforcement film 51 may further contain a water-repellent coating or an oleophobic coating. The antifouling property and waterproofness of the polarizing element 1 can thereby be increased further. In addition, the reinforcement film 51 may have a laminate structure of three or more layers composed of the same type of inorganic oxide or different types of inorganic oxides.

### <7.4. Thickness of Reinforcement Film>

Next, thickness Rt (film thickness) of the reinforcement film 51 in the wire grid polarizing element 1 according to the present embodiment will be described with reference to FIG. 25 and FIG. 26.

When the thickness Rt of the reinforcement film 51 is excessively large, the reflection film 30 that covers the reinforcement film 51 grows in thickness and the optical properties (the Tp properties in particular) of the polarizing element 1 can decrease. This is not thus preferable. On the other hand, when the thickness Rt of the reinforcement film 51 is excessively small, the reinforcement performance of the reinforcement film 51 for the ridge portion 22 can decrease. This is not thus preferable.

The thickness Rt of the reinforcement film 51 is not therefore limited in particular as long as the thickness Rt is thickness that makes it possible to ensure the optical properties of the polarizing element 1 and the reinforcement performance for the ridge portion 22. However, the thickness Rt is preferably, for example, more than or equal to 0.5 nm and less than or equal to 8 nm. This makes it possible to ensure suitable optical properties (Tp properties in particular) for the polarizing element 1 and also ensure suitable reinforcement performance for the ridge portion 22.

Further, from the perspective of achieving both the optical properties of the polarizing element 1 and the reinforcement performance for the ridge portion 22 more suitably, the thickness Rt of the reinforcement film 51 is more preferably more than or equal to 1 nm and less than or equal to 5 nm.

In addition, the reinforcement film 51 shown in FIG. 25 continuously covers the upper part (that is, the leading end 22a and the upper side of both the side surfaces 22b, 22b of the ridge portion 22) of the ridge portion 22, the lower part (that is, the lower side of both the side surfaces 22b, 22b of the ridge portion 22) of the ridge portion 22, and the surface of the base part 21 (that is, the bottom surface of the valley 42). The protection film 40 continuously covers the surface of the reinforcement film 51 (excluding the surface of the portion covered with the reflection film 30) and the surface of the reflection film 30. The reinforcement film 51 and the protection film 40 exert barrier properties of protecting the grid structural body 20 made of resin.

Here, the thickness Rt of the reinforcement film 51 is preferably smaller than the thickness Bt of the protection film 40 (Rt < Bt). The thickness Rt of the reinforcement film 51 should only be thickness that can restrain at least the ridge portion 22 from being inclined. The thickness Rt does not need to be excessively large thickness. On the other hand, to ensure barrier properties of reliably protecting the entirety of the grid 41 and the valley 42 of the polarizing element 1 using the protection film 40, the thickness Bt of the protection film 40 is preferably more than or equal to a predetermined thickness that can exert the barrier properties. Thus, the thickness Bt of the protection film 40 is preferably twice or more times as large as the thickness Rt of the reinforcement film 51 (2 × Rt ≤ Bt). The thickness Bt is more preferably fifth or more times as large as the thickness Rt (5 × Rt ≤ Bt).

In addition, when the total thickness (Rt + Bt) of the thickness Rt of the reinforcement film 51 and the thickness Bt of the protection film 40 shown in FIG. 25 is excessively large, the valley 42 between the grids 41, 41 having a complicated micro concave-convex structure is filled with the resin of the reinforcement film 51 or the protection film 40 and the optical properties of the polarizing element 1 can decrease. This is not thus preferable. The total thickness (Rt + Bt) of the reinforcement film 51 and the protection film 40 is thus preferably less than or equal to 20 nm (Rt + Bt < 20 nm). The total thickness (Rt + Bt) is more preferably less than or equal to 15 nm (Rt + Bt < 15 nm). This makes it possible to appropriately ensure the optical properties of the polarizing element 1, and in particular the Tp properties, while ensuring thickness necessary to ensure the barrier properties as the total thickness (Rt + Bt) of the reinforcement film 51 and the protection film 40. In addition, from the similar perspective, the thickness Bt of the protection film 40 preferably is more than or equal to 5 nm and less than or equal to 12 nm, and more preferably is more than or equal to 5 nm and less than or equal to 10 nm.

Note that, as a method for measuring the thickness Rt (film thickness) of the reinforcement film 51, the following measuring method can be used, for example. After the reinforcement film 51 is deposited on the ridge portion 22 and the reflection film 30 is then deposited outside the reinforcement film 51 to produce a sample of the polarizing element 1, a cross-section of the sample is observed using a transmission electron microscope (TEM). Then, data on a sectional image of the sample obtained by the observation is captured into a length measuring application to measure the thickness of the reinforcement film 51. On this occasion, the thicknesses of the reinforcement films 51 in the plurality of (for example, three or more) grids 41 are measured per sample, and an average value of measured values of these thicknesses is used as the thickness Rt of the reinforcement film 51. Note that the method for measuring the thickness Rt of the reinforcement film 51 is not limited to such a measuring method, and the thickness Rt of the reinforcement film 51 may be measured when a cross-section of a sample is observed using the above-described transmission electron microscope, for example. In addition, the thickness of the reinforcement film 51 of the portion interposed between the reflection film 30 and the ridge portion 22 is preferably measured as the thickness Rt of the reinforcement film 51, but another portion of the reinforcement film 51 may also be measured.

As described above, the thickness Rt of the reinforcement film 51 or the thickness Bt of the protection film 40 is preferably adjusted to an appropriate thickness. This can suitably cover the grid structural body 20 having a complicated micro concave-convex structure as shown in FIG. 25 with the thin reinforcement film 51 and protection film 40. It is thus possible to ensure all the optical properties of the polarizing element 1, the barrier properties of the grid structural body 20, and the reinforcement performance for the ridge portion 22. This can restrain the resin portions of the grid structural body 20 from being degraded and improve the reliability (heat tolerance and light tolerance) of the polarizing element 1 while maintaining the required optical properties (the Tp properties, the Tp × Rs properties, and the CR) of the polarizing element 1 in a case where the polarizing element 1 is used, for example, as a polarizing beam splitter. Additionally, it is possible to suitably reinforce the ridge portion 22 using the reinforcement film 51. In addition, it is not necessary to deposit both the reinforcement film 51 and the protection film 40 in a completely uniform thickness. The reinforcement film 51 and the protection film 40 can be therefore actually deposited with thickness unevenness within the acceptable range using, for example, the above-described special ALD method.

### <7.5. Relationship between Grid Structural Body 20 Having Complicated Concave-Convex Structure and Reinforcement Film 51>

As shown in FIG. 25 and FIG. 26, the polarizing element 1 according to the present embodiment is a wire grid polarizing element of the hybrid type in which the substrate 10 made of an inorganic material such as glass and the grid structural body 20 made of an organic material such as resin are combined. The grid 41 (the entire protruding structural body combining the ridge portion 22, the reinforcement film 51, and the reflection film 30) of the polarizing element 1 had the special tree shape described above. Therefore, a valley 42 having a complicated shape is formed between the grids 41, 41 adjacent to each other. As a result, the surface of the grid structural body 20 of the polarizing element 1 has a complicated concave-convex structure in which a plurality of convexities (the grids 41) and a plurality of concavities (the valleys 42) are mixed.

The ridge portion 22 of the grid structural body 20 has the upward narrowing shape that narrows in width in the X direction with distance from the base part 21 in the upward direction (the Z direction). The reflection film 30 (functional film) is a metal film (Al film) made of a metal material such as Al. The reflection film 30 covers and wraps the upper part (the leading end 22a and the upper side of both the side surfaces 22b, 22b of the ridge portion 22) of the ridge portion 22 and does not cover the lower side of both the side surfaces 22b, 22b of the ridge portion 22 and the surface of the base part 21. The coverage rate (Rc) of both the side surfaces 22b, 22b of the ridge portion 22 obtained by the reflection film 30 is more than or equal to 30% and less than or equal to 70%.

Further, the reinforcement film 51 is interposed between the reflection film 30 and the upper part of the ridge portion 22. The reinforcement film 51 covers at least the upper part of the ridge portion 22 covered with the reflection film 30. The reinforcement film 51 shown in FIG. 25 covers not only the upper part of the ridge portion 22 covered with the reflection film 30, but also the lower part of the ridge portion 22 and the upper surface of the base part 21.

The reflection film 30 indirectly covers and wraps the upper part of the ridge portion 22 with the reinforcement film 51 in between. The surface of the reflection film 30 is rounded and bulges in the width direction (the X direction in FIG. 25) of the ridge portion 22. The maximum width (W_{MAX}) of the reflection film 30 covering and wrapping the ridge portion 22 is more than or equal to the width (W_{B}) of the lower side of the ridge portion 22. As shown in FIG. 25 and FIG. 26, a sectional shape of the entire protruding structural body (that is, the grid 41) composed of the ridge portion 22, the reinforcement film 51, and the reflection film 30 has the special tree shape described above. This special tree shape has constricted portions 29, 29 at positions immediately under lower ends on both the left and right sides of the reflection film 30 covering and wrapping the ridge portion 22, and the width in the width direction (the X direction) of the entire protruding structural body (that is, the grid 41) is narrowed at the positions of the constricted portions 29, 29.

As described above, the grid 41 of the grid structural body 20 according to the present embodiment has the reflection film 30 that roundly bulges in the X direction at the upper side of the ridge portion 22, the constricted portions 29, 29 recessed inwardly in the X direction at the positions of the lower end of the reflection film 30, and the lower side of the ridge portion 22 not covered by the reflection film 30. Therefore, the grid 41 has a complicated sectional shape like a single tree. The grid 41 having such a special tree shape enables the polarization splitting properties (Tp × Rs properties) for oblique incident light to be improved as described above.

Then, the valley 42 having a complicated shape is formed between the grids 41, 41 adjacent to each other in the X direction. The valley 42 is a concavity formed between the grids 41, 41 adjacent to each other. An upper part of the valley 42 is a space interposed between the reflection films 30, 30 on both the left and right sides and is open upward. A bottom part of the valley 42 is a semi-closed space surrounded in three directions by the ridge portions 22, 22 on both the left and right sides and the base part 21 on the bottom side. The width in the X direction of the upper part of the valley 42 is narrow, and the width in the X direction of the bottom part of the valley 42 is wide. In this manner, the sectional shape (the X-Z section) of the valley 42 has such a vase-type shape that an entrance on the upper side is narrow and the semi-closed space on the bottom side is wide.

As described above, in the polarizing element 1 according to the present embodiment, the plurality of grids 41 have a complicated structure having the special tree shape. The valley 42 between the ridge portions 22, 22 adjacent to each other and the valley 42 between the grids 41, 41 are the semi-closed spaces each also having a complicated vase-type shape accordingly. Consequently, the surface of the polarizing element 1 has a complicated concave-convex structure composed of these plurality of grids 41 and the plurality of valleys 42. Consequently, it is difficult to cover the entire surface of the complicated concave-convex structure by the protection film 40 having a uniform film thickness after the reflection film 30 is deposited. Therefore, the protection film 40 is preferably deposited using the above-described special ALD method.

On the other hand, the reinforcement film 51 is deposited before the reflection film 30 is deposited such that the reinforcement film 51 covers at least the upper part of the ridge portion 22 of the grid structural body 20. When the reinforcement film 51 is deposited, the semi-closed space between the ridge portions 22, 22 adjacent in the X direction does not form a vase-type shape narrowed by the reflection films 30, 30 on the both sides and has a wide entrance on the upper side. This is thus easier than depositing the reinforcement film 51 before the reflection film 30 is deposited and depositing the protection film 40 after the reflection film 30 is deposited. The reinforcement film 51 is, however, a thin film that is further thinner than the protection film 40. To deposit the thin reinforcement film 51 on the entire grid structural body 20 in a uniform film thickness as shown in FIG. 25, the reinforcement film 51 is thus preferably deposited using the above-described special ALD method similarly to the deposition of the protection film 40. This can suitably deposit the thin reinforcement film 51 having a uniform thickness.

### <7.6. Method for Depositing Reinforcement Film>

Next, the method for depositing the reinforcement film 51 in the method for manufacturing the polarizing element 1 according to the present embodiment will be described in detail.

As described above, the method for manufacturing the wire grid polarizing element 1 according to the present embodiment includes the grid structural body material forming step (S10), the nano-imprinting step (S12), the grid structural body forming step (S14), and the reflection film forming step (S16) shown in FIG. 11, and may further include a step (S15) of depositing the reinforcement film 51 and a step (S18) of depositing the protection film 40.

The step (S15) of depositing the reinforcement film 51 is a step performed between the grid structural body forming step (S14) and the reflection film forming step (S16) shown in FIG. 11. The step (S15) of depositing the reinforcement film 51 is a step of depositing, using an inorganic oxide, the reinforcement film 51 that covers at least the surface of the upper part of the ridge portion 22 in the surface of the grid structural body 20 formed in S14.

Here, the reinforcement film 51 has two types of deposition ranges as shown, for example, in FIG. 25 and FIG. 26. In the example of FIG. 25, the reinforcement film 51 is deposited on the entire surface of the grid structural body 20. In other word, the reinforcement film 51 is deposited such that the reinforcement film 51 continuously covers the entirety of the leading end 22a and both the side surfaces 22b, 22b of the ridge portion 22 and the surface of the base part 21. In the case of this deposition range of the reinforcement film 51 in the example of FIG. 25, the reinforcement film 51 is preferably deposited widely on the entire surface of the grid structural body 20 in as uniform a thickness as possible using, for example, an ALD method. The use of an ALD method as a method for depositing the reinforcement film 51 on the entire surface makes it possible to reduce the unevenness of the thickness Rt of the reinforcement film 51 deposited on the entire surface of the grid structural body 20 and deposit the reinforcement film 51 having the very uniform thickness Rt.

On the other hand, in the example of FIG. 26, the reinforcement film 51 is deposited on only the upper part of the ridge portion 22 of the grid structural body 20. In other word, the reinforcement film 51 is deposited such that the reinforcement film 51 partially covers and wraps only the upper part (the leading end 22a and the upper side of both the side surfaces 22b, 22b of the ridge portion 22) of the ridge portion 22. In the case of this deposition range of the reinforcement film 51 in the example of FIG. 26, the protection film 40 is preferably deposited partially on the upper part of the ridge portion 22 of the grid structural body 20, for example, by a vapor deposition method. The use of a vapor deposition method as a method for partially depositing the reinforcement film 51 makes it possible to easily deposit the reinforcement film 51 using a relatively simple deposition device. Note that the reinforcement film 51 may be partially deposited on the upper part of the ridge portion 22 by a sputtering method instead of a vapor deposition method.

After the step (S15) of depositing the reinforcement film 51 as described above, the reflection film forming step (S16) is performed. In the reflection film forming step (S16), the reflection film 30 (functional film) is deposited such that the reflection film 30 covers and wraps the upper part (the leading end 22a and the upper side of both the side surfaces 22b, 22b of the ridge portion 31) of the ridge portion 22 with the reinforcement film 51 in between. As a method for depositing the reflection film 30, the sputtering method or the vapor deposition method can be used, for example.

Thereafter, the step (S18) of depositing the protection film 40 is performed. The step (S18) of depositing the protection film 40 is a step of depositing the protection film 40 that covers the entire surface of the polarizing element 1 (the entire surfaces of the grid structural body 20 and the reflection film 30).

In the example shown in FIG. 25, the reinforcement film 51 covers the entire surface of the grid structural body 20 and the reflection film 30 covers and wraps part (the portion around the upper part of the ridge portion 22) of the reinforcement film 510. In this case, in the step (S18) of depositing the protection film 40, the protection film 40 is deposited such that the protection film 40 continuously covers the reinforcement film 51 (that is, the entire surface of the grid 41) covering the surface of the reflection film 30 and the lower side of both the side surfaces 22b, 22b of the ridge portion 22 and the surface (that is, the bottom surface of the valley 42) of the reinforcement film 51 covering the base part 21.

On the other hand, in the example shown in FIG. 26, the reinforcement film 51 covers only the upper part of the ridge portion 22 and does cover the lower part of the ridge portion 22 and the upper surface of the base part 21. In this case, in the step (S18) of depositing the protection film 40, the protection film 40 is deposited such that the protection film 40 continuously covers the surface of the reflection film 30, the exposed portion of the reinforcement film 51 on the lower side thereof, and the lower side of both the side surfaces 22b, 22b of the ridge portion 22 (that is, the entire surface of the grid 41) and the surface of the base part 21 (that is, the bottom surface of the valley 42).

The use of an ALD method, and in particular the above-described special ALD method (see FIG. 19), is preferable as a method for depositing the protection film 40. This enables the protection film 40 to be deposited substantially uniformly on the entire surface of the complicated micro concave-convex structure of the grid structural body 20.

Next, the special ALD method shown in FIG. 25 and used to deposit the reinforcement film 51 on the entire surface in the above-described step (S15) of depositing the reinforcement film 51 will be described in more detail.

The ALD method can carefully control the film thickness and material in an atomic layer level, which advantageously enables extremely thin and uniform deposition as compared with the CVD method. Consequently, in the case of depositing the reinforcement film 51 on the entire surface of the complicated micro concave-convex structure of the grid structural body 20 in the step (S15) of depositing the reinforcement film 51 according to the present embodiment, the reinforcement film 51 preferably is deposited by the ALD method. This enables the reinforcement film 51 to be deposited substantially uniformly on the entire surfaces of the ridge portion 22 and the base part 21 of the grid structural body 20.

Further, in the present embodiment, even in the case of the deposition of the reinforcement film 51 on the entire surface shown in FIG. 25, the above-described special ALD method (see FIG. 19) is used similarly to the deposition of the protection film 40. In this special ALD method, for example, the above-described chamber 300 shown in FIG. 19 may be used. The chamber 300 has a configuration as described above and the detailed description thereof is thus omitted. The method for depositing the reinforcement film 51 on the entire surface shown in FIG. 25 will be described later using the special ALD method according to the present embodiment.

In the step (S15) of depositing the reinforcement film 51 on the entire surface shown in FIG. 25, the grid structural body 20 on which the reflection film 30 has not yet been deposited is first disposed inside the chamber 300 as shown in FIG. 19 (S150).

Then, first to fourth steps (S151 to S154) of alternately introducing (pulse) and exhausting (purging) gas of two types of gas-phase raw materials (hereinafter referred to as "precursor gas" and "oxidant gas", respectively) for depositing the reinforcement film 51 into and from the chamber 300 are repeated. Here, the precursor gas introducing step (S151: first step), the inert gas introducing step (S152: second step), the oxidant gas introducing step (S153: third step), and the inert gas introducing step (S154: fourth step) are similar to the respective steps (S181 to S184) in the above-described step (S18) of depositing the protection film 40 and the detailed description thereof is thus omitted.

Further, in the step (S15) of depositing the reinforcement film 51 by the special ALD method according to the present embodiment, the precursor gas and the oxidant gas are introduced into and fills the chamber without the precursor gas and the oxidant gas being exhausted respectively from the chamber 300 to the outside in the precursor gas introducing step (S151) and the oxidant gas introducing step (S153).

In this respect, in a deposition step by a conventionally common ALD method, precursor gas and oxidant gas are introduced into the chamber 300 while exhausting the precursor gas and the oxidant gas in the chamber 300 in the precursor gas introducing step and the oxidant gas introducing step (S151, S153).

In contrast to this, in the step (S15) of depositing the reinforcement film 51 by the special ALD method according to the present embodiment, the precursor gas and the oxidant gas are continuously introduced into the chamber 300 in the precursor gas introducing step and the oxidant gas introducing step (S151, S153: the first and third steps) without the precursor gas and the oxidant gas in the chamber 300 being exhausted through the gas outlet 330. Specifically, in the precursor gas introducing step (S151: the first step), the precursor gas is introduced into the chamber 300 through the gas inlet 310 in a state where the exhaust valve of the gas outlet 330 is closed to bring the chamber 300 into a sealed state, and the precursor gas in the chamber 300 is not exhausted through the gas outlet 330. Similarly, in the oxidant gas introducing step (S153: the third step), the oxidant gas is introduced into the chamber 300 through the gas inlet 310 in a state where the exhaust valve of the gas outlet 330 is closed to bring the chamber 300 into the sealed state, and the oxidant gas in the chamber 300 is not exhausted through the gas outlet 330.

Accordingly, in the respective introducing steps (S151 and S153), the precursor gas and the oxidant gas introduced into the chamber 300 can be caused to sufficiently fill and stay in the chamber 300 to sufficiently come into contact with the covering target surface of the grid structural body 20. Consequently, the precursor gas and the oxidant gas can be sufficiently introduced deep into the valley 42 between the ridge portions 22, 22 adjacent to each other on the surface of the complicated micro concave-convex structure of the grid structural body 20 shown in FIG. 25 to appropriately deposit the first and second atomic layers having necessary layer thicknesses. Thus, the reinforcement film 51 having the thickness Rt can be suitably deposited not only on the surface of the upper part of the ridge portion 22 but also on the lower part of the ridge portion 22 and the surface of the base part 21.

The thickness of the reinforcement film 51 that covers the leading end 22a of the ridge portion 22 and the thickness of the reinforcement film 51 that covers the surface of the base part 21 can be therefore made substantially equivalent. As a result, uniformity of the thickness of the reinforcement film 51 deposited by the special ALD method according to the present embodiment can be improved further than in the case of the conventionally common ALD method. Thus, the reinforcement film 51 more excellent in uniformity can be deposited within a predetermined acceptable range of thickness unevenness.

The step (S15) of depositing the reinforcement film 51 on the entire surface shown in FIG. 25 has been described in detail so far using the special ALD method according to the present embodiment. According to the present embodiment, the ALD method can be used as the method for depositing the reinforcement film 51, and deposition conditions (conditions related to introduction and exhaust of the precursor gas and the oxidant gas) in the precursor gas introducing step and the oxidant gas introducing step (S151, S153) by the ALD method can be optimized in accordance with the micro concave-convex structure of the above-described grid structural body 20.

The extremely thin reinforcement film 51 on the order of several nanometers to several tens of nanometers can thereby be deposited very uniformly on the entire surface of the micro concave-convex structure of the grid structural body 20. Thus, the extremely thin reinforcement film 51 can be deposited within the predetermined acceptable range of thickness unevenness. This reinforcement film 51 can reinforce the upper part of the ridge portion 22. This makes it possible to restrain the ridge portion 22 from being inclined and restrain the ridge portion 22 from being narrowed due to the deposition of the reflection film 30. In addition, as shown in FIG. 25, the reinforcement film 51 that covers the entire grid structural body 20 can protect the grid structural body 20 more strongly along with the protection film 40 outside the reinforcement film 51. Thus, reliability (heat tolerance and light tolerance) of the polarizing element 1 can be improved with the optical properties of the polarizing element 1 including the reinforcement film 51 being maintained.

Further, according to the present embodiment, the use of the ALD method as the deposition method results in good adhesion of the deposition material to the micro concave-convex structure, which can considerably improve uniformity of the reinforcement film 51 as compared with the conventional sputtering method and vacuum evaporation method. Further, the ALD method according to the present embodiment enables the reinforcement film 51 to be deposited at low deposition temperature (for example, less than or equal to 190°) lower than a heat resisting temperature (for example, 200°) of resin of the grid structural body 20. Accordingly, resin of the grid structural body 20 is difficult to soften when the reinforcement film 51 is deposited (S15), so that the shape of the ridge portion 22 of the grid structural body 20 can be maintained. Further, reliability (heat tolerance and light tolerance) of the grid structural body 20 covered by the reinforcement film 51 can also be considerably improved as compared with the conventional deposition methods.

Note that the conditions for depositing the reinforcement film 51 by the ALD method according to the present embodiment include capacity of the chamber 300, types of gas used, flow rates of the gas, deposition temperature, whether or not exhaust is performed, state of the grid structural body 20 arranged in the chamber 300, and the like. These conditions can be set at optimum values as appropriate so as to satisfy desired deposition conditions.

Note that the example in which the special ALD method is used as a method for depositing the reinforcement film 51 on the entire surface shown in FIG. 25 has been described in detail so far. On the other hand, as a method for partially depositing the reinforcement film 51 shown in FIG. 26, the reinforcement film 51 should only be deposited to cover and wrap the upper part and the central part of the ridge portion 22 by bonding the material of the reinforcement film 51 to the upper part and the central part of the ridge portion 22 using, for example, a common vapor deposition method or sputtering method.

### [Examples]

Next, examples of the present invention will be described. However, the examples which will be described below are specific examples illustrated for describing the configuration, effects, and the like of the polarizing element 1 according to the present embodiment described above, and the present invention is not limited to the following examples.

### <1. Result of Inspection of Thickness of Protection Film>

As the examples of the present invention, samples of the wire grid polarizing element 1 that satisfied Expression (10) related to the thickness of the protection film 40 according to the present embodiment described above were produced, and tests for evaluating optical properties, heat tolerance, and light tolerance of the samples were performed. In addition, samples of the wire grid polarizing element 1 according to comparative examples (that did not satisfy Expression (10)) were also produced for comparison with the examples of the present invention (that satisfied Expression (10)) and similarly tested and evaluated. Note that hereinafter, reference characters representing the constituent members (such as the substrate 10, the grid structural body 20, the base part 21, the ridge portion 22, the reflection film 30, and the protection film 40) of the polarizing element 1 and notations representing various dimensions of these constituent members are denoted by identical reference characters and notations both in the examples and the comparative examples for convenience of description.

Note that notations representing various dimensions and the like of the polarizing element 1 which will be used in the following description are described below.
P: pitch of the ridge portions 22
W_{T}: top width of the ridge portion 22 (ridge portion top width)
W_{M}: width of the ridge portion 22 at the central position in the height direction (ridge portion central width)
W_{B}: bottom width of the ridge portion 22 (grid bottom width)
W_{MAX}: maximum width of the reflection film 30 covering and wrapping the ridge portion 22 (grid maximum width)
H: height of the ridge portion 22
Hx: height of a portion of the side surfaces 22b of the ridge portion 22 covered by the reflection film 30
Dt: thickness of the reflection film 30 covering the leading end 22a of the ridge portion 22 (leading end thickness of the reflection film 30)
Ds: thickness of the reflection film 30 covering the side surfaces 22b of the ridge portion 22 (side surface thickness of the reflection film 30)
Rc: coverage rate of the side surfaces 22b of the ridge portion 22 obtained by the reflection film 30
Rr: open rate of the side surfaces 22b of the ridge portion 22 obtained by the reflection film 30
Tt: thickness of the protection film 40 that covers the top 30a of the reflection film 30 covering and wrapping the ridge portion 22 (that is, the thickness of the protection film 40 at the leading end part of the grid 41)
Bt: thickness of the protection film 40 that covers the lower side of both the side surfaces 22b, 22b of the ridge portion 22 and the surface of the base part 21 (that is, the thickness of the protection film 40 at the bottom part of the valley 42)
Bt1: thickness of the protection film 40 that covers the lower side of both the side surfaces 22b, 22b of the ridge portion 22
Bt2: thickness of the protection film 40 that covers the surface of the base part 21
θ: incident angle of incident light
λ: wavelength of incident light

### <1.1. Test Conditions>

### (1) Method for Producing Samples of Polarizing Element 1

In Examples 51 to 53 of the present invention and Comparative Examples 51 to 54, samples of the polarizing element 1 in which the entire surface of the polarizing element 1 was covered by the protection film 40 were produced as will be described below.

### (Example 51)

First, Example 51 of the present invention will be described with reference to FIG. 18.

The sample of the polarizing element 1 according to Example 51 was produced by the method for manufacturing the polarizing element 1 according to the present embodiment described above. The polarizing element 1 according to Example 51 included the substrate 10 made of glass and the grid structural body 20 made of an ultraviolet curable resin (an acrylic resin) as shown in FIG. 18. The grid structural body 20 had the base part 21 provided along the surface of the substrate 10 and the plurality of ridge portions 22 formed to protrude from the base part 21 in a grid shape. The sectional shape of the ridge portion 22 was a vertically long trapezoidal shape and an upward narrowing shape that narrowed toward the leading end 22a of the ridge portion 22.

The reflection film 30 that covered the ridge portion 22 according to Example 51 was an Al film. The reflection film 30 was formed to cover the leading end 22a and the upper side of both the side surfaces 22b, 22b of the ridge portion 22. However, the reflection film 30 did not cover the lower side of both the side surfaces 22b, 22b of the ridge portion 22 and the base part 21. The coverage rate Rc of both the side surfaces 22b, 22b of the ridge portion 22 obtained by the reflection film 30 was 38%. In this manner, the reflection film 30 of Example 51 roundly covered and wrapped the top of the ridge portion 22 (the leading end 22a and the upper side of both the side surfaces 22b, 22b). The surface of the reflection film 30 had a substantially elliptical shape having such roundness that expanded to the outside, and bulged in the width direction of the ridge portion 22.

As a result, as shown in FIG. 18, the grid 41 according to Example 51 (the structural body in which the ridge portion 22 and the reflection film 30 were combined) had the special tree shape described above. The grid maximum width W_{MAX} of the special tree shape (the width of the grid at a portion where the reflection film 30 bulged most) was more than or equal to the bottom width W_{B} of the ridge portion 22 (the width of the ridge portion 22 at a height position of 20% upward from the bottom of the ridge portion 22). In addition, the sectional shape (the X-Z section) of the valley 42 between the grids 41, 41 adjacent to each other had such a vase-type shape that the entrance on the upper side was narrow and the semi-closed space on the bottom side was wide.

Further, in Example 51, the protection film 40 that covered the entire surfaces of the grid structural body 20 and the reflection film 30 was deposited by the deposition step (S18: see FIG. 19) by the ALD method according to the present embodiment described above. The material of the protection film 40 had a single-layer structure of SiO₂, and a target thickness of the protection film 40 to be deposited was set at 10 nm.

In the film deposition in Example 51, the deposition method for introducing the precursor gas and the oxidant gas into and filling the chamber 300 without the precursor gas and the oxidant gas in the chamber 300 being exhausted through the gas outlet 330 was employed in the precursor gas introducing step and the oxidant gas introducing step (S181, S183: the first and third steps) described above. Accordingly, the thickness Tt of the protection film 40 that covered the leading end part of the grid 41 (that is, the metal portion of the top 30a of the reflection film 30) and the thickness Bt of the protection film 40 that covered the surface of the bottom part of the valley 42 (that is, the resin portion of the grid structural body 20) were able to be made substantially equivalent to each other as will be described later, so that the protection film 40 that satisfied Expression (10) above was able to be deposited (see Table 1).

In the sample of the polarizing element 1 according to Example 51 produced as described above, the thicknesses Bt and Tt of the protection film 40 were measured. On this occasion, Bt1, Bt2, and Tt of each of the plurality of grids 41 of the sample of the polarizing element 1 according to Example 51 were measured, and their average values were obtained.

In more detail, after producing the sample of the polarizing element 1 according to Example 51, a cross-section of the sample was observed using a transmission electron microscope. Then, data on a sectional image of the sample obtained by the observation was captured into a length measuring application to measure each of the thicknesses Bt1, Bt2, and Tt of the protection film 40 as the frontmost layer of the grid 41. On this occasion, the thicknesses Bt1, Bt2, and Tt of the protection film 40 in the three or more grids 41 were measured for each sample. Then, an average value Bt1 (ave.) of a plurality of measured values of Bt1 and an average value Bt2 (ave.) of a plurality of measured values of Bt2 were obtained. Further, an average value of the average value Bt1 (ave.) of the Bt1 and the average value Bt2 (ave.) of the Bt2 was obtained and used as Bt. In addition, an average value Tt (ave.) of a plurality of measured values of Tt was obtained and used as Tt.

### (Example 52)

Next, Example 52 of the present invention will be described. In Example 52, the material of the protection film 40 had a single-layer structure of SiO₂, and the target thickness of the protection film 40 to be deposited was set at 6 nm. The sample of the polarizing element 1 according to Example 52 was produced similarly to Example 51 except these points. In addition, the method for measuring Bt and Tt in Example 52 was also similar to that of Example 51. In Example 52, Tt and Bt were also able to be substantially equivalent thicknesses to each other similarly to Example 51, so that the protection film 40 that satisfied Expression (10) above was able to be deposited.

### (Example 53)

Next, Example 53 of the present invention will be described. In Example 53, the material of the protection film 40 had a laminate structure composed of a first covering layer (a target thickness: 1 nm) made of Al₂O₃ and a second covering layer (a target thickness: 5 nm) made of SiO₂. The sample of the polarizing element 1 according to Example 53 was produced similarly to Example 51 except these points. In addition, the method for measuring Bt and Tt in Example 53 was also similar to that of Example 51. In Example 53, Tt and Bt were also able to be substantially equivalent thicknesses to each other similarly to Example 51, so that the protection film 40 that satisfied Expression (10) above was able to be deposited.

### (Comparative Examples 51 and 52)

Next, Comparative Examples 51 and 52 will be described. Both in Comparative Examples 51 and 52, the material of the protection film 40 had a single-layer structure of SiO₂, and the target thickness of the protection film 40 to be deposited was set at 10 nm. In Comparative Examples 51 and 52, the protection film 40 was described by a conventionally common ALD method different from the special ALD method in Examples 51 to 53 described above. That is, in Comparative Examples 51 and 52, when depositing the protection film 40 by the ALD method, the deposition method by the conventionally common ALD method was used in the precursor gas introducing step and the oxidant gas introducing step (S181, S183: the first and third steps). In detail, in Comparative Examples 51 and 52, a deposition method for introducing the precursor gas and the oxidant gas into the chamber 300 while exhausting the precursor gas and the oxidant gas in the chamber 300 through the gas outlet 330 was used as the conventionally common ALD method. Accordingly, as will be described later, Bt was considerably smaller than Tt in Comparative Examples 51 and 52, so that thickness unevenness occurred between Tt and Bt. Thus, the ratio (Bt/Tt) of Tt to Bt did not satisfy Expression (10) above.

### (Comparative Examples 53 and 54)

Next, Comparative Examples 53 and 54 will be described. Both in Comparative Examples 52 and 54, the material of the protection film 40 had a single-layer structure of SiO₂, and the target thickness of the protection film 40 to be deposited was set at 10 nm and 20 nm, respectively. In Comparative Examples 53 and 54, the protection film 40 was described by a conventionally common vapor deposition method. Accordingly, as will be described later, Bt was considerably smaller than Tt in Comparative Examples 53 and 54, so that thickness unevenness occurred between Tt and Bt. Thus, the ratio (Bt/Tt) of Tt to Bt did not satisfy Expression (10) above.

### (2) Conditions for Dimensions of Respective Portions of Polarizing Element 1

The respective portions of the samples of the polarizing element 1 according to Examples 51 to 53 and Comparative Examples 51 to 54 described above had the following dimensions and shapes.
P: 151 nm
W_{T}: 20 nm
W_{B}: 43 nm
W_{MAX}: 72 nm
H: 265 nm
Hx: 101 nm
Dt: 37 nm
Ds: 27 nm (maximum value)
Rc: 38%
Rr: 62%
Tt: as shown in Table 1 below
Bt: as shown in Table 1 below
θ: 45°
λ: 400 to 700 nm

In addition, Table 1 shows results of measurement of the thicknesses Tt and Bt of the protection film 40 in the samples of the polarizing element 1 according to Examples 51 to 53 and Comparative Examples 51 to 54 produced as described above. Further, Table 1 also shows results of performing (1) a test of optical properties, (2) a 150°C heat tolerance test, and (3) a light tolerance test for Examples 51 to 53 and Comparative Examples 51 to 54.

### [Table 1]

**[Table 1]**

| No. | | Comparative Example 51 | Comparative Example 52 | Comparative Example 53 | Comparative Example 54 | Example 51 | Example 52 | Example 53 |
|---|---|---|---|---|---|---|---|---|
| type of protection film | | SiO₂ (10 nm) single-layer structure | SiO₂ (10 nm) single-layer structure | SiO₂ (10 nm) single-layer structure vapor deposition | SiO₂ (20 nm) single-layer structure vapor deposition | SiO₂ (10 nm) single-layer structure | SiO₂ (6 nm) single-layer structure | Al₂O₃ (1 nm) SiO₂ (5 nm) laminate structure |
| thickness of protection film | thickness Tt [nm] of leading end part of grid | 7 nm | 7 nm | 10.5 nm | 16.8 nm | 9.2 nm | 5.8 nm | 6.5 nm |
| | bottom thickness Bt [nm] of valley between grids | 4.1 nm | 5 nm | 3.3 nm | 4.9 nm | 9.8 nm | 5.7 nm | 5.5 nm |
| | Bt/Tt | 0.59 | 0.71 | 0.31 | 0.29 | 1.07 | 0.98 | 0.85 |
| test of optical properties | Tp_{1B} [%] before deposition | 84.6% | 84.1% | 84.4% | 84.2% | 85.9% | 82.7% | 83.1% |
| | Tp_{1A} [%] after deposition | 84.3% | 83.2% | 84.1% | 83.5% | 85.1% | 82.3% | 82.4% |
| | amount of change ΔTp₁ (= Tp_{1A} - Tp_{1B}) [%] | -0.3% | -0.9% | -0.3% | -0.7% | -0.8% | -0.4% | -0.7% |
| 150°C heat tolerance test | Tp_{2B} before test is started [%] | 84.6% | 80.2% | 83.5% | 82.5% | 83.6% | 85.8% | 83.2% |
| | Tp_{2A} [%] 1000 h after test | 79.4% | 76.9% | 79.6% | 78.7% | 83.5% | 85.6% | 83.1% |
| | amount of change ΔTp₂ (= Tp_{2A} - Tp_{2B}) [%] | -5.2% | -3.3% | -3.9% | -3.8% | -0.1% | -0.2% | -0.1% |
| light tolerance test | Tp_{3B} [%] before test is started | - | 83.3% | - | - | 83.1% | 83.3% | 81.4% |
| | Tp_{3A} [%] 2000 h after test | - | 84.9% | - | - | 83.3% | 83.5% | 82.2% |
| | amount of change ΔTp₃ (= Tp_{3A} - Tp_{3B}) [%] | - | 1.6% | - | - | 0.2% | 0.2% | 0.8% |

### (3) Ratio (Bt/Tt) of Thicknesses of Protection Film 40

As shown in Table 1, the respective values of Bt/Tt in Comparative Examples 51 and 52 were 0.59 and 0.71, which were considerably smaller than 0.85 as a lower limit in Expression (10) above. This means that in Comparative Examples 51 and 52, Bt was considerably smaller than Tt, so that thickness unevenness between Bt and Tt was great. As a result, Comparative Examples 51 and 52 did not satisfy the condition of Expression (10). $Bt / Tt \geq 0.85$

This is considered because in Comparative Examples 51 and 52 in which the protection film 40 was deposited by the conventionally common ALD method, the deposition conditions for the protection film 40 by the ALD method were not appropriate.

That is, in Comparative Examples 51 and 52, the deposition method for introducing the precursor gas and the oxidant gas into the chamber 300 while exhausting the precursor gas and the oxidant gas in the chamber 300 through the gas outlet 330 was used as the conventionally common ALD method described above in the introducing steps (S181, S183: the first and third steps). Therefore, in Comparative Examples 51 and 52, the precursor gas and the oxidant gas were not able to fill and stay in the chamber 300. Consequently, sufficient quantities of the precursor gas and the oxidant gas were not able to be supplied to the bottom part of the valley 42 having the vase-type shape, on the surface of the complicated micro concave-convex structure composed of the grids 41 and the valleys 42 shown in FIG. 18. Thus, the thickness Bt of the protection film 40 deposited on the bottom part of the valley 42 (the resin portion of the grid structural body 20) was considerably smaller than the thickness Tt of the protection film 40 deposited on the leading end part of the grid 41 (the metal portion of the top 30a of the reflection film 30). As a result, it is considered that the ratio (Bt/Tt) of Tt to Bt according to Comparative Examples 51 and 52 did not satisfy the condition of Expression (10) above.

In addition, as shown in Table 1, the respective values of Bt/Tt in Comparative Examples 53 and 54 were 0.31 and 0.29, which were significantly smaller than 0.85 as a lower limit in Expression (10) above. This means that in Comparative Examples 53 and 54, Bt was significantly smaller than Tt, so that thickness unevenness between Bt and Tt was significantly great. As a result, Comparative Examples 53 and 54 did not satisfy the condition of Expression (10).

This is considered because in Comparative Examples 53 and 54, the protection film 40 was described by a conventionally common vapor deposition method. In other word, in Comparative Examples 53 and 54, the extremely thin protection film 40 of about 10 nm or 20 nm was deposited by a vapor deposition method on the surface of a complicated micro concave-convex structure composed of the grids 41 and the valley 42 shown in FIG. 18. Therefore, the protection film 40 having film thickness close to the target thickness was deposited on the leading end part (the metal portion of the top 30a of the reflection film 30) of each of the grids 41, but only the protection film 40 having film thickness less than or equal to the half of the film thickness of the leading end part of the grid 41 was deposited on the valley 42 having a vase-type shape. Further, the protection film 40 was hardly deposited on the sidewall part of the grid 41. It was therefore difficult to uniformly deposit the protection film 40 on the entire grid structural body 20.

Specifically, in Comparative Example 53 (the target thickness of the protection film 40: 10 nm), the protection film 40 of 10 nm was deposited on the leading end part of the grid 41, but only the protection film 40 of 3.3 nm was deposited on the valley 42 between the grids 41. Bt/Tt was 0.31 and significantly low. In addition, in Comparative Example 54 (the target thickness of the protection film 40: 20 nm), the protection film 40 of 16.8 nm was deposited on the leading end part of the grid 41, but only the protection film 40 of 4.9 nm was deposited on the valley 42 between the grids 41. Even in a case where the target thickness was large as in Comparative Example 54, Bt/Tt was 0.29 and significantly low. It was confirmed from these results that the amount of change ΔTp₂ of the Tp properties was large in a heat tolerance test and the heat tolerance was low as described later in each of Comparative Examples 53 and 54.

In contrast to this, in Examples 51 to 53, the value of Bt/Tt was 0.85 to 1.07. This means that in Examples 51 to 53, Bt was equivalent to Tt, so that thickness unevenness between Bt and Tt was very small. As a result, the protection film 40 that satisfied the condition of Expression (10) above was able to be deposited in each of Examples 51 to 53.

This is considered because in Examples 51 to 53 in which the protection film 40 was deposited by the special ALD method according to the present embodiment described above, the deposition conditions for the protection film 40 by the special ALD method were appropriate.

That is, in Examples 51 to 53, the deposition method for introducing the precursor gas and the oxidant gas into and filling the chamber without the precursor gas and the oxidant gas being exhausted from the chamber 300 to the outside was used as the special ALD method in each of the precursor gas introducing step (S181) and the oxidant gas introducing step (S183). Accordingly, the precursor gas and the oxidant gas introduced into the chamber 300 were able to be caused to sufficiently fill and stay in the chamber 300 to sufficiently come into contact with the covering target surface of the grid structural body 20 in the respective introducing steps (S181 and S183). Consequently, the precursor gas and the oxidant gas were sufficiently introduced deep into the valley 42 having the vase-type shape on the surface of the complicated micro concave-convex structure composed of the grids 41 and the valleys 42 shown in FIG. 18, so that the first and second atomic layers having necessary layer thicknesses were able to be appropriately deposited. Thus, the protection film 40 having a target film thickness was able to be deposited substantially uniformly not only on the surface of the leading end part of the grid 41 but also on the surface of the valley 42 having the vase-type shape. Hence, the thickness Tt of the protection film 40 deposited on the leading end part of the grid 41 (the metal portion of the top 30a of the reflection film 30) and the thickness Bt of the protection film 40 deposited on the bottom part of the valley 42 (the resin portion of the grid structural body 20) were able to be made substantially equivalent to each other. As a result, it is considered that the ratio (Bt/Tt) of Tt to Bt according to Examples 51 to 53 satisfied the condition of Expression (10) above.

It was verified from the above results that the protection film 40 having a substantially uniform film thickness over the entire surface of the complicated micro concave-convex structure of the grid structural body 20 was able to be deposited by depositing the protection film 40 by the special ALD method according to the present embodiment described above, so that the protection film 40 that satisfied Expression (10) above was able to be deposited.

### (4) Test of Optical Properties

Next, conditions for and evaluation results of the test of optical properties will be described with reference to Table 1.

As shown in Table 1, in the test of optical properties, an amount of change in optical properties (Tp properties) before and after depositing the protection film 40 was measured for the samples of the polarizing element 1 according to Examples 51 to 53 and Comparative Examples 51 to 54 to evaluate an influence on the optical properties of the polarizing element 1 exerted by the protection film 40.

In the test of optical properties, transmission axis transmittance (Tp) was measured for each of the samples of the polarizing element 1 according to Examples 51 to 53 and Comparative Examples 51 to 54 before and after deposition of the protection film 40. In the measurement of Tp, incident light was incident on the surface of each sample at an incident angle θ = 45° to measure Tp at each wavelength λ of the incident light while changing the wavelength λ in a range of 400 to 700 nm, and an average value of measured values of Tp at the 430 to 680 nm was calculated.

Then, an amount of change ΔTp₁ in Tp before and after deposition of the protection film 40 shown in Table 1 was calculated. The amount of change ΔTp₁ is a difference (ΔTp₁ = Tp_{1A} - Tp_{1B}) between an average value Tp_{1B} of the measured values of Tp before deposition of the protection film 40 and an average value Tp_{1A} of the measured values of Tp after deposition of the protection film 40. A larger absolute value of the amount of change ΔTp₁ means that the optical properties (Tp properties) of the polarizing element 1 significantly changed before and after deposition of the protection film 40. Thus, a smaller absolute value of ΔTp₁ means that desired optical properties (Tp properties) required of the polarizing element 1 were able to be maintained without the optical properties (Tp properties) of the polarizing element 1 decreasing under the influence of deposition of the protection film 40. Thus, from the viewpoint of maintaining the optical properties (Tp properties) of the polarizing element 1, the absolute value of ΔTp₁ preferably is small.

According to the results of the test of optical properties, the absolute value of ΔTp₁ was 0.3 to 0.9% in Comparative Examples 51 and 52 as shown in Table 1, which is smaller than 1.0% which is a reference value indicating that the optical properties of the polarizing element 1 has not degraded. In addition, the absolute value of ΔTp₁ was also 0.3 to 0.7% in Comparative Examples 53 and 54, which is smaller than 1.0% which is the reference value indicating that the optical properties of the polarizing element 1 has not degraded.

In contrast to this, in Examples 51 to 53, the absolute value of ΔTp₁ was 0.4 to 0.7%, which is considerably smaller than the above-described reference value 1.0% and still smaller than in the cases of Comparative Examples 51 and 52. Consequently, it is understood that in Examples 51 to 53, the desired optical properties (Tp properties) were able to be sufficiently maintained even in the case where the protection film 40 was provided, similarly to the case where the protection film 40 was not provided.

It was verified from the above results of the test of optical properties that the desired optical properties (Tp properties) required of the polarizing element 1 were able to be maintained by depositing the protection film 40 that satisfied Expression (10) above on the entire surface of the complicated micro concave-convex structure of the grid structural body 20.

### (5) Heat Tolerance Test

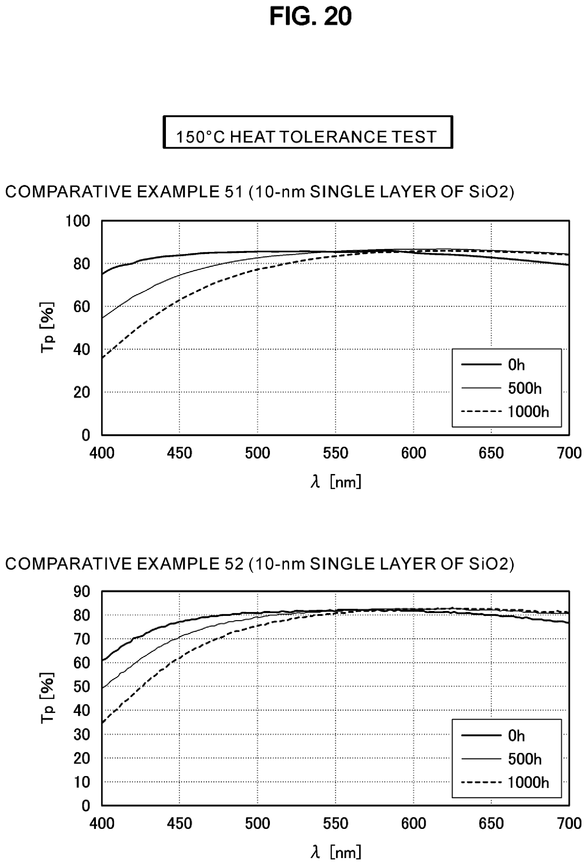

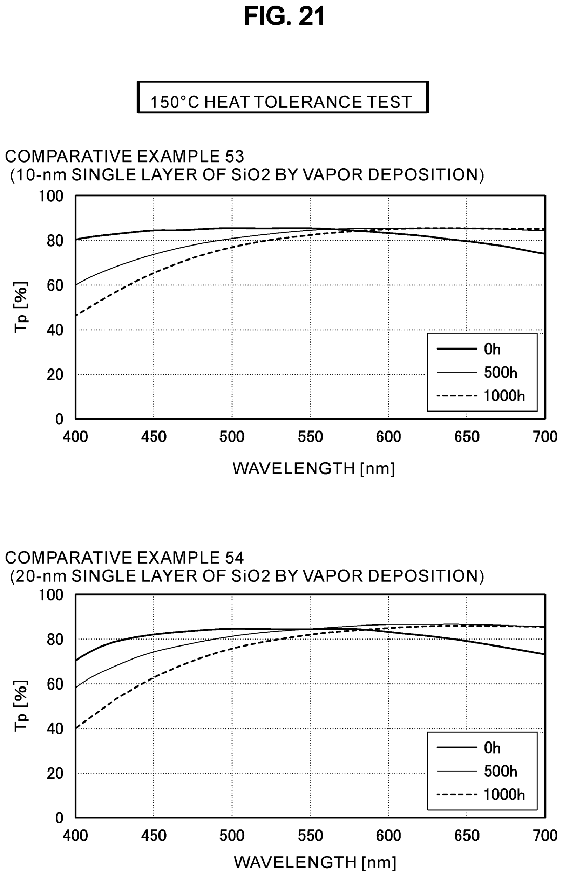

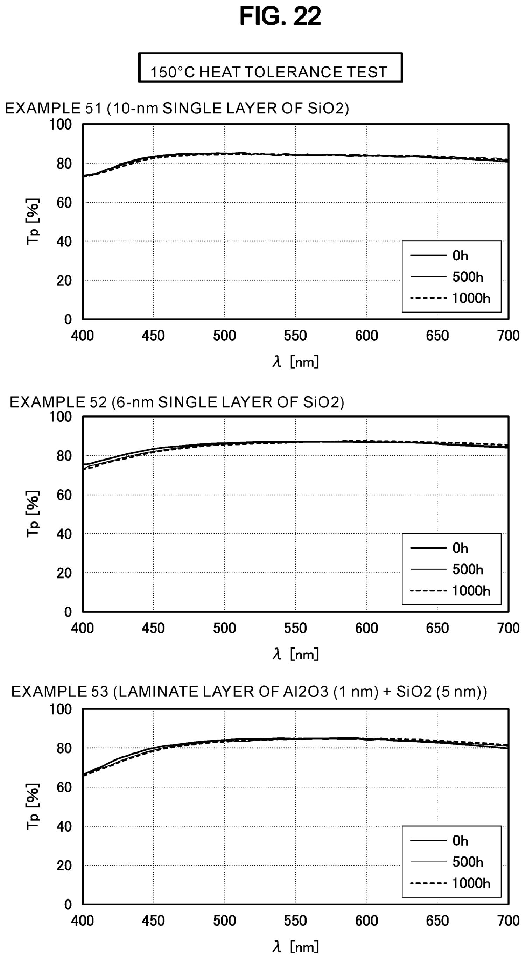

Next, conditions for and evaluation results of the heat tolerance test will be described with reference to Table 1, FIG. 20, and FIG. 22. FIG. 20 includes graphs showing results of the heat tolerance test according to Comparative Examples 51 and 52. FIG. 21 includes graphs showing test results of heat tolerance according to Comparative Examples 53 and 54. FIG. 22 includes graphs showing results of the heat tolerance test according to Examples 51 to 53.

As shown in Table 1, FIG. 20 to FIG. 22, in the heat tolerance test, the samples of the polarizing element 1 according to Examples 51 to 53 and Comparative Examples 51 to 54 were continually heated to 150°C for a predetermined time period t (t = 500 hours, 1000 hours). Then, an amount of change ΔTp₂ in Tp before and after heating was measured to evaluate an influence on the heat tolerance of the polarizing element 1 exerted by the protection film 40 based on a magnitude of the amount of change ΔTp₂ (that is, a degree of degradation in Tp).

In the heat tolerance test, Tp before and after heating (before and after the start of the test) was measured for the samples of the polarizing element 1 according to Examples 51 to 53 and Comparative Examples 51 to 54. In the measurement of Tp, incident light was incident on the surface of each sample at an incident angle θ = 45° to measure Tp at each wavelength λ of the incident light while changing the wavelength λ in the range of 400 to 700 nm, and an average value of measured values of Tp at the 430 to 680 nm was calculated.

Then, the amount of change ΔTp₂ in Tp before and after heating shown in Table 1 was calculated. The amount of change ΔTp₂ is a difference (ΔTp₂ = Tp_{2A} - Tp_{2B}) between an average value Tp_{2B} of measured values of Tp before heating the sample (before the start of the test) and an average value Tp_{2A} of measured values of Tp after heating the sample at 150°C for 1000 hours (1000 hours after the start of the test). A larger absolute value of the amount of change ΔTp₂ means that the Tp properties of the sample degraded due to long-time heating, so that the heat tolerance decreased. Thus, a smaller absolute value of ΔTp₂ means that the heat tolerance of the polarizing element 1 was high without the optical properties (Tp properties) of the polarizing element 1 decreasing under the influence of heat. Thus, from the viewpoint of increasing the heat tolerance of the polarizing element 1 (reliability with respect to heat), the absolute value of ΔTp₂ preferably is small.

According to the results of the heat tolerance test, Tp decreased as the heating time period was longer in Comparative Examples 51 and 52 as shown in FIG. 20, and in particular, a decrease in Tp in a low wavelength band of less than or equal to 500 nm was significant. As a result, in Comparative Examples 51 and 52, the absolute value of ΔTp₂ was 3.3 to 5.2% as shown in Table 1, which is significantly larger than 3.0% which is a reference value indicating that the heat tolerance of the polarizing element 1 has not degraded. Thus, it is understood that in Comparative Examples 51 and 52, the Tp properties of the polarizing element 1 degraded due to the long-time, high-temperature heating, resulting in low heat tolerance of the polarizing element 1. This is considered because in Comparative Examples 51 and 52, the resin portion was not sufficiently protected by the thin protection film 40 because of small Bt/Tt and the thin thickness Bt of the protection film 40 that covered the resin portion of the grid structural body 20, resulting in degradation of the resin portion due to heat.

In addition, Tp also decreased as the heating time period was longer in Comparative Examples 53 and 54 as shown in FIG. 21, and in particular, a decrease in Tp in a low wavelength band of less than or equal to 500 nm was significant. As a result, in Comparative Examples 53 and 54, the absolute value of ΔTp₂ was 3.8 to 3.9% as shown in Table 1, which is significantly larger than 3.0% which is the reference value indicating that the heat tolerance of the polarizing element 1 has not degraded. Thus, it is understood that in Comparative Examples 53 and 54, the Tp properties of the polarizing element 1 also degraded due to the long-time, high-temperature heating, resulting in low heat tolerance of the polarizing element 1. This is considered because in Comparative Examples 53 and 54, the resin portion was not sufficiently protected by the thin protection film 40 because of small Bt/Tt and the thin thickness Bt of the protection film 40 that covered the resin portion of the grid structural body 20, resulting in degradation of the resin portion due to heat.

In contrast to this, there is little difference among Examples 51 to 53 in Tp properties depending on the length of the heating time period as shown in FIG. 22, and the Tp properties showed substantially the same tendency irrespective of the length of the heating time period. As a result, as shown in Table 1, the absolute value of ΔTp₂ was 0.1 to 0.2%, which is significantly smaller than the above-described reference value 3.0%. Consequently, it is understood that in Examples 51 to 53, the Tp properties of the polarizing element 1 did not degrade even under long-time, high-temperature heating, resulting in high heat tolerance of the polarizing element 1. This is considered because in Examples 51 to 53, the resin portion was appropriately protected by the thick protection film 40, so that the resin portion did not degrade due to heat since Bt/Tt satisfied Expression (10) and since the thickness Bt of the protection film 40 that covered the resin portion of the grid structural body 20 was sufficiently thick.

It was verified from the above results of the heat tolerance test that the heat tolerance of the polarizing element 1 was able to be improved by depositing the protection film 40 that satisfied Expression (10) above on the entire surface of the complicated micro concave-convex structure of the grid structural body 20.

### (6) Light Tolerance Test

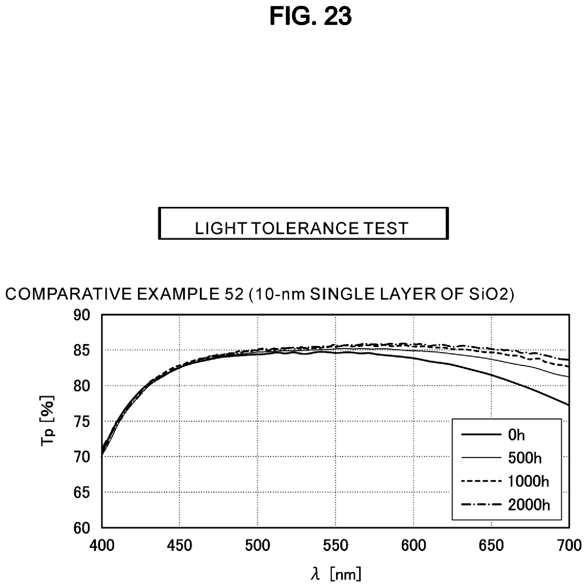

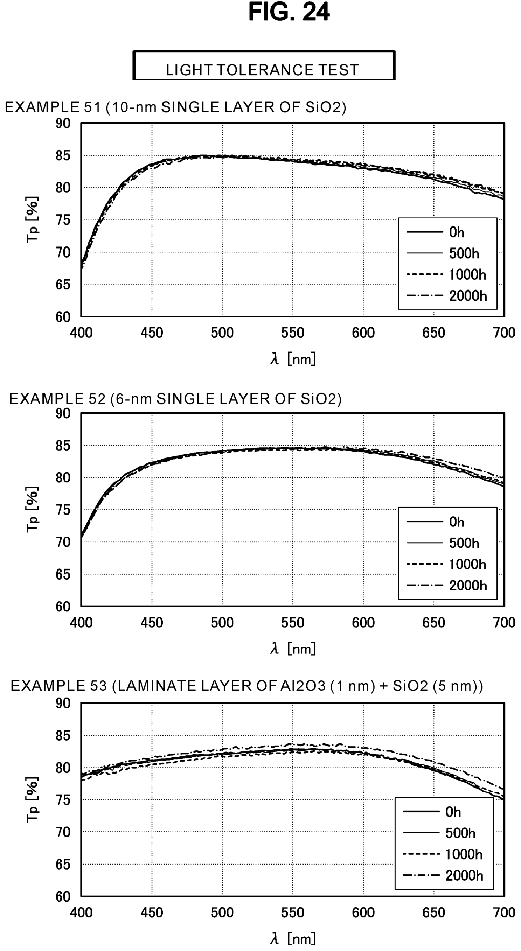

Next, conditions for and evaluation results of the light tolerance test will be described with reference to Table 1, FIG. 23, and FIG. 24. FIG. 23 is a graph showing a result of the light tolerance test according to Comparative Example 52. FIG. 24 includes graphs showing results of the light tolerance test according to Examples 51 to 53.

As shown in Table 1, FIG. 23, and FIG. 24, in the light tolerance test, surfaces of the samples of the polarizing element 1 according to Examples 51 to 53 and Comparative Example 52 were continually irradiated with light for the test in a perpendicular direction for a predetermined time period t (t = 500 hours, 1000 hours, 2000 hours). Light from a laser light source was incident on a dichroic mirror, for example, and blue light in visible light transmitted through the mirror was used as the light for the test. Then, an amount of change ΔTp₃ in Tp before and after irradiation of light was measured, and an influence on the light tolerance of the polarizing element 1 exerted by the protection film 40 was evaluated based on a magnitude of the amount of change ΔTp₃ (that is, a degree of degradation in Tp).

In the light tolerance test, Tp before and after irradiation of light (before and after the start of the test) was measured for the samples of the polarizing element 1 according to Examples 51 to 53 and Comparative Example 52. In the measurement of Tp, incident light was incident on the surface of each sample at an incident angle θ = 45° to measure Tp at each wavelength λ of the incident light while changing the wavelength λ in the range of 400 to 700 nm, and an average value of measured values of Tp at the 430 to 680 nm was calculated.

Then, the amount of change ΔTp₃ in Tp before and after irradiation of light shown in Table 1 was calculated. The amount of change ΔTp₃ is a difference (ΔTp₃ = Tp_{3A} - Tp_{3B}) between an average value Tp_{3B} of measured values of Tp before the sample was irradiated with light (before the start of the test) and an average value Tp_{3A} of measured values of Tp after the sample was irradiated with light for 2000 hours (2000 hours after the start of the test). A larger absolute value of the amount of change ΔTp₃ means that the Tp properties of the sample degraded due to long-time irradiation of light, resulting in low light tolerance. Thus, a smaller absolute value of ΔTp₃ means that the light tolerance of the polarizing element 1 was high without the optical properties (Tp properties) of the polarizing element 1 decreasing under the influence of light. Thus, the absolute value of ΔTp₃ preferably is small from the viewpoint of increasing the light tolerance (reliability with respect to light) of the polarizing element 1.

According to the results of the light tolerance test, in Comparative Example 52, Tp rose as a time period of irradiation of light was longer as shown in FIG. 23, and in particular, the rise in Tp in a high wavelength band of more than or equal to 600 nm was significant. As a result, as shown in Table 1, the absolute value of ΔTp₃ was 1.6% in Comparative Example 52, which is significantly larger than 1.0% which is a reference value indicating that the light tolerance of the polarizing element 1 has not degraded. Thus, it is understood that in Comparative Example 52, the Tp properties of the polarizing element 1 degraded due to irradiation of light, resulting in low light tolerance of the polarizing element 1. This is considered because in Comparative Example 52, the resin portion was not able to be sufficiently protected by the thin protection film 40 because of small Bt/Tt and the thin thickness Bt of the protection film 40 that covered the resin portion of the grid structural body 20, resulting in degradation of the resin portion due to light (for example, discolorment to yellow).

In contrast to this, there is little difference among Examples 51 to 53 in Tp properties depending on the length of the time period of irradiation of light as shown in FIG. 24, and the Tp properties showed substantially the same tendency irrespective of the length of the time period of irradiation of light. As a result, as shown in Table 1, the absolute value of ΔTp₃ was 0.2 to 0.8%, which is significantly smaller than the above-described reference value 1.0%. Consequently, it is understood that in Examples 51 to 53, the Tp properties of the polarizing element 1 did not degrade even under long-time irradiation of light, resulting in high light tolerance of the polarizing element 1. This is considered because in Examples 51 to 53, the resin portion was appropriately protected by the thick protection film 40, so that the resin portion did not degrade due to light since Bt/Tt satisfied Expression (10) and since the thickness Bt of the protection film 40 that covered the resin portion of the grid structural body 20 was sufficiently thick.

It was verified from the above results of the light tolerance test that the light tolerance of the polarizing element 1 was able to be improved by depositing the protection film 40 that satisfied Expression (10) above on the entire surface of the complicated micro concave-convex structure of the grid structural body 20.

### <2. Result of Inspection of Reinforcement Function of Reinforcement Film for Ridge Portion>

Next, as the examples of the present invention, samples of the wire grid polarizing element 1 including the reinforcement film 51 according to the present embodiment described above were produced, and tests for evaluating optical properties of the samples were performed. In addition, for comparison with examples (examples in which the ridge portion 22 was covered with the reinforcement film 51) of the present invention, samples (samples in which the ridge portion 22 was not covered with the reinforcement film 51) of the wire grid polarizing element 1 according to comparative examples were also produced and similarly tested and evaluated. Note that hereinafter, reference characters representing the constituent members (such as the substrate 10, the grid structural body 20, the base part 21, the ridge portion 22, the reflection film 30, the protection film 40, and the reinforcement film 51) of the polarizing element 1 and notations representing various dimensions of these constituent members are denoted by identical reference characters and notations both in the examples and the comparative examples for convenience of description.

Note that notations representing various dimensions and the like of the polarizing element 1 which will be used in the following description are described below.
P: pitch of the ridge portions 22
W_{T}: top width of the ridge portion 22 (ridge portion top width)
W_{M}: width of the ridge portion 22 at the central position in the height direction (ridge portion central width)
W_{B}: bottom width of the ridge portion 22 (grid bottom width)
W_{MAX}: maximum width of the reflection film 30 covering and wrapping the ridge portion 22 (grid maximum width)
H: height of the ridge portion 22
Hx: height of a portion of the side surfaces 22b of the ridge portion 22 covered by the reflection film 30
Dt: thickness of the reflection film 30 covering the leading end 22a of the ridge portion 22 (leading end thickness of the reflection film 30)
Ds: thickness of the reflection film 30 covering the side surfaces 22b of the ridge portion 22 (side surface thickness of the reflection film 30)
Rc: coverage rate of the side surfaces 22b of the ridge portion 22 obtained by the reflection film 30
Rr: open rate of the side surfaces 22b of the ridge portion 22 obtained by the reflection film 30
Tt: thickness of the protection film 40 that covers the top 30a of the reflection film 30 covering and wrapping the ridge portion 22 (that is, the thickness of the protection film 40 at the leading end part of the grid 41)
Bt: thickness of the protection film 40 that covers the lower side of both the side surfaces 22b, 22b of the ridge portion 22 and the surface of the base part 21 (that is, the thickness of the protection film 40 at the bottom part of the valley 42)
Rt: thickness of the reinforcement film 51
θ: incident angle of incident light
λ: wavelength of incident light

### (1) Method for Producing Samples of Polarizing Element 1

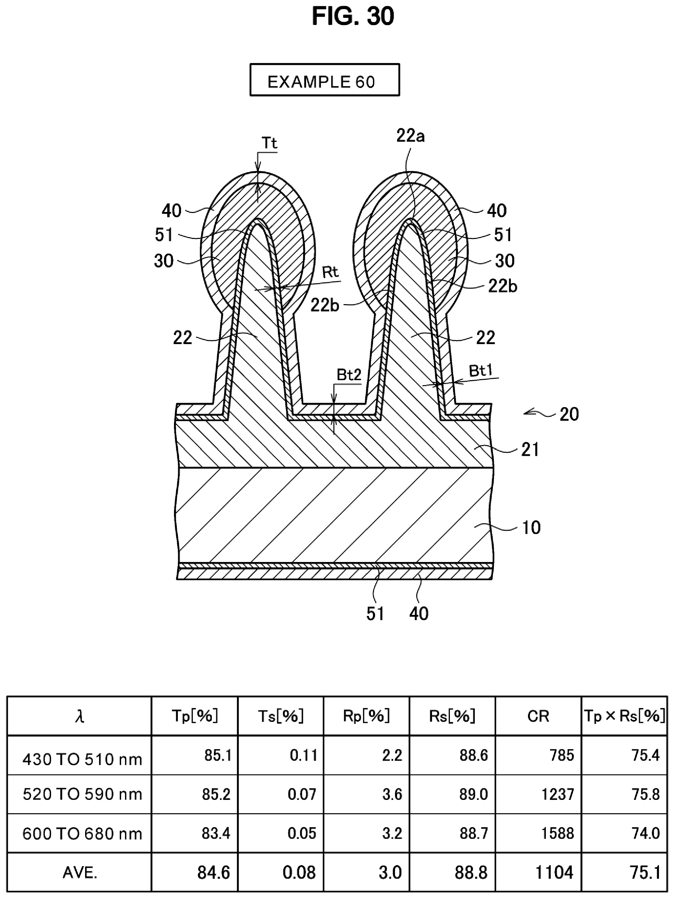

In Example 60 of the present invention and Comparative Example 60, samples of the polarizing element 1 were produced by a method described later. The sample of the polarizing element 1 according to Example 60 was provided with the reinforcement film 51 that covered the entirety of the ridge portion 22 and the base part 21 of the grid structural body 20 as shown in FIG. 30. In contrast to this, the sample of the polarizing element 1 according to Comparative Example 60 was not provided with the reinforcement film 51 as shown in FIG. 31.

### (Example 60)

First, Example 60 of the present invention will be described with reference to FIG. 30.

The sample of the polarizing element 1 according to Example 60 was produced by the method for manufacturing the polarizing element 1 according to the present embodiment described above. The polarizing element 1 according to Example 60 included the substrate 10 made of glass and the grid structural body 20 made of an ultraviolet curable resin (an acrylic resin) as shown in FIG. 30. The grid structural body 20 had the base part 21 provided along the surface of the substrate 10 and the plurality of ridge portions 22 formed to protrude from the base part 21 in a grid shape. The sectional shape of the ridge portion 22 was a rounded convex shape and an upward narrowing shape that narrowed toward the leading end 22a of the ridge portion 22.

In Example 60, first, the grid structural body material forming step (S10), the nano-imprinting step (S12), and the grid structural body forming step (S14) of the above-described method for manufacturing the polarizing element 1 according to the present embodiment were executed to create the grid structural body 20 shown in FIG. 30.

Then, the above-described step (S15) of depositing the reinforcement film was executed to deposit the reinforcement film 51 continuously covered the entire surface (the leading end 22a and both the side surfaces 22b, 22b of the ridge portion 22 and the surface of the base part 21) of the grid structural body 20 using the above-described special ALD method (see FIG. 19). The material of the reinforcement film 51 had a single-layer structure of SiO₂, and a target thickness of the reinforcement film 51 was set at 2 nm.

When the reinforcement film 51 was deposited by the special ALD method (S15), the deposition method for introducing the precursor gas and the oxidant gas into and filling the chamber 300 without the precursor gas and the oxidant gas in the chamber 300 being exhausted through the gas outlet 330 was employed in the precursor gas introducing step and the oxidant gas introducing step (S151, S153: the first and third steps) described above. This enabled the thickness of the reinforcement film 51 covering the leading end 22a of the ridge portion 22 of the grid structural body 20 and the thickness of the reinforcement film 51 covering the upper surface of the base part 21 to be made the substantially equivalent thickness Rt (about 2 nm).

Then, the above-described reflection film forming step (S16) was executed to form the reflection film 30 (functional film) that covered and wrapped the leading end part of the ridge portion 22 from above the reinforcement film 51 that covered the grid structural body 20. On this occasion, Al that was the material of the reflection film 30 was vapor-deposited on the upper part of ridge portion 22 from above at an oblique angle using a vapor deposition method to deposit the reflection film 30 while alternating between left and right.

The reflection film 30 deposited in this manner was made of an Al film. As shown in FIG. 30, the reflection film 30 was formed to cover the upper part (the leading end 22a and the upper side of both the side surfaces 22b, 22b of the ridge portion 22) of the ridge portion 22 with the reinforcement film 51 in between. However, the reflection film 30 did not cover the lower side of both the side surfaces 22b, 22b of the ridge portion 22 and the base part 21. The coverage rate Rc of both the side surfaces 22b, 22b of the ridge portion 22 obtained by the reflection film 30 was 38%. In this manner, the reflection film 30 of Example 60 roundly covered and wrapped the top of the ridge portion 22 (the leading end 22a and the upper side of both the side surfaces 22b, 22b). The surface of the reflection film 30 had a substantially elliptical shape having such roundness that expanded to the outside, and bulged in the width direction of the ridge portion 22.

As a result, as shown in FIG. 30, the grid 41 according to Example 60 (the structural body in which the ridge portion 22, the reinforcement film 51, and the reflection film 30 were combined) had the special tree shape described above. The grid maximum width W_{MAX} of the special tree shape (the width of the grid at a portion where the reflection film 30 bulged most) was more than or equal to the bottom width W_{B} of the ridge portion 22 (the width of the ridge portion 22 at a height position of 20% upward from the bottom of the ridge portion 22). In addition, the sectional shape (the X-Z section) of the valley 42 between the grids 41, 41 adjacent to each other had such a vase-type shape that the entrance on the upper side was narrow and the semi-closed space on the bottom side was wide.

Thereafter, the above-described step (S18) of depositing the protection film was executed to deposit the protection film 40 that covered the entire surfaces of the reinforcement film 51 and the reflection film 30 of the grid structural body 20 using the above-described special ALD method (see FIG. 19). The material of the protection film 40 had a single-layer structure of SiO₂, and a target thickness of the protection film 40 to be deposited was set at 7 nm.

When the protection film 40 was deposited by the special ALD method (S18), the deposition method for introducing the precursor gas and the oxidant gas into and filling the chamber 300 without the precursor gas and the oxidant gas in the chamber 300 being exhausted through the gas outlet 330 was employed in the precursor gas introducing step and the oxidant gas introducing step (S181, S183: the first and third steps) described above. Thus, the thickness Tt of the protection film 40 that covers the leading end part of the grid 41 (that is, the metal portion of the top 30a of the reflection film 30) and the thickness Bt of the protection film 40 that covers the surface of the bottom part of the valley 42 (that is, the resin portion of the grid structural body 20) can be made the substantially equivalent thickness (about 7 nm), so that the protection film 40 that satisfies Expression (10) above can be deposited.

### (Comparative Example 60)

Next, Comparative Example 60 will be described. As shown in FIG. 31, the sample of the polarizing element 1 according to Comparative Example 60 was not provided with the reinforcement film 51 as in Example 60. In Comparative Example 60, except that the step (S15) of depositing the reinforcement film was not executed, the sample of the polarizing element 1 according to Comparative Example 60 was produced by a method (S10, S12, S14, S16, and S18) similar to that of Example 60.

### (2) Conditions for Dimensions of Respective Portions of Polarizing Element 1

The respective portions of the samples of the polarizing element 1 according to Example 60 and Comparative Example 60 produced by the above-described method had the following dimensions and shapes.
P: 151 nm
W_{T}: 20 nm
W_{B}: 43 nm
W_{MAX}: 72 nm
H: 265 nm
Hx: 101 nm
Dt: 37 nm
Ds: 27 nm (maximum value)
Rc: 38%
Rr: 62%
Tt: 7 nm
Bt: 7 nm
Rt: 2 nm
θ: 45°
λ: 430 to 680 nm

### (3) Result of Observation for Presence or Absence of Inclination of Ridge Portion 22

For the samples of the polarizing element 1 according to Example 60 and Comparative Example 60 produced by the above-described method, cross-sections of the samples were observed using a transmission electron microscope (TEM). FIG. 30 and FIG. 31 show schematic diagrams of the sectional shapes of the samples of the polarizing element 1 observed using TEM images thereof.

As shown in FIG. 30, in the sample according to Example 60, the ridge portions 22 of the grid structural body 20 were not inclined, but extended straight upward. The ridge portions 22 each succeeded in maintaining a desired grid shape. In contrast to this, in the sample according to Comparative Example 60, the ridge portions 22 of the grid structural body 20 were inclined to the left by about 10°. In particular, the upper parts of the ridge portions 22 on which the reflection film 30 was vapor-deposited were each inclined and curved to the left and failed to maintain a desired grid shape.

A possible reason why the ridge portions 22 in Comparative Example 60 are inclined is that the ridge portions 22 are not reinforced by the reinforcement film 51 in Comparative Example 60 and a high-temperature Al material is vapor-deposited on the ridge portions 22 when the reflection film 30 (Al film) is deposited, which softens the resin of each of the ridge portions 22. In addition, the above-described method for the polarizing element 1 vapor-deposits an Al material from above the ridge portion 22 at an oblique angle through vapor deposition processes performed a plurality of times while alternating between left and right (see FIG. 27). It is therefore considered that stress caused by heat shrinkage undergone when an Al film vapor-deposited on one of the sides of the ridge portion 22 decreases in temperature is accumulated around the Al film and the accumulated stress inclines the softened ridge portion 22 to the side on which the Al film is vapor-deposited (see FIG. 28).

It was verified from the above results that the ridge portions 22 were each covered with the reinforcement film 51 as in Example 60 to enable the ridge portion 22 to be increased in rigidity and heat tolerance. This made it possible to suitably restrain the ridge portion 22 from being inclined by the deposition of the reflection film 30.

### (4) Test of Optical Properties

Next, conditions for and evaluation results of the test of optical properties will be described with reference to FIG. 30 and FIG. 31. The tables in FIG. 30 and FIG. 31 show results obtained by performing tests of optical properties for the samples of the polarizing element 1 according to Example 60 and Comparative Example 60.

In the tests of optical properties, for the samples of the polarizing element 1 according to Example 60 and Comparative Example 60, the optical properties (the Tp properties, the Ts properties, the Rp properties, the Rs properties, the contrast, and the Tp × Rs properties) were measured to evaluate the influence of the reinforcement film 51 on the optical properties of the polarizing element 1.

In the tests of optical properties, for the samples of the polarizing element 1 according to Example 60 and Comparative Example 60, the wavelength λ of oblique incident light was changed for simulation to calculate the transmission axis transmittance (Tp), the transmission axis reflectance (Ts), the reflection axis transmittance (Rp), the reflection axis reflectance (Rs), the contrast (CR), and the Tp × Rs. The incident angle θ of oblique incident light was set at +45°. Note that the wavelength λ of oblique incident light was changed in the range of 430 to 680 nm, and average values of a plurality of values of Tp, Ts, Rp, and Rs calculated for incident light having each of the wavelengths λ were used as values of Tp, Rs, Ts, and Rp. In addition, the contrast (CR) of transmitted light was also calculated by dividing Tp by Ts (CR = Tp/Ts).

A relationship between each of Tp, Rs, Ts, Rp, CR, and Tp ' Rs calculated as described above and λ is shown in the tables of FIG. 30 and FIG. 31.

According to the results of the tests of optical properties, as shown in FIG. 30 and FIG. 31, the Ts properties, the Rp properties, and the Rs properties are substantially equivalent between Example 60 and Comparative Example 60. In contrast to this, it is understood that Example 60 is more excellent than Comparative Example 60 in the Tp properties, the Tp × Rs properties, and the CR. Specifically, the Tp average value of Example 60 is 84.6% and is higher than the Tp average value (80.9%) of Comparative Example 60 by no less than 4.7%. Therefore, the Tp × Rs average value of Example 60 is 75.1% and is higher than the Tp × Rs average value (71%) of Comparative Example 60 by no less than 4.1%. In addition, the CR average value of Example 60 is 1104 and is significantly higher than the CR average value (570) of Comparative Example 60 by 1.9 times or more.

In Comparative Example 60, as shown in FIG. 30, the ridge portions 22 are inclined and the reflection film 30 supported by each of the inclined ridge portions 22 thus prevents oblique incident light from passing therethrough. This decreases the transmissivity (Tp) for the oblique incident light. In contrast to this, in Example 60, as shown in FIG. 31, the ridge portions 22 are not inclined, but extend straight. The reflection film 30 does not therefore shields oblique incident light unnecessarily. Example 60 is thus considered to enable the transmissivity (Tp) for oblique incident light and the contrast (CR = Tp/Ts) to be considerably improved in comparison with Comparative Example 60.

As described above, the ridge portions 22 are not inclined in Example 60 and Example 60 is thus much more excellent in the Tp properties, the Tp × Rs properties, and the CR than Comparative Example 60 in which the ridge portions 22 are inclined. In particular, in a case where the polarizing element 1 is used as a polarizing beam splitter (PBS), it is very beneficial for the polarizing beam splitter to enable the high Tp × Rs properties and the high CR to be both achieved. In addition, even in a case where the CR is evaluated alone, Example 60 achieves the significantly more excellent CR than that of Comparative Example 60 and enables the CR performance of the polarizing beam splitter to be considerably improved, which is thus beneficial.

It was verified from the above results of the tests of optical properties that the reinforcement film 51 was provided between each of the ridge portions 22 and the reflection film 30 to provide rigidity and heat tolerance to the ridge portion 22 as in Example 60, thereby enabling the ridge portion 22 to be restrained from being inclined. This offered the optical properties (the high Tp, the excellent Tp × Rs properties, and the high contrast CR for transmitted light) required of the polarizing element 1.

The preferred embodiment(s) of the present invention has/have been described above in detail with reference to the accompanying drawings, whilst the present invention is not limited to the above examples. A person skilled in the art may find various alterations and modifications within the scope of the appended claims, and it should be understood that they will naturally come under the technical scope of the present invention.

### Industrial Applicability

According to the present embodiment, a polarizing element which has favorable polarization properties, avoids deterioration in heat dissipation and cost in manufacturing, and is excellent in transmissivity for light at wide-range incident angles as well as a method for manufacturing the polarizing element can be provided. In addition, according to the present embodiment, a projection display device excellent in polarization properties and heat tolerance as well as a vehicle including the projection display device can be provided. In addition, according to the present embodiment, a light curing acrylic resin for imprinting in which an uncured resin composition has a low viscosity and a resin composition after curing is excellent in heat tolerance can be provided.

### Reference Signs List

- 1: wire grid polarizing element
- 2: light source
- 3: display element
- 4: reflector
- 5: display surface
- 6: cover portion
- 10: substrate
- 20: grid structural body
- 21: base part
- 22: ridge portion
- 22b: side surface
- 23: grid structural body material
- 24: concavity
- 29: constricted portion
- 30: reflection film
- 30a: top
- 40: protection film
- 41: grid
- 42: valley
- 50: heat dissipation member
- 51: reinforcement film
- 60: master
- 61: master base material
- 62: master metal film
- 63: convexity
- 64: release film coating
- 65: concave groove
- 70: resist mask
- 80: metal film
- 100: head-up display device
- 200: projection display device
- 210: light source
- 220: PS converter
- 230: polarizing beam splitter
- 240: reflection-type liquid crystal display element
- 250: lens
- 260: light absorber
- 300: chamber
- 310: gas inlet
- 320: jig
- 330: gas outlet
- 340: vacuum pump
- TS: thickness of substrate
- TB: thickness of base part
- P: pitch of ridge portions
- H: height of ridge portions
- Hx: range of height in which reflection film covers side surfaces of ridge portion
- Ds: side surface thickness of reflection film
- Dt: leading end thickness of reflection film
- W_{MAX}: maximum width of reflection film covering and wrapping ridge portion (grid maximum width)
- W_{B}: bottom width of ridge portion (grid bottom width)
- W_{T}: top width of ridge portion (ridge portion top width)
- W_{A}: effective grid width
- W_{G}: gap width
- Rc: coverage rate
- Tt: thickness of protection film that covers top of reflection film covering and wrapping ridge portion
- Bt: thickness of protection film that covers lower side of both side surfaces of ridge portion and surface of base part
- Rt: thickness of reinforcement film

## Claims

1. A wire grid polarizing element comprising:
a substrate made of an inorganic material;
a grid structural body made of an organic material and including a base part provided on the substrate and a plurality of ridge portions protruding from the base part, the base part and the ridge portions being integrally formed;
a functional film made of a metal material and covering part of each of the ridge portions; and
a reinforcement film made of an inorganic oxide and interposed between part of the ridge portion covered with the functional film and the functional film, the reinforcement film reinforcing the ridge portion, wherein
the ridge portions each have an upward narrowing shape that narrows in width with distance from the base part,
the reinforcement film covers and wraps at least a leading end and an upper side of both side surfaces of the ridge portion,
the functional film covers and wraps a leading end and an upper side of both side surfaces of each of the ridge portions with the reinforcement film in between, and does not cover a lower side of both the side surfaces of each of the ridge portions and the base part, and
when a coverage rate (Rc) of the side surfaces of each of the ridge portions obtained by the functional film is a proportion of a height (Hx) of a portion of the side surfaces of each of the ridge portions that is covered by the functional film to a height (H) of the ridge portions, the coverage rate (Rc) is more than or equal to 30% and less than or equal to 70%.

2. The wire grid polarizing element according to claim 1, wherein the reinforcement film has a thickness of 0.5 nm or more and 0.8 nm or less.

3. The wire grid polarizing element according to claim 1, further comprising a protection film that covers surfaces of the grid structural body and the functional film, wherein
the protection film continuously covers the surface of the functional film, the lower side of both the side surfaces of each of the ridge portions, and a surface of the base part, and
Expression (10) below is satisfied: $Bt / Tt \geq 0.85$
where Tt is a thickness of the protection film that covers a top of the functional film that covers and wraps each of the ridge portions, and Bt is a thickness of the protection film that covers the lower side of both the side surfaces of each of the ridge portions and the surface of the base part.

4. The wire grid polarizing element according to claim 3, wherein Expression (11) below is satisfied: $0.85 \leq Bt / Tt \leq 1.07$

5. The wire grid polarizing element according to claim 3, wherein Expression (12) below is satisfied: $1.00 < Bt / Tt \leq 1.07$

6. The wire grid polarizing element according to claim 3, wherein the protection film has a single-layer structure made of SiO₂.

7. The wire grid polarizing element according to claim 3, wherein the protection film has a laminate structure including a first covering layer made of Al₂O₃ and a second covering layer made of SiO₂.

8. The wire grid polarizing element according to claim 1, wherein a sectional shape of an entire protruding structural body composed of the ridge portions and the functional film has a constricted portion at a position immediately under a lower end of the functional film covering and wrapping each of the ridge portions, the constricted portion having a narrow width in a width direction of the entire protruding structural body.

9. A method for manufacturing the wire grid polarizing element according to any one of claims 1 to 8, comprising the steps of:
forming a grid structural body material made of the organic material on the substrate made of the inorganic material;
subjecting the grid structural body material to nano-imprinting to form the grid structural body including the base part provided on the substrate and the plurality of ridge portions protruding from the base part, the base part and the ridge portions being integrally formed;
forming a reinforcement film using an inorganic oxide, the reinforcement film covering at least part of each of the ridge portions; and
forming a functional film using a metal material, the functional film covering the part of the ridge portion with the reinforcement film in between, wherein
in the step of forming the grid structural body, the ridge portions each having the upward narrowing shape that narrows in width with distance from the base part are formed, and
in the step of forming the functional film, the reinforcement film covers and wraps at least a leading end and an upper side of both side surfaces of the ridge portion, the functional film covers and wraps the leading end and the upper side of both the side surfaces of the ridge portion with the reinforcement film in between, and does not cover the lower side of both the side surfaces of each of the ridge portions and the base part, and when the coverage rate (Rc) of the side surfaces of each of the ridge portions obtained by the functional film is the proportion of the height (Hx) of the portion of the side surfaces of each of the ridge portions that is covered by the functional film to the height (H) of the ridge portions, the coverage rate (Rc) is more than or equal to 30% and less than or equal to 70%.

10. The method for manufacturing the wire grid polarizing element according to claim 9, wherein, in the step of forming the reinforcement film, the reinforcement film is deposited by a vapor deposition method such that the reinforcement film covers and wraps the leading end and the upper side of both the side surfaces of the ridge portion.

11. The method for manufacturing the wire grid polarizing element according to claim 9, wherein, in the step of forming the reinforcement film, the reinforcement film is deposited by an ALD method such that the reinforcement film continuously covers the leading end and both the side surfaces of the ridge portion and a surface of the base part.

12. The method for manufacturing the wire grid polarizing element according to claim 9, further comprising a step of depositing a protection film on surfaces of the grid structural body and the functional film, wherein
in the step of depositing the protection film, the protection film is deposited by an ALD method such that the protection film continuously covers the surface of the functional film, a lower side of both the side surfaces of the ridge portion, and a surface of the base part.

13. The method for manufacturing the wire grid polarizing element according to claim 12, wherein
the step of depositing the protection film includes
a first step of introducing precursor gas into a chamber in which the grid structural body covered by the functional film is arranged,
a second step of introducing inert gas into the chamber to exhaust excess precursor gas to an outside of the chamber,
a third step of introducing oxidant gas into the chamber, and
a fourth step of introducing the inert gas into the chamber to exhaust excess oxidant gas to the outside of the chamber,
in the first step, the precursor gas is introduced into and fills the chamber without the precursor gas being exhausted to the outside of the chamber, and
in the third step, the oxidant gas is introduced into and fills the chamber without the oxidant gas being exhausted to the outside of the chamber.

14. A projection display device comprising:
a light source;
a polarizing beam splitter arranged such that incident light from the light source is incident at an incident angle of more than or equal to 30° and less than or equal to 60°, and configured to split the incident light into first polarized light and second polarized light;
a reflection-type liquid crystal display element arranged such that the first polarized light reflected by the polarizing beam splitter or the second polarized light transmitted through the polarizing beam splitter is incident, and configured to reflect and modulate the first polarized light or the second polarized light having been incident; and
a lens arranged such that the first polarized light or the second polarized light reflected and modulated by the reflection-type liquid crystal display element is incident through the polarizing beam splitter, wherein
the polarizing beam splitter is implemented by the wire grid polarizing element according to any one of claims 1 to 8.

15. A vehicle comprising the projection display device according to claim 14.
